(19) Europäisches Patentamt
European Patent Office
Office européen des brevets

(11) **EP 4 528 558 A1**

(12) **EUROPÄISCHE PATENTANMELDUNG**

(43) Veröffentlichungstag:
26.03.2025 Patentblatt 2025/13

(21) Anmeldenummer: 24201386.0

(22) Anmeldetag: **19.09.2024**

(51) Internationale Patentklassifikation (IPC):
*G06F 21/10* (2013.01)   *G06F 21/12* (2013.01)
*H04L 9/32* (2006.01)   *G06F 7/58* (2006.01)
*H04L 9/06* (2006.01)   *H04L 9/08* (2006.01)
*H10F 39/00* (2025.01)

(52) Gemeinsame Patentklassifikation (CPC):
**G06F 7/588; G06F 21/10; G06F 21/109;
G06F 21/121; H04L 9/0662; H04L 9/0852;
H04L 9/0869; H04L 9/3247; H04L 9/3263;
H04L 9/3278; H04L 63/0823; H10F 30/225;
H10F 39/8033; H10F 39/807; H10F 71/121;**
(Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **20.09.2023 DE 102023125543
26.09.2023 LU 505175
26.09.2023 DE 102023126115
26.09.2023 DE 102023126167
26.09.2023 EP 23199793**

(71) Anmelder: **Elmos Semiconductor SE
44227 Dortmund (DE)**

(72) Erfinder:
• **ROTTER, Thomas
91077 Neunkirchen am Brand (DE)**
• **KÖLBEL, Julia
44137 Dortmund (DE)**

(74) Vertreter: **Gulde & Partner
Patent- und Rechtsanwaltskanzlei mbB
Berliner Freiheit 2
10785 Berlin (DE)**

(54) **VORRICHTUNGEN ZUR BEREITSTELLUNG VON ELEKTRONISCHEN POSTANHÄNGEN**

(57)    Die vorliegende Erfindung bezieht sich auf die Übertragung von elektronischer Post ("E-Mail") über Computernetze und insbesondere auf Vorrichtungen zur Bereitstellung von elektronischen Postanhängen durch Referenzieren anstatt durch eine originäre Übertragung.

Gegenstand der vorliegenden Erfindung ist eine Vorrichtung zum Übertragen von E-Mail-Anhängen über ein Netzwerk an mindestens einen Empfänger des Netzwerks, wobei ein Sender der Vorrichtung umfasst: ein Mittel zum Speichern eines Anhangs in einer für das Netzwerk sichtbaren und für den Absender nahegelegenen Speichereinrichtung, wobei der Anhang eine eindeutige Netzwerkadresse hat; ein einen integrierten Quantenzufallsgenerator umfassendes Mittel zum Verschlüsseln des Anhangs vor dem Speichern des Anhangs in der Speichereinrichtung und zum Bereitstellen eines Verschlüsselungscodes zum Entschlüsseln des Anhangs; ein Mittel zum Erzeugen einer Anhangsreferenz, die die Netzwerkadresse des Anhangs enthält, und zum Anhängen der Anhangsreferenz an eine E-Mail-Nachricht; und ein Mittel zum Übertragen der E-Mail-Nachricht, der Anhangsreferenz und des Verschlüsselungscodes an den mindestens einen Empfänger, wobei der mindestens eine Empfänger darüber informiert wird, dass der Anhang an die E-Mail-Nachricht angehängt ist, wobei ein Empfänger des mindestens einen Empfängers über die Anhangsreferenz den Anhang aus der Speichereinrichtung abrufen kann, wenn der Empfänger sich für den Zugriff auf den Anhang entscheidet.

FIG. 4

(52) Gemeinsame Patentklassifikation (CPC): (Forts.)
H04L 2209/84

**Beschreibung**

**Gegenstand der Erfindung**

Die vorliegende Erfindung bezieht sich auf die Übertragung von elektronischer Post ("E-Mail") über Computernetze und insbesondere auf Vorrichtungen zur Bereitstellung von elektronischen Postanhängen durch Referenzieren anstatt durch eine originäre Übertragung.

**Technologischer Hintergrund**

In Computernetzsystemen wie lokalen Netzen ("LANs"), Weitverkehrsnetzen ("WANs") und dem Internet und dem darauf aufbauenden World Wide Web ("WWW") werden häufig Systeme für elektronische Post ("E-Mail") eingesetzt, um die Kommunikation zwischen zwei Benutzern des Netzes zu erleichtern. Jeder Benutzer hat eine eindeutige Adresse, die zur Weiterleitung und Identifizierung bei der Übermittlung einer E-Mail-Nachricht von einem Benutzer (dem "Absender") an einen anderen Benutzer (den "Empfänger") im Netz verwendet werden kann.

Oft enthält eine E-Mail-Nachricht nur eine relativ kleine Menge an Text oder anderen Daten. Eine oder mehrere zusätzliche Datendateien, die so genannten "Anhänge", werden jedoch häufig an die E-Mail-Nachricht angehängt. So kann beispielsweise eine Textverarbeitungs- oder Grafikdatei, die mit den Anzeigefunktionen des E-Mail-Systems nicht kompatibel ist oder die zu groß ist, um vom E-Mail-Anwendungsprogramm angezeigt zu werden, vom Absender an den Empfänger übermittelt werden, indem sie an eine E-Mail-Nachricht angehängt wird. In der E-Mail-Nachricht können z. B. die beigefügten Anhänge vorgestellt oder erläutert werden. Auf diese Weise erhält der Empfänger die E-Mail-Nachricht und alle angehängten Dateien, die getrennt von der E-Mail-Nachricht geöffnet, abgerufen oder verwendet werden können.

Solche Anhänge werden in der Regel über das Übertragungsmedium des Netzes originär übertragen, was bedeutet, dass die tatsächlichen Daten eines bestimmten Anhangs zusammen mit der primären E-Mail-Nachricht übertragen werden (oder ein Anhang kann unabhängig, ohne begleitende E-Mail-Nachricht, übertragen werden). Ein Problem bei den derzeitigen Methoden zur Übertragung von E-Mail-Anhängen besteht darin, dass aufgrund der potenziell beträchtlichen Größe solcher Anhänge eine große Bandbreite für die Netzkommunikation verbraucht werden kann, um solche Anhänge zu übertragen. Außerdem können kostspielige Netzressourcen erforderlich sein, da solche Nachrichten und Anhänge auf dem Weg vom Absender zum Empfänger mehrere Knoten oder Elemente des Netzes durchlaufen. Darüber hinaus können die Speichereinrichtungen lokaler Knoten des Netzes, die häufig solche eingehenden E-Mail-Nachrichten und die dazugehörigen Anhänge speichern, durch viele eingehende E-Mail-Nachrichten überlastet werden.

E-Mail-Systeme nach dem Stand der Technik weisen daher mehrere Nachteile auf. Es besteht daher ein Bedarf an Verfahren und Systemen zur Bereitstellung von Anhängen für E-Mail-Nachrichten, die die Prozessor- und Kommunikationsmedienbandbreite und den Speicherplatz in einem Computerkommunikationsnetz effizienter nutzen.

Die DE 10 2022 125 568 A1 betrifft eine Datenverarbeitungsvorrichtung umfassend eine integrierte Schaltung, die einen Datenprozessor und einen nichtflüchtigen Speicher enthält, der mindestens einen Sicherheitscode speichert. Ein erster Speicher außerhalb der integrierten Schaltung speichert Daten, wobei die Daten in einem ersten Format kryptographisch geschützt sind. Ein zweiter Speicher außerhalb des integrierten Schaltkreises dient zur Speicherung von Daten. Die Vorrichtung ist so eingerichtet, dass sie Daten vom ersten Speicher über die integrierte Schaltung zum zweiten Speicher überträgt, damit der Datenprozessor vom zweiten Speicher aus darauf zugreifen kann. Die integrierte Schaltung ist so angeordnet, dass sie während der Übertragung die aus dem ersten Speicher gelesenen Daten mit Hilfe eines in dem nichtflüchtigen Speicher gespeicherten Sicherheitscodes validiert. Wenn die Daten validiert sind, wird ein kryptografischer Schutz in einem zweiten Format auf die validierten Daten angewendet, wobei ein in dem nichtflüchtigen Speicher gespeicherter Sicherheitscode verwendet wird. Die geschützten Daten werden in dem zweiten Speicher in dem zweiten Format gespeichert. Die Offenbarung richtet sich auf einen Rechner, der zumindest einen quantenprozessbasierenden mikrointegierbaren Generator für echte Zufallszahlen als Zufallszahlengenerator mit hoher Zufallsbitausgangsrate insbesondere für die Verschlüsselung umfasst. Der DE 10 2022 125 569 A1, DE 10 2022 125 570 , DE 10 2022 125 571 A1A1, DE 10 2022 125 572 A1, DE 10 2022 125 573 A1 sowie der unveröffentlichten Anmeldung mit der Anmeldenummer DE 10 2022 125 574.3 können ebenfalls entsprechende Vorrichtungen entnommen werden.

**Beschreibung der Erfindung**

Es werden ein Verfahren, eine Vorrichtung und ein Speichermedium zur Übertragung von E-Mail-Anhängen von einem Absender eines Netzwerks an mindestens einen Empfänger des Netzwerks bereitgestellt. Gemäß einer bevorzugten Ausführungsform der Erfindung wird ein Anhang in einer für das Netzwerk sichtbaren und für den Absender nahegelegenen (d. h. relativ lokalen) Speichereinrichtung gespeichert, wobei der Anhang eine eindeutige Netzwerkadresse hat. Es wird eine Anhangsreferenz erzeugt, die die Netzwerkadresse des Anhangs enthält. Die Anhangsreferenz wird vom Absender an den mindestens einen Empfänger übertragen.

Ein erster Aspekt der vorliegenden Erfindung betrifft eine Vorrichtung zum Übertragen von E-Mail-Anhängen über ein Netzwerk an mindestens einen Empfänger des Netzwerks, wobei ein Sender der Vorrichtung umfasst: ein Mittel zum Speichern eines Anhangs in einer für das Netzwerk sichtbaren und für den Absender nahegelegenen Speichereinrichtung, wobei der Anhang eine eindeutige Netzwerkadresse hat; ein Mittel zum Verschlüsseln des Anhangs vor dem Speichern des Anhangs in der Speichereinrichtung und zum Bereitstellen eines Verschlüsselungscodes zum Entschlüsseln des Anhangs; ein Mittel zum Erzeugen einer Anhangsreferenz, die die Netzwerkadresse des Anhangs enthält, und zum Anhängen der Anhangsreferenz an eine E-Mail-Nachricht; und ein Mittel zum Übertragen der E-Mail-Nachricht, der Anhangsreferenz und des Verschlüsselungscodes an den mindestens einen Empfänger, wobei der mindestens eine Empfänger darüber informiert wird, dass der Anhang an die E-Mail-Nachricht angehängt ist, wobei ein Empfänger des mindestens einen Empfängers über die Anhangsreferenz den Anhang aus der Speichereinrichtung abrufen kann, wenn der Empfänger sich für den Zugriff auf den Anhang entscheidet. Das Mittel zum Verschlüsseln umfasst einen Quantenzufallsgenerator. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Unter einer nahegelegenen (bzw. relative lokalen) Speichereinrichtung wird eine geeignete Speichereinrichtung verstanden, welche sich entweder direkt bei Absender der Nachricht, eine Netzwerkspeicher innerhalb seines LANs, ein Cloudspeicher oder eine andere für den Absender aus Sicht eines für die Übertragung erforderlichen Netzwerkabstandes mit geringem Aufwand zu erreichende Speichereinrichtung. Im Allgemeine kann jedoch jede sich nicht unmittelbar beim Empfänger oder bei einem dem Empfänger zuordenbaren Servers oder Postservers abweichende Speichereinrichtung als dem Sender "nahegelegene" Speichereinrichtung angesehen werden. Bevorzugt ist allerdings, dass der effektive Netzabstand zwischen Speichereinrichtung und Sender möglichst minimal gehalten werden soll.

Das Netzwerk kann das Internet, ein Local-Area-Network, LAN, ein Weitverkehrsnetz, WAN, oder eine Vielzahl von miteinander verbundenen WANs und LANs umfassen.

Die Anlagenreferenz kann einen einheitlichen Ressourcenlokalisator, URL, umfassen.

Die Speichereinrichtung kann einen Netzwerkserver umfassen.

Der mindestens eine Empfänger kann ein Mittel zum Abrufen des Anhangs über die Anhangsreferenz umfassen, wobei der Empfänger den Anhang aus der Speichereinrichtung abrufen kann, wenn der Empfänger sich für den Zugriff auf den Anhang entscheidet.

Der Empfänger kann weiterhin ein Mittel zum Entschlüsseln des Anhangs beim Empfänger unter Verwendung des Verschlüsselungscodes umfassen.

Die Vorrichtung kann weiterhin ein Mittel zum Komprimieren des Anhangs umfassen.

Der mindestens eine Empfänger kann ein Mittel zum Dekomprimieren des Anhangs beim Empfänger umfassen.

Bei der Vorrichtung kann der mindestens eine Empfänger eine Vielzahl von Empfängern umfassen; und eine Bitgröße der Anhangsreferenz kann klein im Vergleich zum Anhang sein.

Ein anderer Aspekt der vorliegenden Erfindung betrifft ein Speichermedium, auf dem eine Vielzahl von Anweisungen zum Übertragen von E-Mail-Anhängen von einem Absender eines Netzwerks an mindestens einen Empfänger des Netzwerks mittels einer erfindungsgemäßen Vorrichtung gespeichert ist, wobei die Vielzahl von Anweisungen, wenn sie von einem Prozessor ausgeführt werden, den Prozessor veranlassen, die folgenden Schritte auszuführen: Speichern eines Anhangs in einem für das Netzwerk sichtbaren und für den Absender nahegelegenen Speichereinrichtung, wobei der Anhang eine eindeutige Netzwerkadresse hat; Verschlüsseln des Anhangs vor dem Speichern des Anhangs in der Speichereinrichtung und Bereitstellen eines Verschlüsselungscodes zum Entschlüsseln des Anhangs; Erzeugen einer Anhangsreferenz, die die Netzwerkadresse des Anhangs enthält, und Anhängen der Anhangsreferenz an eine E-Mail-Nachricht; und Übertragen der E-Mail-Nachricht, der Anhangsreferenz und des Verschlüsselungscodes an den mindestens einen Empfänger, wobei der mindestens eine Empfänger darüber informiert wird, dass der Anhang an die E-Mail-Nachricht angehängt ist, wobei ein Empfänger des mindestens einen Empfängers den über die Anhangsreferenz den Anhang aus der Speichereinrichtung abrufen kann, wenn der Empfänger sich für den Zugriff auf den Anhang entscheidet.

Die Anlagenreferenz kann einen einheitlichen Ressourcenlokalisator, URL, umfassten.

Die Vielzahl von Befehlen kann den Prozessor veranlasst, den weiteren Schritt auszuführen: Entschlüsseln des Anhangs beim Empfänger unter Verwendung des Verschlüsselungscodes.

Das Speichern des Anhangs kann ferner eine Kompression des Anhangs umfassen.

Die Vielzahl von Anweisungen kann den Prozessor veranlassen, den weiteren Schritt auszuführen: Dekomprimieren des Anhangs beim Empfänger.

Bei dem Speichermedium kann der mindestens eine Empfänger eine Vielzahl von Empfängern umfasst; und eine Bitgröße der Anhangsreferenz kann klein im Vergleich zum Anhang sein.

Insbesondere umfasst die vorliegende Erfindung ein Verschlüsseln des Anhangs vor einem Speichern des Anhangs in der Speichereinrichtung und ein Bereitstellen eines Verschlüsselungsschlüssels zum Entschlüsseln des Anhangs; und kann ein Übertragen der Anhangsreferenz und des Verschlüsselungscodes an den mindestens einen Empfänger umfassen, wobei das Mittel zum Verschlüsseln ein Quantenzufallsgenerator umfasst. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Ein noch weiterer Aspekt der vorliegenden Erfindung betrifft eine Vorrichtung zum Übertragen von E-Mail-Anhängen über ein Netzwerk an mindestens einen Empfänger des Netzwerks, wobei die Vorrichtung ein Absender des Netzwerks ist, die Folgendes umfassen kann: (a) ein Mittel zum Speichern eines Anhangs in einem für das Netz sichtbaren und für den Absender relativ lokalen Speichermittel, wobei der Anhang eine eindeutige Netzadresse hat, wobei ferner ein Mittel zum Verschlüsseln des Anhangs vor dem Speichern des Anhangs in dem Speichermittel und zum Bereitstellen eines Verschlüsselungsschlüssels zum Entschlüsseln des Anhangs umfasst ist; (b) ein Mittel zum Erzeugen einer Anhangsreferenz, die die Netzadresse des Anhangs enthält, und zum Anhängen der Anhangsreferenz an eine primäre E-Mail-Nachricht; und ein (c) Mittel zum Übertragen der primären E-Mail-Nachricht und der Anhangsreferenz an den mindestens einen Empfänger, wobei der mindestens eine Empfänger darüber informiert wird, dass der Anhang an die primäre E-Mail-Nachricht angehängt ist, wobei ferner ein Mittel zum Übertragen des Anhangsverweises und des Verschlüsselungscodes an den mindestens einen Empfänger umfasst ist; wobei ein Empfänger des mindestens einen Empfängers umfasst: (1) ein transparentes Abrufmittel zum transparenten Abrufen des Anhangs, das Mittel zum Abrufen des Anhangs aus den Speichermittel umfasst, wenn der Empfänger sich für den Zugriff auf den Anhang entscheidet, wobei das Mittel zum Verschlüsseln mindestens einen Quantenzufallsgenerator umfasst. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Vorzugsweise ist das Netz das Internet. Vorzugsweise umfasst der Verweis auf die Anlage einen einheitlichen Ressourcenlokalisator (e.g., einen Uniform Resource Locator ("URL")). Vorzugsweise ist das World Wide Web eine Netzwerkanwendung, die im Internet läuft, um die Kommunikation zwischen den Knoten des Internets zu ermöglichen. Vorzugsweise umfasst das Netzwerk ein Local-Area-Network (LAN). Vorzugsweise umfasst das Netzwerk eine Vielzahl von miteinander verbundenen WANs und LANs. Vorzugsweise sind der Absender und der Empfänger Knoten des Netzes, die von sendenden bzw. empfangenden Benutzern verwendet werden. Vorzugsweise umfasst die Speichereinrichtung einen Netzwerkserver. Vorzugsweise sind der Absender über ein erstes LAN mit dem Netzwerk verbunden und der Empfänger über ein zweites LAN mit dem Netzwerk verbunden.

Vorzugsweise kann der Empfänger weiterhin umfassen: (2) Mittel zum Entschlüsseln des Anhangs unter Verwendung des Verschlüsselungscodes. Vorzugsweise umfasst Mittel (a) ferner ein Mittel zum Komprimieren des Anhangs vor der Speicherung des Anhangs in den Speichermitteln. Vorzugsweise kann der Empfänger weiterhin umfassen: (3) ein Mittel zum Dekomprimieren des Anhangs. Vorzugsweise kann Mittel (a) ferner ein Mittel zum Komprimieren des Anhangs vor der Speicherung des Anhangs in dem Speichermittel umfassen. Vorzugsweise kann der Empfänger weiterhin ein Mittel zum Dekomprimieren des Anhangs umfassen. Vorzugsweise kann der mindestens eine Empfänger eine Vielzahl von Empfängern umfassen; die Anhangsreferenz kann im Vergleich zum Anhang relativ klein sein; und die Anlage kann eine Datei mit Daten sein.

Ein noch weiterer Aspekt der vorliegenden Erfindung betrifft ein Speichermedium, auf dem eine Vielzahl von Anweisungen zum Übertragen von E-Mail-Anhängen von einem Absender eines Netzwerks an mindestens einen Empfänger des Netzwerks gespeichert ist, wobei die Vielzahl von Anweisungen, wenn sie von einem Prozessor ausgeführt werden, den Prozessor veranlassen kann, die folgenden Schritte auszuführen: (a) Speichern eines Anhangs in einem für das Netz sichtbaren und für den Absender relativ lokalen Speichermittel, wobei der Anhang eine eindeutige Netzadresse hat, und Verschlüsseln des Anhangs vor dem Speichern des Anhangs in dem Speichermittel und des Bereitstellens eines Verschlüsselungsschlüssels zum Entschlüsseln des Anhangs; (b) Erzeugen einer Anhangsreferenz, der die Netzadresse des Anhangs enthält, und Anhängen des Anhangsverweises an eine primäre E-Mail-Nachricht; (c) Übertragen der primären E-Mail-Nachricht, des Verschlüsselungscodes und der Anhangsreferenz vom Absender an den mindestens einen Empfänger, wobei der mindestens eine Empfänger darüber informiert wird, dass der Anhang an die primäre E-Mail-Nachricht angehängt ist; und (d) Bereitstellung eines transparenten Abrufs des Anhangs für den mindestens einen Empfänger durch Abruf des Anhangs aus dem Speichermittel mit einem Empfänger des mindestens einen Empfängers, wenn der Empfänger auf den Anhang zugreifen möchte, wobei das Verschlüsseln mit mindestens einen Quantenzufallsgenerator erfolgt. Das Verfahren nutzt vorzugsweise einen Quantenzufallsgenerator zur Bereitstellung von Zufallszahlen für eine Verschlüsselung.

Vorzugsweise ist das Netz das Internet. Vorzugsweise umfasst der Verweis auf die Anlage einen einheitlichen Ressourcenlokalisator (e.g., einen Uniform Resource Locator ("URL")). Vorzugsweise ist das World Wide Web eine Netzwerkanwendung, die im Internet läuft, um die Kommunikation zwischen den Knoten des Internets zu ermöglichen. Vorzugsweise umfasst das Netzwerk ein Local-Area-Network (LAN). Vorzugsweise umfasst das Netzwerk eine Vielzahl von miteinander verbundenen WANs und LANs. Vorzugsweise sind der Absender und der Empfänger Knoten des Netzes, die von sendenden bzw. empfangenden Benutzern verwendet werden. Vorzugsweise umfasst das Speichermittel einen Netzwerkserver. Vorzugsweise sind der Absender über ein erstes LAN mit dem Netzwerk verbunden und der Empfänger über ein zweites LAN mit dem Netzwerk verbunden.

Vorzugsweise veranlasst die Vielzahl von Befehlen den Prozessor, den weiteren Schritt auszuführen: (e) Entschlüsselung des Anhangs beim Empfänger unter Verwendung des Verschlüsselungscodes. Vorzugsweise umfasst Schritt (a) ferner den Schritt des Komprimieren des Anhangs vor dem speichern des Anhangs in dem Speichermittel; wobei die Vielzahl von Anweisungen den Prozessor veranlassen können, den weiteren Schritt auszuführen: (f) Dekomprimieren des Anhangs beim Empfänger. Vorzugsweise kann der mindestens eine Empfänger eine Vielzahl von Empfängern umfassen; die Anhangsreferenz kann im Vergleich zum Anhang relativ klein sein; und die Anlage kann eine Datei mit Daten sein.

Ein Quantenzufallsgenerator kann eine Entropiequelle umfassen. Es ist bevorzugt, dass die Entropiequelle monolithisch in einem Halbleitersubstrat mit einer Oberfläche ausgeführt ist. Die Entropiequelle kann eine Photonenquelle umfassen, die dazu eingerichtet ist, bei einer entsprechenden Bestromung Photonen (bevorzugt Einzelphotonen) auszusenden. Weiterhin kann die Entropiequelle einen Einzelphotonendetektor umfassen, der dazu eingerichtet ist, die Photonen der Photonenquelle zu detektieren und ein Entropiequellenausgangssignal zu erzeugen. Vorzugsweise ist die Photonenquelle zwischen der Oberfläche eines Halbleitersubstrats in dem die Photonenquelle ausgebildet ist (es kann sich um das gleiche Halbleitersubstrat handeln, in dem die Entropiequelle monolithisch ausgebildet ist) und dem Einzelphotonendetektor angeordnet. Alternativ kann auch der Einzelphotonendetektor zwischen der Oberfläche eines Halbleitersubstrats in dem die Photonenquelle ausgebildet ist (es kann sich um das gleiche Halbleitersubstrat handeln, in dem die Entropiequelle monolithisch ausgebildet ist) und der Einzelphotonenquelle angeordnet sein.

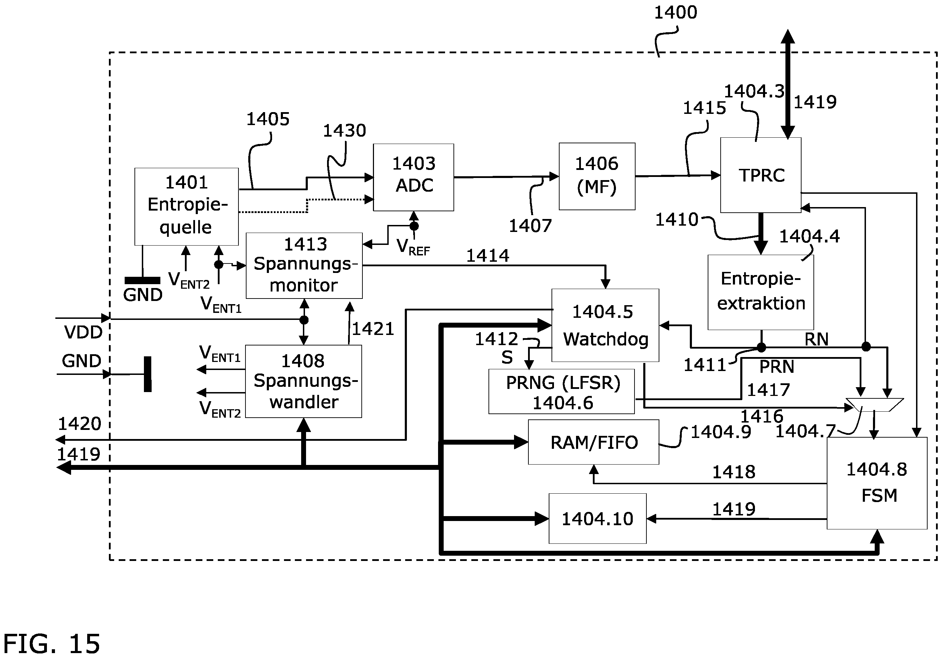

Besonders bevorzugt ist, dass die Photonenquelle und der Einzelphotonendetektor vertikal übereinander angeordnet sind, d. h. beispielsweise wenn diese als hybride Strukturen mit jeweils eigenen Substraten miteinander kombiniert werden oder bei einer monolithisch in einem Halbleitersubstrat integrierten Entropiequelle eine vertikale Stapelstruktur ausbilden. Der Quantenzufallsgenerator kann ein Mittel zur Erzeugung einer oder mehrerer Quantenzufallszahlen in Abhängigkeit von dem Entropiequellenausgangssignal aufweisen. Eine Quantenzufallszahl kann beispielsweise ein einzelnes Quantenzufallsbit oder ein Quantenzufallsdatenwort aus mehreren Quantenzufallsbits umfassen. Insbesondere kann es sich bei dem Quantenzufallsgenerator um einen beispielhaft in FIG. 15 beschriebenen Quantenzufallsgenerator handeln, wobei die Entropiequelle vorzugsweise wie obenstehend beschrieben ausgebildet ist.

Insbesondere kann der Quantenzufallsgenerator als Entropiequelle daher bevorzugt einen integrierten Quanten-Zufallszahlengenerator (engl. "integrated Quantum Random Number Generator, iQRNG"), insbesondere einen monolithisch in einem gemeinsamen Halbleitersubstrat im gleichen Materialsystem skalierbar und vollständig integriert aufgebauten photonischen QRNG bestehend aus einer Photonenquelle und einen unmittelbar an die Quelle gekoppelten Detektor für einzelne Photonen in einer besonders kompakten und angriffssicheren Ausführung auf einer für vielfältige Anwendungen offenen Technologieplattform zur Halbleiterstrukturierung umfassen.

Hierbei gilt es zu beachten, dass in vielen Bereichen von Wissenschaft und Technik zufällige Ereignisse und die Bestimmung von Wahrscheinlichkeiten eine besonders herausragende Rolle spielen. Beispielsweise basieren Monte-Carlo-Simulationen und sichere Verschlüsselungsverfahren in hohem Maße auf der Bereitstellung von Zufallszahlen. Man unterscheidet dabei im Allgemeinen zwischen den sogenannten Pseudo-Zufallszahlen und echten Zufallszahlen. Während erstere mittels deterministischer Formeln durch Pseudo-Zufallszahlengeneratoren (engl. "Pseudo Random Number Generators, PRNGs") erzeugt werden, also nicht absolut zufällig sind, basieren nicht-deterministische Zufallszahlengeneratoren zur Bereitstellung echter Zufallszahlen (engl. "True Random Number Generators, TRNGs") im Allgemeinen auf real unvorhersehbaren Prozessen wie einem thermischen oder atmosphärischen Rauschen und nicht auf künstlich generierten Mustern deterministischer Algorithmen. Allerdings können auch die Ergebnisse von solchen auf äußeren Parametern basierenden nicht-deterministischen Zufallszahlengeneratoren abhängig vom zugrundeliegenden Zufallselement aufgrund von schwachen Korrelationen beispielsweise noch immer geringfügig zu höheren oder zu geraden Zahlen tendieren und somit zumindest eine teilweise Vorhersagbarkeit der so generierten Zufallszahlen ermöglichen.

Die sogenannten Quanten-Zufallszahlengeneratoren (engl. "Quantum Random Number Generators, QRNGs") als spezielle Untergruppe der TRNGs hingegen basieren auf fundamentalen Quantenprozessen zur Zufallszahlenerzeugung und sind daher zumindest theoretisch nicht an andere die Statistik beeinflussende äußere Faktoren und Effekte gekoppelt. Quanten-Zufallszahlengeneratoren stellen somit die z. Z. beste verfügbare Quelle für echte Zufallszahlen dar. Aktuelle digitale QNRGs können dabei Entropieraten (d. h. eine Folge von Bitwerten mit maximaler Zufälligkeit bzw. Entropie) von bis zu einigen hundert Mbps liefern. Die erzeugten Zufallszahlen werden sowohl bei klassischen Verschlüsselungsverfahren als auch bei einer Vielzahl von Verfahren der Quanteninformatik und Quantenkryptografie zur Gewährleistung eines sicheren Schlüsselaustauschs benötigt (engl. "Secure/Quantum Key Distribution, SKD/QKD"). Zur Generierung sicherer Schlüssel in der Kryptographie sind daher nicht-manipulierbare und schnelle QRNGs unbedingt erforderlich.

Eine Vielzahl von QRNGs wird aufgrund von deren besonders einfacher Realisierbarkeit mit Hilfe zufälliger Eigenschaften von Photonen als photonische QRNGs realisiert. Ein einfaches Konzept für die Erzeugung von Zufallszahlen ist dabei das Verhalten eines Photons, dass an einen semitransparenten Strahlteiler unabhängig von anderen Photonen entweder reflektiert oder transmittiert wird. Ein anderer Ansatz ist die Nutzung der zufälligen Ankunftszeiten von

Photonen auf einem Einzelphotendetektor. Dieser auf einer intrinsischen, prinzipiell nicht deterministisch berechenbaren Photonenstatistik der Photonen einer zugehörigen Photonenquelle basierende Verteilungseffekt kann ebenfalls zur Bereitstellung echter Zufallszahlen mit hoher Entropie genutzt werden. Die Ankunftszeiten von Photonen auf einem Einzelphotendetektor weisen im Allgemeinen eine Exponential-Verteilung auf.

Typischerweise wird in einem Einzelphotendetektor (engl. "Single Photon Detector, SPD") zunächst durch ein einzelnes einfallendes Photon ein Detektorimpuls erzeugt, welcher in einem Zeit-zu-Digital-Wandler (engl. "Time-to-Digital Converter, TDC") in eine mit einem Zeitstempel versehene digitale Repräsentation des Detektionsereignisses umgewandelt und entsprechend weiterverarbeitet werden kann. Als Photonen- bzw. Entropiequelle in QRNGs werden dabei zumeist stark auf das Einzelphotonenniveau abgeschwächte Laserdioden (engl. "Laser Diodes, LD") oder einfache lichtemittierende Dioden (engl. "Light Emitting Diodes, LEDs") genutzt, deren emittierte Photonen anschließend über einen oder mehrere besonders empfindliche Einzelphotonen-Lawinendioden (engl. "Single Photon Avalanche Diodes, SPADs") als SPD zeitlich aufgelöst erfasst werden können. Solche zeitgleich nur einzelne oder nur einige wenige Photonen bereitstellende Photonenquellen werden im Rahmen dieser Anmeldung auch als Einzelphotonenquellen (engl. "Single Photon Source, SPS") bezeichnet. Es muss sich dabei jedoch nicht um echte Einzelphotonenemitter, beispielsweise auf Basis eines einzelnen isolierten Zweiniveausystems, handeln.

Bei SPADs handelt es sich um eine Art Photodetektor ähnlich den Photodioden (engl. "Photo Diodes, PDs") und Avalanche-Photodioden (engl. "Avalanche Photo Diodes, APDs"), jedoch mit einer demgegenüber deutlich erhöhten Sensitivität. Die SPADs können digital - auch innerhalb einer gemeinsamen integrierten Schaltung - ausgelesen und ausgewertet werden. Wird eine solche integrierte Detektorschaltung durch einzelne Photonen angeregt, so wird in dem sensorisch aktiven Bereich (Absorptionsgebiet) pro anregendem Photon primär jeweils nur ein Elektron-Loch-Paar generiert, wobei die angeregten Elektronen durch elektrische Felder zur Kathode und die angeregten Löcher zur Anode abgezogen werden. Dabei driften die Ladungsträger bei einer SPAD durch ein sogenanntes Lawinengebiet, innerhalb dessen durch eine verstärkte Stoßionisation eine Ladungslawine erzeugt wird. Es handelt sich somit um hochgradig sensitive Photonen-Empfänger-Elemente, welche bei Aktivierung eine hohe Ladungsmenge (ca. $10^5$ - $10^6$ Elektronen) mit hoher zeitlicher Auflösung bereitstellen können.

Eine SPAD wird typischerweise im Geiger-Modus oberhalb seiner Durchbruchspannung betrieben, wobei ein einzelnes Photon über die erzeugte Ladungslawine detektiert und anschließend als Einzelereignis registriert wird. Zur Verringerung der während der Registrierung auftretenden Totzeit kann unmittelbar nach dem Einsetzen der Lawinenausbildung eine aktive oder passive Unterdrückung bzw. Quenching der weiteren Ladungsträgerverstärkung erfolgen. Die integrierte Schaltung kann neben der SPAD auch ein sogenanntes Einzelphotonenzählwerk bzw. einen Einzelphotonenzähler (engl. "Single-Photon Counter, SPC") umfassen, hierbei erfolgt im Allgemeinen anstatt einer direkten Ausgabe eines einzelnen Detektorimpulses eine unmittelbare statistische Auswertung der zeitlichen Verteilung der einzelnen detektierten Einzelphotonenereignisse.

Der Begriff Quanten-Zufallszahlengenerator (QRNG) ist im Rahmen dieser Anmeldung vor allem als abstrakte Definition im Sinne einer Anordnung zur Bereitstellung von zahlenmäßig erfassbaren quantisierten Zufallsereignissen zu verstehen. Ein Quanten-Zufallszahlengenerator umfasst dabei stets eine sogenannte Entropiequelle, also ein diese Zufallsereignisse tatsächlich bereitstellendes Element (z. B. eine SPS alleine oder in Kombination mit einem SPD). Der Begriff Quanten-Zufallszahlengenerator ist jedoch nicht auf die Entropiequelle beschränkt, sondern kann beispielsweise auch die Umgebung und die strukturelle Anordnung der Entropiequelle in einer Vorrichtung oder einem Substrat umfassen. Im Allgemeinen werden unter diesem Begriff jedoch auch entsprechende Ansteuerungs- und Auswerteschaltungen bzw. ganze Schaltungslayouts oder Logikbausteine zur tatsächlichen Ausgabe von Zufallsereignisse als direkt verarbeitbare Zufallszahlen mit verstanden. Die Zufallszahlen können sich dabei unmittelbar aus der Statistik der Entropiequelle oder beispielsweise durch eine Umwandlung als davon durch zusätzliche Maßnahmen abgeleitete Zufallswerte ergeben. Zur besseren Unterscheidung der abstrakten Definition von einer realen Schaltung wird letztere im Folgenden der Einfachheit halber als Quantenzufallsgenerator bezeichnet. Dies soll jedoch keine Einschränkung bezüglich der beiden genannten Begrifflichkeiten darstellen, sondern lediglich unterschiedliche Aspekte hervorheben. Insofern können die Begriffe Quanten-Zufallszahlengenerator und Quantenzufallsgenerator auch durchaus ein und dieselben Vorrichtung repräsentieren, wobei dann beide Vorrichtungen mindestens eine Entropiequelle einschließen. In einem schaltungstechnischen Blockschaltbild (d. h. auf Schaltungsebene) wird ein erfindungsgemäßer Quanten-Zufallszahlengenerator daher auch kurz als Entropiequelle bezeichnet, während die jeweils durch das Blockschaltbild repräsentierte Schaltung zur Ausgabe direkt verarbeitbarer Zufallszahlen für eine bessere Unterscheidbarkeit als Quantenzufallsgenerator bezeichnet wird.

Insbesondere braucht das Substrat eines Quanten-Zufallszahlengenerators keine weiteren Komponenten zur Ausbildung eines Quantenzufallsgenerators umfassen, sondern, das Substrat kann beispielsweise auch nur ein einzelner Halbleiterkristall sein, der lediglich eine oder mehrere Entropiequellen umfasst. Die weiteren Komponenten eines Quantenzufallsgenerators können in diesem Fall auch extern, beispielsweise auf einem anderen Substrat bereitgestellt werden.

Eine parallel zur Zufallszahlenerzeugung erfolgende statistische Auswertung kann beispielsweise zur weiteren Absicherung der Erzeugung gegenüber möglichen Angriffen auf den Prozess der Zufallszahlenerzeugung genutzt werden. Insbesondere bei aus Einzelkomponenten aufgebauten nicht-integrierten photonischen QRNGs bieten die erforderlichen Übertragungsstrecken innerhalb des Systems dazu vielfältige Angriffsmöglichkeiten. Daher werden solche Systeme zur Erhöhung der Sicherheit möglichst kompakt und isoliert von ihrer äußeren Umgebung realisiert. Neben der Vermeidung von potentiellen Angriffsszenarien ist ein weiterer Vorteil solcher kompakten QRNGs, dass die Zufallszahlenerzeugung eventuell von außerhalb des Systems beeinträchtigende natürliche Einflüsse ebenfalls weitestgehend minimiert werden können. Entsprechend kompakte, auf dem Photonenrauschen basierende QRNGs werden daher bisher üblicherweise als hybridisch integrierte Systeme bereitgestellt.

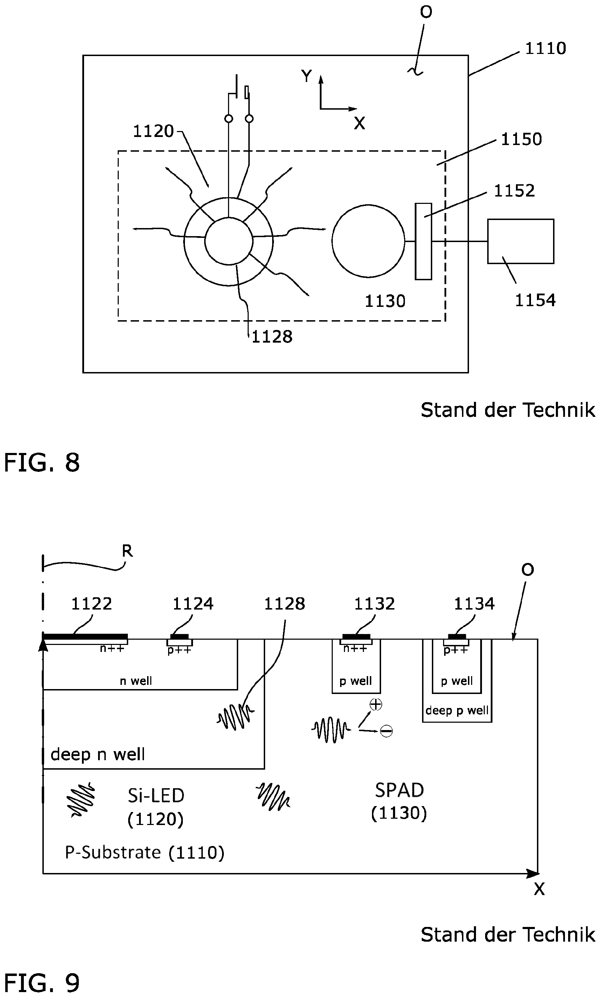

Aus der EP 3 529 694 B1 ist auch ein integrierter Quanten-Zufallszahlengenerator (engl. "integrated Quantum Random Number Generator, iQRNG") mit einer SPS und einer oder mehreren SPDs bekannt, bei dem die SPS und der oder die SPDs vollständig in CMOS-Technologie integriert in einem einzigen Halbleitersubstrat derart angeordnet sind, dass sie unmittelbar nebeneinanderliegen (siehe FIG. 8 mit zugehöriger Figurenbeschreibung). Die SPS wird dabei durch einen zweckmäßig dotierten p-n-Übergang bereitgestellt, so dass sie einen zu detektierenden Photonenstrom erzeugt, wenn die Photonenquelle in geeigneter Weise in Vorwärts- oder Rückwärtsrichtung vorgespannt ist. Bei den SPDs soll es sich insbesondere um SPADs handeln, welche bevorzugt durch gemeinsame Herstellungsprozesse mit den SPSs erzeugt werden und die gleiche chemische Struktur aufweisen.

Die gemeinsame Integration bewirkt, dass der von der SPS erzeugte Photonenstrom durch optisches Übersprechen innerhalb ein und desselben Halbleitermaterials unmittelbar zu einer daneben angeordneten SPAD fließen kann und nicht wie bei anderen aus dem Stand der Technik bekannten hybridisch integrierten QRNGs zunächst einen eventuell leeren, die beiden Komponenten physikalisch voneinander trennenden Kopplungszwischenraum überwinden bzw. durchtunneln muss. Die integrierte "side-by-side"-Konfiguration macht den in der Druckschrift vorgestellten QRNG kompakter und strukturell weniger komplex als hybride QRNGs des gleichen funktionalen Typs. Darüber hinaus ist der Zufallszahlengenerator dank der Integration aller Komponenten deutlich robuster und immuner gegen externe Umwelteinflüsse sowie gegen Manipulationsversuche durch äußere Angreifer.

Allerdings besteht unter deutlich erhöhtem Aufwand hierbei prinzipiell auch weiterhin die Möglichkeit, während des laufenden Betriebs des QRNGs in den Erzeugungsprozess der Zufallszahlen störend, beeinflussend und/oder beobachtend einzugreifen. Da der in der Druckschrift offenbarte iQRNG im Wesentlichen eine planare Struktur aufweist, könnten einzelne Photonen nämlich durchaus von ober- oder unterhalb der Ebene des Substrats abgegriffen oder zusätzlich eingebracht werden.

Die horizontale Nebeneinanderanordnung der Strukturen ist zudem nicht ideal hinsichtlich der Effizienz und des benötigten Flächenverbrauchs. Die Effizienz wird dabei insbesondere durch den erforderlichen seitlichen Abstand zwischen der SPS und der SPAD und eine damit verbundene hohe Absorption der Photonen im Halbleitermaterial beschränkt. Die von der SPS emittierten Photonen werden ohne besondere Vorkehrungen zudem weitgehend ungerichtet in das die SPS umgebende Material ausgesendet, so dass auch dadurch nur ein Teil der erzeugten Photonen von einer zugehörigen SPAD detektiert werden kann. Zwar können mehrere SPADs um eine einzelne SPS herum angeordnet werden, so dass die Effizienz und somit die digitale Entropierate durch gemeinsame Auswertung der so verbundenen SPADs erhöht werden kann, dadurch nimmt jedoch der Flächenverbrauch eines solchen iQRNGs erheblich zu. Anderseits muss auch bei einem einzelnen Emitter-Detektor-Paar sichergestellt werden, dass die nicht detektierten Photonen sich nicht unkontrolliert innerhalb des Substrats ausbreiten und an anderer Stelle im Substrat zu Störungen führen können. Die damit verbundenen seitlichen Sperrbereiche führen daher ebenfalls zu einer Erhöhung des effektiven Flächenverbrauchs des iQRNGs.

Ein ebenfalls in CMOS-Technologie (HV-CMOS) realisierter iQRNG mit einer entsprechenden Anordnung einer Photonenquelle und eines Einzelphotonendetektors nebeneinander ist auch aus Khanmohammadi et al. (Khanmohammadi, Abbas, et al. "A monolithic silicon quantum random number generator based on measurement of photon detection time." IEEE Photonics Journal 7.5 (2015): 1-13) bekannt. Eine in einer kreisförmig oberflächennahen n-Wanne zwischen einem zentralen n$^{++}$-Gebiet als Kathode und mehreren ringförmig darum angeordneten p$^{++}$-Gebieten als Anode ausgebildete Si-LED als Photonenquelle wird dabei kreisringförmig von einer SPAD als Einzelphotonendetektor umschlossen (siehe FIG. 9 mit zugehöriger Figurenbeschreibung). Die von der SPS emittierten Photonen werden dadurch allseitig in der Ebene detektiert, wodurch gegenüber dem aus der EP 3 52 694 B1 bekannten iQRNG bei verringertem Flächenverbrauch die Effizienz erhöht werden kann. Die SPS wird somit unmittelbar in die SPAD integriert. Einzelne Photonen können jedoch auch hierbei ins Substrat emittiert oder an dessen Oberfläche extrahiert werden. Ebenfalls möglich ist auf diesen Wegen auch die Injektion von entsprechenden Photonen eines Angreifers zur Beeinflussung der Statistik.

Von daher besteht zur weiteren Erhöhung der Sicherheit und zur Reduzierung des Flächenverbrauchs Bedarf für eine weitere Miniaturisierung von integrierten QRNGs gegenüber dem Stand der Technik. Der iQRNG sollte weitgehend gegenüber äußeren Angriffen geschützt sein und dabei eine möglichst hohe Effizienz und möglichst geringe Substratverluste aufweisen. Um dabei nicht durch herstellungstechnologische Beschränkungen beim Design von SoCs (engl. "System on Chip, SoC") limitiert zu sein, sollte dabei das zugrundeliegende Herstellungsverfahren möglichst technologieoffen ausgestaltet sein bzw. auf einer möglichst breit anwendbaren Technologieplattform zur Halbleiterstrukturierung basieren.

Ein integrierter Quanten-Zufallszahlengenerator, iQRNG, kann eine Photonenquelle und einen Einzelphotonendetektor, wobei die Photonenquelle und der Einzelphotonendetektor in vertikaler Richtung übereinander in einem gemeinsamen Substrat aus einem Halbleitermaterial angeordnet sind, umfassen. In vertikaler Richtung übereinander bedeutet dabei, dass die Photonenquelle und der Einzelphotonendetektor, bezogen auf eine Oberfläche des Substrats, in unterschiedlichen Tiefen gestapelt zueinander angeordnet sind (eine Nebeneinanderanordnung würde dann beispielsweise in horizontaler Richtung erfolgen). Dabei bedeutet vertikal übereinander bevorzugt, dass die Ausbreitungsrichtung der zwischen der Photonenquelle und dem Einzelphotonendetektor übertragenen Photonen zumindest eine Komponente in besagter vertikaler Richtung aufweist. Die Photonenquelle und der Einzelphotonendetektor können daher durchaus auch einen gegenseitigen seitlichen Versatz oder eine Verkippung der aktiven Bereiche in Bezug auf die Oberfläche des Substrats aufweisen, solange von der Photonenquelle ausgesandte Photonen vom Einzelphotonendetektor mit zumindest einer Komponente der Ausbreitung in besagter vertikaler Richtung detektieren werden können. Besonders bevorzugt ist, wenn die Ausbreitung der Photonen im Wesentlichen (d. h. in strahlenoptischer Näherung ohne Beugungseffekte) nur eine Komponente in besagter vertikaler Richtung (d. h. keine horizontale Komponente) aufweist. Ein beschriebener iQRNG kann auch mehrere an einen einzelnen Einzelphotonendetektor gekoppelte Photonenquellen (z. B. zur Erhöhung der Photonenrate oder der Ausfallsicherheit) oder mehrere an eine einzelne Photonenquelle gekoppelte Einzelphotonendetektoren (z. B. für Überwachungszwecke) umfassen. Ebenfalls möglich ist die Kombination von mehreren Photonenquellen und Einzelphotonendetektoren zu einem einzelnen iQRNG.

Im Gegensatz zum Stand der Technik findet somit keine Nebeneinanderanordnung der einzelnen optoelektronischen Komponenten statt. Vielmehr soll eine kompakte Anordnung einer Photonenquelle und eines Einzelphotonendetektors übereinander in einem gemeinsamen Substrat aus einem Halbleitermaterial erfolgen. Es handelt sich somit hierbei um eine besonders kompakte monolithische 3D-Integration mit minimalem Flächenverbrauch für den iQRNG, wobei die Ausbildung der Strukturen bevorzugt einstückig erfolgen kann. Insbesondere ist hierbei eine Anordnung bevorzugt, bei der der Einzelphotonendetektor zur verbesserten Abschirmung gegenüber äußeren Einflüssen tieferliegend als die Photonenquelle im Halbleitermaterial (d. h. Photonenquelle oben, Einzelphotonendetektor unten) angeordnet ist. In einer alternativen Ausführungsform kann der Einzelphotonendetektor jedoch auch höherliegend als die Photonenquelle im Halbleitermaterial angeordnet sein (d. h. Photonenquelle unten, Einzelphotonendetektor oben). Beispielsweise kann neben einer Inversion des grundsätzlichen Strukturaufbaus bei einer Prozessierung von der Oberfläche des Substrats aus auch eine inverse Anordnung der Elemente durch eine entsprechende Strukturierung von der Rückseite des Substrats aus erfolgen. Insbesondere kann eine Strukturierung beidseitig sowohl von der Vorderseite als auch von der Rückseite des Substrats aus erfolgen.

Vorzugsweise handelt es sich bei der Photonenquelle um eine Einzelphotonenquelle (engl. "Single Photon Source, SPS"), dazu eingerichtet, zeitgleich nur einzelne oder einige wenige Photonen bereitzustellen. Solche zeitgleich nur einzelne oder nur einige wenige Photonen bereitstellende Photonenquellen werden im Rahmen dieser Anmeldung auch als Einzelphotonenquellen bezeichnet. Es muss sich dabei jedoch nicht um echte Einzelphotonenemitter, beispielsweise auf Basis eines einzelnen isolierten Zweiniveausystems, handeln, vielmehr können durch eine entsprechend hohe Abschwächung der Emission bzw. des zugeführten Stroms auch herkömmliche Lichtquellen als SPS ausgebildet werden.

Unter einem Substrat wird im Rahmen der vorliegenden Offenbarung der gesamte Halbleiter-Chip als Körper verstanden, in den beispielsweise mittels CMOS- oder anderer Technologien eine bestimmte Elementstruktur beispielsweise durch Ausbildung von unterschiedlich dotierten Wannen oder Gebieten in das Halbleitermaterial hineinstrukturiert wird. Die Strukturausbildung kann jedoch auch additiv durch Aufbringen von weiteren Schichten und Strukturen bzw. durch eine Abfolge von Ätz- und Aufbringschritten für solche weiteren Schichten und Strukturen erfolgen. Ein entsprechendes Substrat kann daher neben einem sogenannten Träger- oder Grundsubstrat (z. B. ein unstrukturiertes einkristallines Halbleitersubstrat als Basis für das epitaktischen Aufwachsen von weiteren Halbleiterschichten) auch eine Vielzahl solcher epitaktisch aufgewachsen Schichten sowie andere Beschichtungen umfassen. Das Substrat wird in dieser Anmeldung daher als materieller Träger für die Halbleiterstrukturen eines beschriebenen iQRNG und nicht im Sinne eines einfachen Träger- oder Grundsubstrats zum Aufbringen dieser Strukturen verstanden. Insofern stellt vor allem die einstückige Ausbildung eines beschriebenen iQRNG übereinander in einem gemeinsamen Substrat aus einem Halbleitermaterial eine Abgrenzung insbesondere gegenüber mit herkömmlichen Methoden hybridisch integrierten Kombinationen (z. B. mittels Flip-Chip-Montage) aus mindestens einer Photonenquelle und mindestens einem Einzelphotonendetektor etwa auf einem gemeinsamen Submount als Trägerstruktur dar.

Vorzugsweise handelt es sich bei der Photonenquelle um eine an einem Arbeitspunkt unterhalb oder nahe der Durchbruchspannung betriebene lichtemittierende Avalanche Zener-Diode (Zener-avLED). Bevorzugt weist die Zener-avLED eine Durchbruchspannung von < 10 V auf, bevorzugter eine Durchbruchspannung von < 8 V und noch bevorzugter eine Durchbruchspannung von < 7 V. Die Vorteile der Verwendung einer Zener-avLED als Einzelphotonenquelle werden nachfolgend näher erläutert. Diese neue Art von Einzelphotonenquellen erlauben eine hohe Einzelphotonenrate bei relativ geringer Betriebsspannung auch unterhalb und im Bereich der Zener-Durchbruchspannung und zeigen bei entsprechend gewünschter Konstruktion eine bevorzugt gerichtete Abstrahlung der erzeugten Photonen ins Substratinnere und damit in Richtung des Einzelphotonendetektors. Dadurch sind Zener-avLEDs für eine Anwendung als Einzelphotonenquelle in einem iQRNG besonders geeignet.

Vorzugsweise handelt es sich bei dem Einzelphotonendetektor um einen Einzelphotonen-Lawinendioden (engl. "Single Photon Avalanche Diodes, SPADs"). Darunter werden Detektoren verstanden, die aufgrund ihrer besonders hohen Empfindlichkeit bei hoher Verstärkung und geringem (Dunkel)Rauschen prinzipiell dazu in der Lage sind, einzelne Photonen detektieren und nachweisen zu können.

Eine Hauptidee der vorliegenden Erfindung liegt somit darin, durch eine Anordnung einer Zener-avLED und einer SPAD übereinander in einem gemeinsamen Halbleitersubstrat einen besonders kompakten und sicheren integrierten QRNG zur Verfügung zu stellen.

Ein Ansatz zur aufgabengemäßen Verbesserung der aus dem Stand der Technik bekannten iQRNG besteht dabei in der Auswahl einer entsprechend breiten Technologieplattform. Für SoC-Designs mit einem möglichst breiten Spektrum an möglichen Anwendungen bieten integrierte Schaltungen in der Bipolar-CMOS-DMOS-Technologie (BCD-Technologie) auf Silizium ein großes Potential. In BCD-Technologie konnten auch bereits erfolgreich hocheffiziente SPADs demonstriert und realisiert werden. Dabei erlaubt die BCD-Technologie eine besonders effektive und optimierte Integration dieser SPADs mit einer Vielzahl von weiteren funktionalen Gruppen wie etwa digitalen und analogen Schaltungskomponenten, besonders energieeffizienten digitalen Speicher- und Schaltelementen, allgemeiner Leistungs- und Treiberelektronik sowie von Detektor- und Sensorbauteilen.

Die im Stand der Technik bekannten Silizium-basierten SPS können im Prinzip durchaus auch in BCD-Technologien implementiert werden. Aufgrund der ungerichteten Abstrahlung der Photonen sowie einer üblicherweise direkt oberflächennah erfolgenden Implementierung sind solche Si-LEDs jedoch zur Realisierung besonders effizienter und vor Angriffen geschützter iQRNGs nicht optimal. Die oberflächennahe Implementierung bedingt auch zumeist eine Degradation für den Fall einer im Avalanche-Betrieb genutzten Si-LED. Da Silizium als indirekter Halbleiter nur schlecht zur Erzeugung von Photonen geeignet ist und diese im Allgemeinen nur durch weitere Prozesse über eine zusätzliche Wechselwirkung mit dem Kristallgitter generiert werden können, ist die Auswahl an möglichen alternativen Photonenquellen auf Basis von Silizium allerdings stark eingeschränkt.

Bei der Untersuchung von in einer BCD-Technologie in unterschiedlichen Schichten durch entsprechende p-n-Übergänge bereitgestellten Zener-Dioden, welche für einen dauerhaften Arbeitspunkt selbst im Durchbruchbereich optimiert sind, wobei eine oberflächennahe Zener-Diode als Emitter und eine darunter liegende einfache p-n-Diode ohne Vorspannung (engl. "zero bias") als Detektor betrieben wurde, konnte durch die Erfinder gezeigt werden, dass in dieser Konfiguration entgegen der allgemeinen Erwartung des Fachmanns an der Zener-Diode im Avalanche-Betrieb bei der Durchbruchspannung starke Elektrolumineszenz mit einer Effektivität von mindestens 0,03 % beobachtet werden kann. Entsprechende Zener-Dioden sind im Stand der Technik üblicherweise nicht für den Betrieb als optoelektronisches Bauelement (LED) vorgesehen.

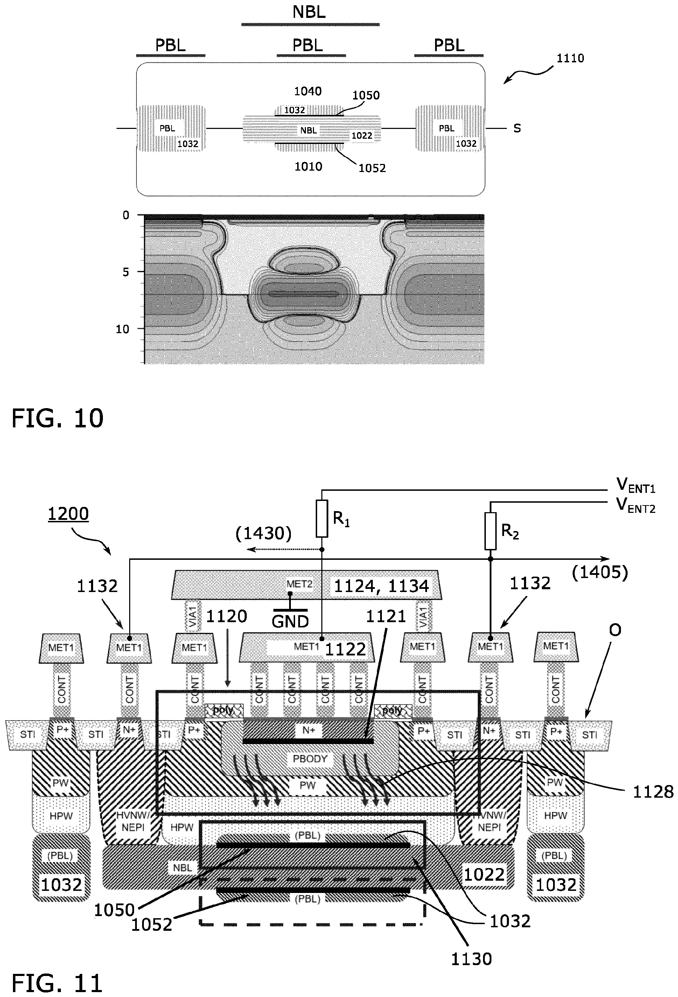

Insbesondere werden die erzeugten Photonen bevorzugt in Richtung der unteren p-n-Diode hin emittiert, welche somit nahezu alle emittierten Photonen detektieren kann, was über einen Photostrom auch in der erfinderischen Struktur nachgewiesen werden kann (vgl. FIGs. 11 bis 14 mit zugehöriger Figurenbeschreibung). Es zeigte sich somit, dass die untersuchte Zener-Diode im Bereich der Durchbruch-/Zener-Spannung eine zwar geringe, aber doch durchaus signifikante Effizienz (ca. ein detektiertes Photon pro 3000 Elektronen des Zener-Diodenstroms) aufweist und daher als Einzelphotonenquellen für die Realisierung von QRNGs in auf Silizium basierenden BCD-Technologie hervorragend geeignet erscheinen. Vor allem die bevorzugte Abstrahlung in Richtung des Detektors bietet gegenüber der isotropen Abstrahlung herkömmlicher in iQRNGs verwendeter Photonenquellen deutliche Vorteile. Dabei ist das in der CMOS-Technologie übliche Silizid zur Darstellung von verringerten Kontaktwiderständen zwischen den Metall-Kontakten und dem Halbleiter Silizid einerseits lichtdicht und andererseits spiegelnd glatt, so dass auch ursprünglich nach oben ausgesandte Photonen am Silizid-Spiegel zurück ins Innere des Substrats reflektiert werden können. Entsprechend ausgebildete und als SPS betriebene Zener-Dioden im Avalanche-Betrieb werden daher im Folgenden im Gegensatz zu den aus dem Stand der Technik bekannten Si-LEDs auch als lichtemittierende Avalanche Zener-Diode (engl.: "Avalanche Light Emitting Zener-Diode, Zener-avLED") bezeichnet.

Die in der verwendeten BCD-Technologie bereitgestellten Zener-avLED emittieren Photonen mit Wellenlängen aus dem sichtbaren Spektralbereich und weisen dabei eine relative geringe Zener-Betriebsspannung von zumeist kleiner als 8 V auf. Da die Abstrahlung einer Zener-avLED zudem typischerweise derart gerichtet ist, dass die Photonen bevorzugt in vertikaler Richtung, d. h. von der Oberfläche weg ins Substrat hinein emittiert werden, kann zudem bei einer Anwendung in einem iQRNG eine wesentlich stärke Isolation der SPS sowie der erzeugten Photonen gegenüber der Umgebung des Halbleitermaterials erreicht werden und ein Abgreifen oder Injizieren von Photonen an der Detektoroberfläche wird deutlich erschwert. Bei geeigneter Ausbildung der zu einem iQRNG gehörenden SPAD kann zudem die Effizienz der Zufallszahlenerzeugung deutlich erhöht und eine unkontrollierte Photonenausbreitung im Halbleitermaterial weitgehend unterbunden werden.

Die zweite wesentliche Komponente zum Aufbau eines kompakten QRNG ist daher die Auswahl eines entsprechend angepassten SPAD-Designs. Typischerweise werden diese in BCD-Technologien ebenfalls oberflächennah durch entsprechende Ausbildung von p- oder n-Wannen realisiert. Solche oberflächennahen SPADs sind mit den in CMOS-Technologie realisierten SPADs im Stand der Technik durchaus vergleichbar. Im Prinzip wäre somit der aus der EP 3 529 694 B1 bekannte iQRNG mit den obenstehend beschriebenen Zener-avLEDs auch in BCD-Technologien realisierbar. Jedoch emittieren die Zener-avLEDs wie obenstehend bereits beschrieben die Photonen mit Vorteil vorzugsweise in Richtung in das Substrat hinein. Eine aus dem Stand der Technik bekannte Nebeneinanderanordnung von einer Zener-avLED als SPS und einer oberflächennahen SPAD ließe sich zwar grundsätzlich, aber nicht unbedingt effektiv umsetzen. Bei der Verwendung von Zener-avLEDs ist es zweckmäßig die zugehörige SPAD daher unterhalb der Zener-avLED anzuordnen.

Die BCD Technologie ermöglicht neben der Implementierung von konventionellen n-SPADs und p-SPADs auch die Umsetzung völlig neuartiger SPAD-Konzepte, u. a. durch die Nutzung tiefliegender n- oder p-dotierten Schichten in einem BCD-Substrat.

Dabei konnte durch ein erst kürzlich ebenfalls von den Erfindern entwickeltes Verfahren zur Erzeugung tiefliegender p-n-Übergänge in einem BCD-Prozess zur Bereitstellung eines entsprechenden BCD-Substrats mit tiefliegenden p-n-Übergängen eine darauf basierende, besonders effiziente, tiefliegende Einzelphotonen-Lawinendiode ("deepSPAD") realisiert werden, welche auf einfache Weise unmittelbar unterhalb einer zur Bereitstellung von Einzelphotonen eingerichteten Zener-avLED angeordnet werden kann. Die Kombination aus einer Zener-avLED in Kombination mit einer tiefliegenden SPAD stellt somit im Gegensatz zu einer auf CMOS-Technologie basierenden horizontalen Integration eines QNRG gemäß Stand der Technik die wesentlichen Komponenten eines vollständig in BCD-Technologie vertikal integrierten QRNG bereit.

Durch die vertikale Anordnung einer Zener-avLED als Emitter und einer mittels extrem tiefliegender p-n-Übergänge realisierten deepSPAD als Empfänger kann in BCD-Technologien ein miniaturisierter, auf einem monolithischen Silizium-Die basierender Quanten-Zufallszahlgenerator mit hocheffizienter optischer Kopplung, hoher Angriffssicherheit sowie geringer Betriebsspannung realisiert werden. Damit stellt das hier vorgestellte iQRNG-Design auf BCD-Basis eine optimale Lösung zur Bereitstellung eines beschriebenen iQRNG dar. Insbesondere kann durch die vertikale 3D-Integration die Kompaktheit eines iQRNG weiter erhöht und der Flächenverbrauch gegenüber herkömmlichen lateralen 2D-Designs bei gleichzeitiger Steigerung der Effizienz reduziert werden.

Vorzugsweise ist ein beschriebener iQRNG daher in einem BCD-Substrat in BCD-Technologie ausgebildet.

Vorzugsweise umfasst das BCD-Substrat dabei ein Trägersubstrat; und eine auf dem Trägersubstrat aufgewachsene epitaktische Schicht, wobei zwischen dem Trägersubstrat und der epitaktischen Schicht durch eine Diffusion von in eine Oberfläche des Trägersubstrats unterhalb der epitaktischen Schicht eingebrachten Dotierstoffen ein in der epitaktischen Schicht liegender tiefliegender p-n-Übergang erzeugt wurde.

Bei dem Trägersubstrat kann es sich bevorzugt um ein p-Substrat handeln. Es können jedoch auch n-Substrate oder intrinsische Substrate verwendet werden. Bei dem Substratmaterial kann es sich insbesondere um Silizium handeln. Die Verfahren sind jedoch prinzipiell auch für andere Halbleitermaterialien adaptierbar. Ein typischer Dotierstoff zur Ausbildung eines p-Gebiets ist Bor. Zur Ausbildung eines n-Gebiets kann Phosphor (P), Arsen (As) oder Antimon (Sb) verwendet werden. Dabei diffundiert beispielsweise in Silizium Bor als Dotierstoff deutlich weiter aus als die schweren Donatoren (P, As oder Sb). Zudem kann festgestellt werden, dass dabei die erzeugten n-Gebiete aufgrund der höheren verwendeten Dosen weitgehend dominant sind, d. h. ein bereits mit Phosphor dotiertes n-Gebiet kann auch nach einem zusätzlichen Einbringen von Bor seinen vorhandenen Leitungstyp beibehalten. Für die Bereitstellung der tiefliegenden p-n-Übergänge kann mitunter auf zusätzliche Masken-, Lithographie- und Epitaxie-Schritte im üblichen BCD-Prozess verzichtet werden.

Vorzugsweise weisen der erste und der zweite Dotierstoff unterschiedliche Diffusionseigenschaften im Trägersubstrat und/oder in der epitaktischen Schicht auf. Bevorzugt weist der zweite Dotierstoff eine höhere Beweglichkeit im Trägersubstrat und/oder in der epitaktischen Schicht auf als der erste Dotierstoff. Vorzugsweise erfolgt das Einbringen des ersten Dotierstoffs und/oder des zweiten Dotierstoffs maskenlos oder über ein Maskenverfahren. Zum maskenlosen Einbringen kann beispielsweise ein direktes Ionenstrahlschreibverfahren verwendet werden. Bei einem Maskenverfahren erfolgt das Einbringen mit Hilfe einer zuvor bereitgestellten Maske, wobei das Einbringen beispielsweise über ein chemisches oder physikalisches Abscheideverfahren oder ebenfalls mittels eines Ionenstrahlschreibverfahrens erfolgt. Vorzugsweise überlagert unmittelbar nach dem Einbringen des zweiten Dotierstoffs in einer Aufsicht auf die Oberfläche des Trägersubstrats das erste Gebiet oder das zweite Gebiet vollständig das jeweils anderen Gebiet. Vorzugsweise handelt es sich bei dem ersten Bereich um eine tiefliegende n-Schicht (NBL-Schicht) und bei dem zweiten Gebiet um eine tiefliegende p-Schicht (PBL-Schicht).

Vorzugsweise bildet der Einzelphotonendetektor in einem Bereich um den tiefliegenden p-n-Übergang ein Lawinengebiet aus und umfasst ein Absorptionsgebiet zur Umwandlung von Photonen in Elektronen-Lochpaare, wobei sich das Absorptionsgebiet unmittelbar an den tiefliegenden p-n-Übergang anschließt.

Bevorzugt ist, dass der tiefliegende p-n-Übergang zumindest teilweise zwischen einer tiefliegenden n-Schicht als Kathode und einer sich unmittelbar an die tiefliegende n-Schicht anschließenden tiefliegenden p-Schicht ausgebildet ist. Ebenfalls bevorzugt ist, dass das Absorptionsgebiet sich unmittelbar an die tiefliegende p-Schicht anschließt und im Wesentlichen als p-Gebiet ausgebildet ist. Im Wesentlichen bedeutet dabei, dass das Absorptionsgebiet teilweise auch als intrinsisches Gebiet ausgebildet sein kann. Weiterhin bevorzugt ist, dass eine als p⁺-Gebiet ausgebildete Anode sich unmittelbar an das Absorptionsgebiet anschließt.

Vorzugsweise wird ein unterhalb des in der epitaktischen Schicht liegenden tiefliegenden p-n-Übergangs des Einzelphotonendetektors ausgebildeter zweiter tiefliegender p-n-Übergang (z. B. in dem Trägersubstrat) als zusätzlicher Photodetektor zur Überwachung auf äußere Angriffe genutzt. Durch das besagte Verfahren zur Erzeugung tiefliegender p-n-Übergänge in einem BCD-Prozess ergibt sich nämlich bei einigen Ausführungsformen unterhalb des ersten p-n-Übergangs ein darunterliegender zweiter p-n-Übergang (siehe FIG. 10 mit zugehöriger Figurenbeschreibung). Dieser kann aufgrund seiner weitgehend identischen elektronischen Eigenschaften ebenfalls als Photodetektor bzw. Einzelphotonen-Lawinendiode konfiguriert werden. Da dieser zusätzliche Photodetektor somit unterhalb der eigentlichen QRNG-Anordnung tief vergraben im Halbleitermaterierial angeordnet ist, kann dieser eine Schutzfunktion gegenüber von der Rückseite des Substrats injizierten Photonen bereitstellen. Diese können in unmittelbarer Nähe zum QRNG in einem breiten Winkelbereich detektiert werden. Dadurch lassen sich äußere Angriffe mit hoher Wahrscheinlichkeit erkennen.

Des Weiteren kann der zusätzliche Photodetektor dazu eingerichtet sein, über eine zusätzliche Auswerteelektronik eine Überwachung der Photonenzählrate zu ermöglichen. Unter ansonsten gleichbleibenden Betriebsbedingungen sollten die Photonenquelle und der zugehörige Einzelphotonendetektor abseits der zufälligen statistischen Schwankungen bei den detektieren Photonenereignissen eine in etwa konstante Photonenzählrate aufweisen. Da jedoch eventuell nicht alle von der Photonenquelle emittierten Photonen auch vom zugehörige Einzelphotonendetektor erfasst werden und auch externe natürliche Einflüsse (z. B. kosmische Strahlen) und künstliche Einstrahlungen (z. B. Funkquellen) auch vereinzelte Detektionsereignisse am zusätzlichen Photodetektor verursachen können, wird mit einer gewissen Wahrscheinlichkeit auch der zweite Photodetektor eine in etwa konstante Hintergrundzählrate aufweisen. Abweichungen von diesem langfristigen statistischen Mittelwert können daher auf einen möglichen Fehler innerhalb des iQRNG oder eine externe Störung, etwa durch einen Angreifer, hinweisen. Durch eine erfasste Veränderung der Hintergrundzählrate am zweiten Photodetektor können dabei sowohl aktive Eingriffe eines Angreifers (z. B. Einstrahlung zusätzlicher Photonen zur Änderung bzw. Beeinflussung der Photonenstatistik) als auch passive Angriffe, etwa durch das gezielte Abdünnen einer Abschirmung zur Erhöhung der Transmission von einzelne Photonen nach Außen (was u. U. jedoch auch eine zusätzliche Einstrahlung von Umgebungslicht aus dieser Richtung verursachen kann).

Da es sich auch bei den Hintergrundzählraten um statistische Größen handelt, bietet sich für die Auswertung im Hinblick auf mögliche Abweichungen von zu erwartenden Normalwerten eine Analyse auf der Grundlage von Methoden des maschinellen Lernens an. Insbesondere kann zur Auswertung auf Methoden der künstlichen Intelligenz zurückgegriffen werden. Insbesondere ist die Verwendung mindestens eines entsprechend trainierten künstlichen neuronalen Netzwerks (KNN) zur Feststellung eines Angriffs und/oder zur Identifizierung möglicher Fehlerquellen und Ereignisse bevorzugt. In der Literatur finden sich eine Vielzahl von unterschiedlichen Arten von KNN, eine Auswahl geeigneter Methoden kann der Fachmann anhand der jeweiligen Erfordernisse treffen.

In einigen Ausführungsformen kann das mindestens eine KNN ein stochastisches neuronales Netz (SNN) umfassen, welches für die gleichen Photonenzählraten variable Ausgaben liefern kann. Hiermit lassen sich Fehler des Netzes beruhend auf den vorhandenen Daten oder einem nicht hinreichenden Training des Netzwerkes untersuchen. Beispielsweise können so auch Abweichungen identifiziert werden, welche nicht vom Abweichungsraum eines Trainingsdatensatzes abgebildet werden (Out-of-Distribution).

Eine weitere mögliche Anwendung des tiefliegenden zweiten p-n-Übergangs als zusätzlicher Photodetektor kann in der Bereitstellung von unabhängigen Zufallszahlen auf der Basis einer weiteren, noch unterhalb des tiefliegenden zweiten p-n-Übergangs bzw. auf oder nahe der Rückseite des Substrats angeordneten unabhängigen Photonenquelle liegen. Vorzugsweise ist hierzu der tiefliegende zweite p-n-Übergang analog zum darüber angeordneten tiefliegenden ersten p-n-Übergang ebenfalls als Einzelphotonendetektor bzw. SPAD eingerichtet. Da auch die Absorption von Photonen im Bereich des ersten Einzelphotonendetektors einer Wahrscheinlichkeitsverteilung unterliegen kann und abhängig von der konkreten Realisierung der Anordnung der einzelnen Elemente durchaus auch einzelne Photonen der eigentlichen Photonenquelle des erfindungsgemäßen iQRNG bis in den Bereich des tiefliegenden zweiten p-n-Übergangs gelangen können, ist es auch möglich, dass diese ebenfalls als Grundlage für eine Bereitstellung von Quantenzufallszahlen, beispielsweise als zusätzlicher unabhängiger iQRNG, genutzt werden können.

Unabhängig von der Nutzung eines tiefliegenden zweiten p-n-Übergangs als zusätzlicher Photodetektor kann ein erfindungsgemäßer iQRNG (bzw. ein entsprechender Quantenzufallsgenerator) jedoch auch einen von den beschriebenen tiefliegenden p-n-Übergängen unabhängigen weiteren Photodetektor umfassen. Vorzugsweise handelt es sich bei dem weiteren Photodetektor um einen ebenfalls in den erfindungsgemäßen iQRNG integrierten Photodetektor, dieser kann jedoch auch hybrid mit dem erfindungsgemäßen iQRNG verbunden sein. Besonders bevorzugt handelt es sich bei dem weiteren Photodetektor ebenfalls um einen Einzelphotonendetektor, z. B. eine SPAD. Der zusätzlicher Photodetektor kann analog zur oben beschriebenen Verwendung des tiefliegenden zweiten p-n-Übergangs ebenfalls zur Überwachung der Funktionsfähigkeit und der Sicherheit eines erfindungsgemäßen iQRNG verwendet werden.

Vorzugsweise sind der tiefliegende erste p-n-Übergang und der tiefliegende zweite p-n-Übergang über ein gemeinsames inneres Terminal, beispielsweise einer gemeinsamen Anode oder Kathode, miteinander verbunden. Typischerweise werden zum Betrieb als Einzelphotonendetektor eingerichtete p-n-Übergang an einer Seite des p-n-Übergangs unmittelbar über das Substrat angeschlossen. Aufgrund einer insbesondere bei BCD-Technologien jedoch üblichen Abschirmung bzw. Isolation der Strukturen und Schaltungen vom Substrat, werden häufig entsprechende Terminals zur Kontaktierung an die Substartoberfläche gelegt. Bei einer erfindungsgemäßen Ausbildung einer p-n-Übergangs-Doppelstruktur ergibt sich jedoch unmittelbar ein gemeinsamer Terminalbereich (Anode oder Kathode), der eine gemeinsame Ansteuerung über eine einzelne Kontaktierung, z. B. an der Substartoberfläche, ermöglicht.

Vorzugsweise ist die Ober- und/oder Unterseite des Substrats im Bereich des iQRNG an einer Oberfläche verspiegelt oder diese umfasst eine lichtblockierende Schicht. Eine Verspiegelung der Oberflächen eines Substrats (z. B. mittels Metallisierung oder dem Aufbringen dichroitischer Schichten) sowie das Aufbringen einer lichtblockierenden Schicht sind im Stand der Technik bekannt und wurden obenstehend bereits diskutiert. Auch bei einem beschriebenen iQRNG können diese Ansätze zu einer Abschirmung gegenüber äußeren Photonen ("Abschattung") sowie zur Erhöhung der Effizienz durch Rückreflektion der von der zugehörigen Photonenquelle erzeugten Photonen genutzt werden. Alternativ oder zusätzlich kann zudem eine entsprechende Verkapselung im Bereich des iQRNG oder das Umgeben dieses Bereichs mit einer Metallbox erfolgen.

Vorzugsweise ist die Oberfläche des Substrats im Bereich des iQRNG mit einer Silizid-Schicht und oberhalb mit einer Metallisierung bedeckt. Bevorzugt ist die Metallisierung im Bereich des iQRNG geschlossen. Die Metallisierung kann als Verspiegelung für den Innenbereich und/oder als wellenlängenunabhängige Abschattung für äußeren Photonen wirken. In gleicher Weise gilt das für eine ausgebildete Silizid-Schicht.

Vorzugsweise wird ein Austreten von durch die Photonen- bzw. Einzelphotonenquelle bereitgestellten Photonen an der Oberfläche des Substrats und/oder der Rückseite des Substrats durch eine Kombination von jeweils mindestens einem Element aus Metallabdeckungen, Seitenwandkontakten und Vias verhindert. Durch die genannten Elemente kann eine weitgehend vollständige Abschirmung bzw. Verkapselung des iQRNG erreicht werden, wodurch neben einer Abschirmung nach außen auch eine hohe Immunität gegenüber äußeren Störungen gewährleistet werden kann.

Im Hinblick auf mögliche Angriffsszenarien sind jedoch neben einer rein optischen Einflussnahme bzw. einem Auslesen von emittierten Photonen noch weitere Zugriffswege von außen denkbar. Ein weiterer Aspekt der vorliegenden Erfindung besteht daher darin, einen erfindungsgemäßen iQRNG, welcher aufgrund seiner spezifischen Anordnung der umfassten Photonenquelle und des zugehörigen Einzelphotonendetektors bereits eine gegenüber dem Stand der Technik deutlich erhöhte Sicherheit bietet, noch weiter gegen unberechtigte Zugriffe und eine Einflussnahme von außen, beispielsweise durch Beobachter bzw. Angreifer, zu härten. Auf eine mögliche optische Abschirmung wurde obenstehend bereits eingegangen, weitere Angriffe könnten beispielsweise auf der Basis einer gezielten Auswertung oder Beeinflussung chemischen oder elektronischer Eigenschaften der erfindungsgemäßen iQRNG erfolgen.

Wie eingangs bereits ausgeführt, nutzen Quanten-Zufallszahlengeneratoren die Prinzipien der Quantenmechanik, um echte Zufallszahlen zu erzeugen, die in der Kryptografie und anderen sicherheitskritischen Anwendungen verwendet werden können. Diese Zufallszahlen sind von entscheidender Bedeutung, da sie die Grundlage für sichere Verschlüsselungsschlüssel und andere kryptografische Prozesse bilden. Trotz ihrer theoretischen Sicherheit können QRNGs jedoch anfällig für verschiedene Arten von Seitenkanalangriffen sein, die die Integrität und Vertraulichkeit der generierten Zufallszahlen gefährden können.

Ein möglicher Angriffsvektor ist die elektromagnetische Abstrahlung. QRNGs können elektromagnetische Signale aussenden, die von einem Angreifer abgefangen und analysiert werden können. QRNGs können elektromagnetische Signale aussenden, die von einem Angreifer abgefangen und analysiert werden können. Diese Signale könnten Informationen über die internen Zustände des QRNGs preisgeben, was es einem Angreifer ermöglichen könnte, die generierten Zufallszahlen zu rekonstruieren oder vorherzusagen. Um solche Angriffe zu verhindern, sollten QRNGs gut abgeschirmt und gegen elektromagnetische Abstrahlung geschützt werden.

Ein weiterer Angriffsvektor ist der Stromverbrauch. Der Stromverbrauch eines QRNGs kann variieren, je nachdem, welche Zufallszahlen generiert werden. Ein Angreifer könnte diese Schwankungen messen und daraus Rückschlüsse auf die erzeugten Zufallszahlen ziehen. Dies könnte durch den Einsatz von hochsensiblen Strommessgeräten geschehen, die in der Lage sind, kleinste Veränderungen im Stromverbrauch zu detektieren. Um solche Angriffe zu verhindern, sollten QRNGs so gestaltet werden, dass ihr Stromverbrauch unabhängig von den generierten Zufallszahlen konstant bleibt.

Auch die Temperaturabhängigkeit kann eine Rolle spielen. Die Leistung von QRNGs kann temperaturabhängig sein, was bedeutet, dass Änderungen der Umgebungstemperatur die Zufallszahlengenerierung beeinflussen könnten. Ein Angreifer könnte die Temperatur des Geräts manipulieren, um die Zufallszahlen zu beeinflussen oder vorherzusagen. Um solche Angriffe zu verhindern, können QRNGs in temperaturkontrollierten Umgebungen betrieben werden und über Mechanismen verfügen, die ihre Leistung unabhängig von Temperaturschwankungen stabil halten.

Bei optischen QRNGs wie einem erfindungsgemäßen iQRNG, könnte ein Angreifer auch versuchen, die Lichtquelle zu beeinflussen oder die Detektoren zu überwachen, um die generierten Zufallszahlen zu manipulieren. Dies könnte durch das Einbringen von zusätzlichem Licht oder durch das Blockieren von Licht geschehen. Um solche Angriffe zu verhindern, sollten optische QRNGs gut abgeschirmt und gegen äußere Einflüsse geschützt werden.

Weiterhin gibt es sogenannte Timing-Angriffe. Durch die Messung der Zeit, die ein QRNG für die Generierung von Zufallszahlen benötigt, könnte ein Angreifer Muster erkennen und die Zufallszahlen vorhersagen. Dies könnte durch den Einsatz von hochpräzisen Zeitmessgeräten geschehen, die in der Lage sind, kleinste Unterschiede in der Generierungszeit zu detektieren. Um solche Angriffe zu verhindern, sollten QRNGs so gestaltet werden, dass ihre Generierungszeit unabhängig von den erzeugten Zufallszahlen konstant bleibt.

Chemische Angriffe auf halbleiterintegrierte QRNGs sind ein bisher weniger erforschtes, aber potenziell durchaus ernstzunehmendes Risiko. Diese Angriffe könnten beispielsweise darauf abzielen, die physikalischen Eigenschaften der Halbleiterkomponenten zu verändern, um die Zufallszahlengenerierung zu beeinflussen oder zu stören.

Ein möglicher Ansatz für chemische Angriffe besteht darin, die Halbleitermaterialien durch chemische Reaktionen zu verändern. Dies könnte durch die Einwirkung von korrosiven Substanzen geschehen, die die Integrität der Halbleiterstrukturen beeinträchtigen. Solche Angriffe könnten die Leistung der QRNGs beeinträchtigen, indem sie die Effizienz der Lichtquellen oder Detektoren verringern oder die elektrischen Eigenschaften der Schaltkreise verändern.

Ein weiterer potenzieller chemischer Angriff könnte die gezielte Dotierung der Halbleitermaterialien umfassen. Durch das Einbringen von Fremdatomen in die Halbleiterschicht könnte ein Angreifer die elektronischen Eigenschaften des Materials verändern und somit die Zufallszahlengenerierung beeinflussen. Dies könnte zu einer Vorhersagbarkeit der generierten Zufallszahlen führen, was die Sicherheit der QRNGs erheblich beeinträchtigen würde.

Obwohl chemische Angriffe auf QRNGs derzeit eher theoretischer Natur sind und in der Praxis noch nicht weit verbreitet sind, sollten diese potenziellen Bedrohungen mit berücksichtigt werden und es sollten Maßnahmen ergreifen werden, um die chemische Stabilität und Integrität der QRNGs zu gewährleisten. Dies kann beispielsweise durch den Einsatz von Schutzbeschichtungen, die Auswahl chemisch resistenter Materialien und die Implementierung von Überwachungsmechanismen zur Erkennung von chemischen Veränderungen geschehen.

Diese potentiellen Angriffsszenarien zeigen, dass selbst hochmoderne QRNGs nicht vollständig vor Seitenkanalangriffen geschützt sind. Es ist daher wichtig, zusätzliche Sicherheitsmaßnahmen zu implementieren, um die Integrität und Vertraulichkeit der generierten Zufallszahlen zu gewährleisten. Dazu gehören unter anderem die physische Abschirmung der Geräte, die Implementierung von Mechanismen zur Stabilisierung des Stromverbrauchs und der Generierungszeit sowie der Betrieb in kontrollierten Umgebungen.

Bei einem erfindungsgemäßen iQRNG können die besagten Abschirmungen unmittelbar über das realisierte Struktursystem selbst bzw. die vergrabene Anordnung der Entropiequelle im Inneren eines Substrats erreicht werden. Eine Abschirmung sowohl gegen elektromagnetische als auch optische Ab- bzw. Einstrahlung kann beispielsweise durch eine gemeinsame und durchgehende Metallisierung der Oberfläche des Substrats oberhalb des gesamten Bauraums des iQRNGs (bzw. der zugehörigen Entropiequelle) erreicht werden. An der entsprechenden Stelle an der Unterseite des Substrats kann ebenfalls eine Metallisierung zur Abschirmung des unteren Bauraums vorgenommen werden. Diese einzelnen Metallisierungen können dabei neben Ihrer Schirmungsfunktion auch gleichzeitig eine elektrische Kontaktierung einzelner Bereiche des iQRNG ermöglichen. Vorzugsweise können dabei zur Erhöhung der Schichtdicke mehrere Metallisierungsebenen übereinander angeordnet werden (z. B. 12-15 Lagen).

Metallische Mehrschichtlagen bietet in der Regel eine bessere Abschirmwirkung als eine einfache Metalllage. Dies liegt daran, dass mehrere Schichten aus unterschiedlichen oder gleichen Metallen kombiniert werden können, um die Abschirmwirkung zu maximieren. Ein Grund dafür ist, dass jede Metallschicht elektromagnetische Wellen reflektieren und absorbieren kann. Durch die Kombination mehrerer Schichten wird die Wahrscheinlichkeit erhöht, dass die Wellen mehrfach reflektiert und absorbiert werden, was die Gesamtabschirmung verbessert. Unterschiedliche Metalle haben unterschiedliche Abschirmungseigenschaften. Durch die Kombination von Metallen mit komplementären Eigenschaften kann eine effektivere Abschirmung erreicht werden. Zum Beispiel könnte eine Schicht aus einem hochleitfähigen Metall wie Kupfer mit einer Schicht aus einem ferromagnetischen Material wie Nickel kombiniert werden. Mehrere Schichten können auch helfen, die Durchdringungseffekte zu dämpfen, die bei einer einzelnen Schicht auftreten könnten. Dies ist besonders wichtig bei hochfrequenten elektromagnetischen Wellen, die dazu neigen, dünne Metallschichten zu durchdringen. Mehrschichtige Abschirmungen bieten zudem eine zusätzliche Sicherheitsebene. Wenn eine Schicht beschädigt oder korrodiert wird, können die anderen Schichten weiterhin eine effektive Abschirmung bieten.

Anstatt einer oder mehrerer Metallschichten kann zur Abschirmung gegenüber elektromagnetischer Strahlung (inklusive Photonen) auch eine Schicht aus Polysilizium auf die Oberfläche des Substrats im Bereich des iQRNG aufgebracht werden. Polysilizium wird häufig in der Halbleiterindustrie verwendet, insbesondere bei der Herstellung von Transistoren und Solarzellen. Es hat zwar nicht die gleichen Abschirmungseigenschaften wie Metalle und ist zudem für Photonen bei gleicher Dicke zumeist optisch transparenter, es handelt sich aber um ein prozesstechnologisch günstigeres Verfahren, welches deutlich einfacher umzusetzen ist.

Des Weiteren kann eine Abdeckung eines den erfindungsgemäßen iQRNG umfassenden Schaltkreises bzw. ICs (oder eines Bereichs bzw. Teils davon), zusätzlich zu den oben genannten Schichten zur Abschirmung oder als Einzelelement, bevorzugt mit einer Schicht aus Silizium-Nitrid (SiN) erfolgen. Durch eine solche Schicht kann ein bestimmter zuvor eingestellter Wasserstoffgehalt ($H_2$) in einem IC möglichst konstant gehalten werden, da SiN-Schichten nur eine geringe Permeabilität hierfür aufweisen. Ein konstanter Wasserstoffgehalt ist bei der Herstellung und dem Betrieb von ICs aus mehreren Gründen wichtig. Zunächst hilft Wasserstoff, Defekte in Halbleitermaterialien wie Silizium zu vermeiden. Diese Defekte können die elektrischen Eigenschaften der Halbleiterbauelemente beeinträchtigen und zu Fehlfunktionen führen. Ein konstanter Wasserstoffgehalt minimiert solche Defekte und gewährleistet die Zuverlässigkeit der ICs. Darüber hinaus wird Wasserstoff oft verwendet, um die Oberflächen von Halbleitermaterialien zu passivieren. Dies bedeutet, dass Wasserstoff an die Oberflächenatome bindet und so die Anzahl der freien Elektronen reduziert, die unerwünschte chemische Reaktionen verursachen könnten. Eine konstante Wasserstoffkonzentration stellt sicher, dass die Passivierung effektiv bleibt. Wasserstoff kann auch dazu beitragen, die Oxidation von Metallverbindungen in den ICs zu reduzieren. Oxidation kann die Leitfähigkeit von Metallverbindungen verringern und somit die Leistung der ICs beeinträchtigen. Ein konstanter Wasserstoffgehalt hilft, die Oxidation zu kontrollieren und die Leitfähigkeit der Metallverbindungen zu erhalten. Schließlich tragen Schwankungen im Wasserstoffgehalt zu Veränderungen der elektrischen Eigenschaften der Halbleitermaterialien bei. Dies kann die Leistung und Zuverlässigkeit der ICs beeinträchtigen und zudem einen chemischen Angriffsvektor öffnen. Ein konstanter Wasserstoffgehalt hilft dabei, die elektrischen Eigenschaften stabil zu halten und eine gleichbleibende Leistung zu gewährleisten.

Der seitliche Bereich um den iQRNG bzw. die umfasste Entropiequelle herum kann durch eine entsprechende Tiefendotierung des Substrats bzw. dessen Ausgestaltung als leitfähiger Bereich erfolgen. Eine solche Anordnung kann analog zu einer Metallisierung der Oberflächen des Substrats gleichzeitig zur Tiefenkontaktierung von innerhalb des Substrats liegenden Bereichen, wie beispielsweise zur Kontaktierung von vergrabenen Schichten, genutzt werden.

Zur Vermeidung zusätzlicher elektromagnetischer Abstrahlungen aus diesen Strukturen heraus werden diese jedoch vorzugsweise nicht zur Übertragung von modulierten Signalen genutzt. In den in den Figuren gezeigten beispielhaften Ausführungsformen erfindungsgemäßer iQRNG ist dieser Schirmungsbereich jeweils als isolierte äußere, sich in vertikaler Richtung von der Oberfläche ausgehend in das Substrat erstreckende Tiefenstrukturen zu erkennen. In einer bevorzugten Ausführungsform eines erfindungsgemäßen iQRNG wird die "Detektorfläche" des Einzelphotonendetektors als kreisrunde Struktur ausgebildet, so dass die seitliche Abschirmung dann vorzugsweise eine geschlossene kreisringförmige Zylinderstruktur ausbildet (die Abschirmung kann jedoch beliebige, vorzugsweise seitlich geschlossene, Formen aufweisen). Eine solche Anordnung einer seitlichen Abschirmung gegenüber elektromagnetischer Strahlung wird auch als sogenannter Seal-Ring (iQRNG-Seal-Ring) bezeichnet.

Ebenfalls zur Abschirmung können die in BCD-Technologien typischerweise ausgebildeten isolierenden Wannenbereiche, hier insbesondere um die Photonenquelle und den Einzelphotonendetektor herum, eingesetzt werden. Diese werden üblicherweise zur elektrischen Isolation verschiedener Gebiete in einem Substrat genutzt, so dass beispielsweise auch unterschiedlich Bezugspotentiale (GND) in diesen Gebieten bereitgestellt werden können. Eine solche lokale Isolation wirkt jedoch auch stromsperrend für Signalübertragungen und kann bei geeigneter Ausbildung der einzelnen Wannengebiete auch eine elektromagnetische Kopplung der isolierten Gebiete untereinander effektiv unterdrücken.

Als weiteres Abschirmelement kann eine übliche Verkapselung eines erfindungsgemäßen iQRNG (bzw. eines einen oder mehrere erfindungsgemäße iQRNG umfassenden ICs) mit einem fachüblichen Vergussmaterial wir Kunststoff erfolgen. Bei dem Kunststoff kann es sich insbesondere um Duroplast handeln. Dem Duroplast kann dabei Siliziumoxid (z. B. $SiO_2$) zur Anpassung des thermischen Ausdehnungskoeffizienten der miteinander verbundenen Materialien hinzugegeben werden.

Vorzugsweise sind mehrere beschriebene iQRNG bzw. ein vielkanaliges QRNG-System umfassend eine Vielzahl beschriebener iQRNG auf dem gleichen Substrat realisiert. Zusammen mit einer kompakten Abschirmung der einzelnen iQRNG lassen sich dabei sehr hohe Integrationsdichten mit einer hohen Anzahl an dicht gepackten, voneinander entkoppelter iQRNG und damit insgesamt hohe effektive Zufallszahlenraten erreichen. Bei iQRNG im Stand der Technik ist die Integrationsdichte vor allem durch die strukturelle Nebeneinanderanordnung der einzelnen Komponenten beschränkt.

Vorzugsweise umfasst ein beschriebener QRNG eine elektronische Schaltung zur Generierung und Ausgabe einer digitalen Zufallszahlenfolge basierend auf der statistischen Auswertung der zeitlichen Abfolge von Signalen des Einzelphotonendetektors.

Ein weiterer Aspekt betrifft eine integrierte elektronische Schaltung (engl. "Integrated Circuit, IC"), umfassend mindestens einen beschriebenen iQRNG. Insbesondere kann es sich dabei um ICs für Anwendungen auf der Basis von sicherheitsrelevanten Chip-basierten Systemen (engl. "System on Chip, SoC") handeln.

Vorzugsweise wird ein beschriebener iQRNG dabei in einen Pad-Rahmen (auch als Pad-Rand bezeichnet) der integrierten elektronischen Schaltung platziert. Bei nicht Pad-bestimmten integrierten elektronischen Schaltungen befinden sich typischerweise im Pad-Rahmen eine Vielzahl an freien Flächen, die jedoch typischerweise nicht für digitale Schaltungen oder größere analoge Schaltungsblöcke genutzt werden können. Da ein beschriebener iQRNG aufgrund seines äußerst kompakten Aufbaus jedoch entsprechend kleinbauend ist und auch die nachfolgende Schaltungstechnik üblicherweise nur eine geringe Anzahl an Gattern umfasst, kann diese Art von QRNG dennoch in einen üblichen Pad-Rahmen integriert werden. Durch den äußerst kompakten Aufbau der beschriebenen iQRNG können dieser auch platzsparend und ohne größeren Aufwand in bereits bestehende Designs für integrierte elektronische Schaltungen implementiert werden. Dadurch wird gegenüber herkömmlichen Ansätzen zur Integration von QRNGs eine signifikante Reduzierung des Flächenverbrauchs erreicht. Die Vorteile eines beschriebenen iQRNG können dabei voll ausgeschöpft werden.

Die Vorteile eines beschriebenen iQRNG gegenüber den bekannten Implementierungen im Stand der Technik basieren vor allem auf der weiteren Miniaturisierung des gesamten Zufallszahlengeneratoraufbaus und die dadurch erreichte hochgradige Integration bzw. Miniaturisierung der erzeugten Strukturen. Aufgrund der vollständigen Isolation der SPS und der zugehörigen SPAD gegenüber der Umgebung kann die Sicherheit der Zufallszahlenerzeugung deutlich erhöht werden. Die gerichtete vertikale Abstrahlung aus der als SPS verwendeten Zener-avLED trägt ebenfalls zur Erhöhung der Sicherheit sowie zu einer wesentlichen Steigerung der Effizienz der Zufallszahlenerzeugung bei. Eine Kointegration einer geeigneten Photonenquelle und eines Einzelphotonendetektors auf dem gleichen vertikalen Layout-Querschnitt eines gemeinsamen Substrats zu realisieren, insbesondere bei Verwendung einer üblicherweise verwendeten kostengünstigen Planartechnologie (d. h. unter Prozessierung nur von einer Substratseite aus und ohne eine Verwendung von anderen aufwändigen Ansätzen, wie etwa Hybrid-Integration, z. B. via eines Chiplet-Ansatzes) ist bisher im Stand der Technik derart nicht möglich gewesen.

Ein mittels einer neuartigen BCD-Technologie bereitgestellter, unterhalb des p-n-Übergangs der SPAD ausgebildeter zweiter tiefliegender p-n-Übergang kann als zusätzlicher Photodetektor zur Überwachung von Angriffen insbesondere von der Rückseite des Substrats ausgehend genutzt werden. Dabei können die Effizienz der optischen Einkopplung in die zugehörigen SPADs sowie die Isolation und die Sicherheit durch die Nutzung von internen Metall- und Silizid-Spiegeln weiter gesteigert werden. Für die verwendeten Zener-avLED als Photonenquelle ist im Vergleich zum Stand der Technik nur eine relativ geringe Betriebsspannung von < 8 V erforderlich. Da zudem die Absorptionslänge des emittierten sichtbaren Lichts im Silizium gering (d. h. der zugehörige Absorptionskoeffizient hoch) ist, kann auch eine sehr gute optische Isolation zwischen benachbarten Elementen erzielt werden. Dies ermöglicht die Anordnung in einem Array mit hoher Zellendichte und einer daraus folgenden entsprechend hohen Erzeugungs- bzw. Entropierate.

Weitere Aspekte der vorliegenden Erfindung sind in den abhängigen Ansprüchen oder in der folgenden Beschreibung der Zeichnungen offenbart.

## Kurze Beschreibung der Figuren

Die Erfindung wird nachfolgend in Ausführungsbeispielen anhand der zugehörigen Zeichnungen erläutert. Es zeigen:

Figur 1 ein vernetztes Computersystem gemäß einer bevorzugten Ausführungsform der vorliegenden Erfindung;

Figur 2 zeigt ein vernetztes Computersystem gemäß einer bevorzugten Ausführungsform der vorliegenden Erfindung;

Figur 3 ein drittes vernetztes Computersystem gemäß einer bevorzugten Ausführungsform der vorliegenden Erfindung;

Figur 4 ein E-Mail-Nachrichtenformat gemäß einer bevorzugten Ausführungsform der vorliegenden Erfindung;

Figur 5 ein weiteres Computernetzwerk gemäß einer bevorzugten Ausführungsform der vorliegenden Erfindung;

Figur 6 ein reines HTTP-E-Mail-System gemäß einer bevorzugten Ausführungsform der vorliegenden Erfindung;

Figuren 7 ein Ablaufdiagramm, das die Funktionsweise des E-Mail-Systems von FIG. 6 veranschaulicht;

Figur 8 eine schematische Darstellung einer ersten Ausführungsform eines iQRNG gemäß Stand der Technik in der Aufsicht;

Figur 9 eine schematische Darstellung einer zweiten Ausführungsform eines iQRNG gemäß Stand der Technik in einer Seitenansicht;

Figur 10 eine schematische Darstellung eines mit einem Verfahren zur Bereitstellung tiefliegender p-n-Übergänge in einem BCD-Prozess bereitgestellten BCD-Substrats und eine TCAD-Darstellung der resultierenden Dotierstoffverteilung;

Figur 11    eine schematische Darstellung einer beispielhaften ersten Ausführungsform eines beschriebenen iQRNG;

Figur 12    eine schematische Darstellung einer beispielhaften zweiten Ausführungsform eines beschriebenen iQRNG;

Figur 13    eine schematische Darstellung einer beispielhaften dritten Ausführungsform eines beschriebenen iQRNG;

Figur 14    graphische Darstellung der Abhängigkeit des a) SPAD-Stroms und b) des Verhältnisses zwischen SPAD-Strom und Zener-Strom in Abhängigkeit von der Zener-Sperrspannung bei verschiedenen SPAD-Sperrspannungen (kleiner, gleich, größer der Durchbruchspannung) innerhalb eines beschriebenen iQRNGs;

Figur 15    eine schematische Darstellung einer beispielhaften elektronischen Schaltung eines Quantenzufallsgenerators zur Generierung und Ausgabe einer digitalen Zufallszahlenfolge; und

Figur 16    eine schematische Darstellung eines beispielhaften Layouts einer integrierten elektronischen Schaltung mit einem beschriebenen iQRNG im Pad-Rahmen in der Aufsicht.

## Detaillierte Beschreibung der Figuren

Es werden nun detaillierte Ausführungsformen beschrieben, die beispielhaft in den beigefügten Zeichnungen dargestellt sind. Die Wirkungen und Merkmale dieser Ausführungsformen werden unter Bezugnahme auf die beigefügten Zeichnungen beschrieben. In den Zeichnungen bezeichnen gleiche Bezugsziffern, gleiche Elemente und auf redundante Beschreibungen wird verzichtet. Die vorliegende Offenbarung kann in verschiedenen Formen verwirklicht werden und ist nicht so zu verstehen, dass sie nur auf die hier dargestellten Ausführungsformen beschränkt ist. Vielmehr sind diese Ausführungsformen Beispiele, damit diese Offenbarung gründlich und vollständig ist und dem Fachmann die Aspekte und Merkmale der vorliegenden Offenbarung vollständig vermittelt.

Verfahren, Elemente und Techniken, die für den Fachmann zum vollständigen Verständnis der Aspekte und Merkmale der vorliegenden Offenbarung nicht notwendig sind, werden daher gegebenenfalls nicht beschrieben. In den Zeichnungen können die relativen Größen von Elementen, Schichten und Bereichen zur Verdeutlichung übertrieben dargestellt sein.

Wie hierin verwendet, schließt der Begriff "und/oder" alle Kombinationen von einem oder mehreren der aufgeführten Elemente ein. Ferner bezieht sich die Verwendung von "kann" bei der Beschreibung von Ausführungsformen der vorliegenden Offenbarung auf "eine oder mehrere Ausführungsformen der vorliegenden Offenbarung". In der folgenden Beschreibung von Ausführungsformen können die Begriffe in der Einzahl auch die Mehrzahl umfassen, sofern aus dem Kontext nicht eindeutig etwas Anderes hervorgeht.

Obwohl die Begriffe "erste" und "zweite" zur Beschreibung verschiedener Elemente verwendet werden, sollten diese Elemente nicht durch diese Begriffe eingeschränkt werden. Diese Begriffe werden nur verwendet, um ein Element von einem anderen Element zu unterscheiden. So kann beispielsweise ein erstes Element als zweites Element bezeichnet werden, und ebenso kann ein zweites Element als erstes Element bezeichnet werden, ohne dass dies vom Anwendungsbereich der vorliegenden Offenbarung abweicht. Ausdrücke wie "mindestens eines von", wenn sie einer Liste von Elementen vorangestellt werden, modifizieren die gesamte Liste und nicht nur die einzelnen Elemente der Liste.

Begriffe wie "im Wesentlichen", "ungefähr" und ähnliche werden als Annäherungsbegriffe und nicht als Gradangaben verwendet und sollen die inhärenten Abweichungen bei gemessenen oder berechneten Werten berücksichtigen, die von Fachleuten erkannt werden. Wenn der Begriff "im Wesentlichen" in Verbindung mit einem Merkmal verwendet wird, das durch einen numerischen Wert ausgedrückt werden kann, bezeichnet der Begriff "im Wesentlichen" einen Bereich von zumindest +/- 5 % des Wertes, der auf den Wert zentriert ist.

System-Hardware

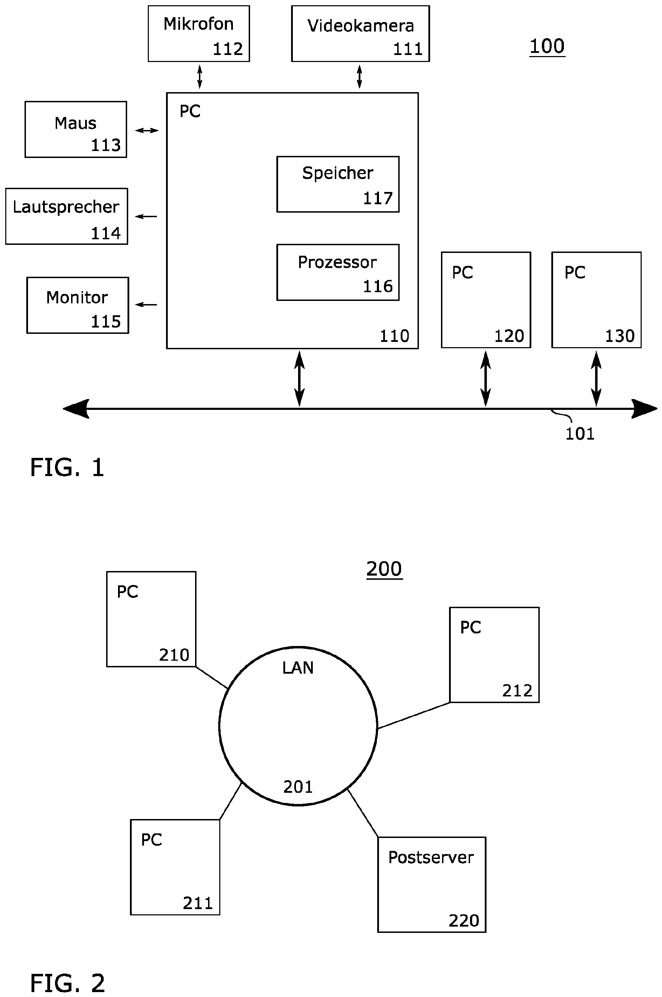

Figur 1 zeigt ein vernetztes Computersystem gemäß einer bevorzugten Ausführungsform der vorliegenden Erfindung. Das vernetzte Computersystem 100 umfasst eine Vielzahl von Knoten oder Arbeitsplatzcomputern ("PCs") 110, 120, 130. Der PC oder Knoten 110 umfasst einen Prozessor 116, einen Speicher 117, eine Videokamera 111, ein Mikrofon 112, eine Maus 113, Lautsprecher 114 und einen Monitor 115. Die Knoten 110, 120, 130 und andere Knoten des Netzes sind über das Medium 101 miteinander verbunden. Das Medium 101 kann beispielsweise ein Kommunikationskanal wie ein integriertes Sprach- und Datennetz ("ISDN") sein. Es versteht sich von selbst, dass verschiedene Knoten eines vernetzten Computersystems über eine Vielzahl von Kommunikationsmedien verbunden sein können, einschließlich lokaler Netzwerke ("LANs"), einfacher analoger Telefonleitungen ("POTS"), die manchmal auch als öffentliches Telefonnetz ("PSTN") bezeichnet werden, und dergleichen. Verschiedene Knotenpunkte eines Netzes können auch Computersystembenutzer darstellen, die über ein Netz wie das Internet miteinander verbunden sind. Wie man sieht, hat jeder Benutzer eines Netzes eine eindeutige Adresse oder Identifikation innerhalb des Netzes. Der Begriff "Benutzer" kann hier austauschbar mit dem Begriff "Knoten" eines Netzes verwendet werden. Somit hat jeder Benutzer, PC oder Knoten eine bestimmte Netzwerkadresse innerhalb eines bestimmten Netzwerks, die den Benutzer oder Knoten eindeutig identifiziert. Diese Netzwerkadresse ist jedoch von einem tatsächlichen menschlichen Benutzer zu unterscheiden, der auch eine eindeutige Adresse haben kann, wie z. B. eine E-Mail-Adresse, die nicht mit der Netzwerkadresse eines bestimmten Knotens des Netzwerks verbunden ist, da menschliche Benutzer oft E-Mail-Nachrichten von beliebigen Knoten innerhalb des Netzwerks abrufen können. Ein menschlicher Nutzer verwendet jedoch zu einem bestimmten Zeitpunkt bei der Nutzung eines Netzes einen bestimmten Knoten mit einer eindeutigen Netzadresse, wie oben beschrieben.

Häufig kann ein solches Netz ein Mehrpunkt-Datenkonferenzsystem sowie die Möglichkeit der Übermittlung von E-Mail-Nachrichten von einem Benutzer zum anderen unterstützen. Eine Vielzahl von sogenannten Multipoint Conferencing Units ("MCUs") kann daher verwendet werden, um Daten zu und von verschiedenen Knoten oder "Endpunkten" des Konferenzsystems zu übertragen. Die Knoten und/oder MCUs können beispielsweise über eine ISDN-Verbindung oder über ein lokales Netzwerk ("LAN") miteinander verbunden sein, zusätzlich zu verschiedenen anderen Kommunikationsmedien wie Knoten, die über das Internet verbunden sind. Die Knoten eines Konferenzsystems können im Allgemeinen direkt mit dem Kommunikationsmedium wie einem LAN oder über eine MCU verbunden sein. Ein Konferenzsystem kann auch andere Knoten oder Elemente wie Router, Server und dergleichen umfassen.

Der Prozessor 116 ist vorzugsweise ein programmierbarer Mehrzweckprozessor, wie z. B. ein Intel® Pentium™-Prozessor. Der Knoten des vernetzten Computersystems 100 kann auch ein spezieller Videoprozessor wie der Intel® 82750PB sein. Die verschiedenen Peripheriegeräte und Komponenten eines Knotens, z. B. des Knotens 110, können sich von denen anderer Knoten unterscheiden. So können die Knoten 120 und 130 identisch oder anders als der Knoten 110 konfiguriert sein. Es versteht sich ferner, dass ein Knoten auf jedem geeigneten Computersystem und nicht nur Arbeitsplatzcomputern implementiert werden kann.

Figur 2 zeigt ein vernetztes Computersystem gemäß einer bevorzugten Ausführungsform der vorliegenden Erfindung. Das System 200 zeigt ein Netzwerk, wie z. B. ein LAN 201, das dazu verwendet werden kann, eine Vielzahl von Benutzern miteinander zu verbinden, die miteinander kommunizieren können, z. B. mit E-Mail-Nachrichten. An das LAN 201 ist eine Vielzahl von Benutzern wie die PCs 210, 211, 212 angeschlossen. Ein Benutzer kann auch über einen Server oder andere Mittel (nicht dargestellt) mit dem LAN verbunden sein. Wie man sieht, umfasst das System 200 auch andere Arten von Knoten oder Elementen, z. B. den zentralen Postserver 220 und andere Router, Server und Knoten. Ein Postserver ist ein spezieller Servertyp, der typischerweise ein Verzeichnis der Benutzer oder einer Untergruppe von Benutzern in dem LAN hat, an das der Postserver angeschlossen ist, und der als Aufbewahrungsort für eingehende Post für seine Benutzer dient. Bei E-Mail-Techniken des Standes der Technik überträgt ein sendender Benutzer, wie z. B. PC 210, der eine E-Mail-Nachricht mit einem oder mehreren Anhängen an einen Empfänger, wie z. B. PC 212, senden möchte, die E-Mail-Nachricht plus Anhang an LAN 220 zur Zustellung an PC 212. Die Nachricht und der Anhang werden zentral auf dem Postserver 220 gespeichert, der dann über das LAN 201 an den PC 212 kommuniziert, um den Benutzer von PC 201 darüber zu informieren, dass er eine E-Mail erhalten hat. Wenn der Benutzer von PC 212, beispielsweise mit einem mit dem LAN 201 kompatiblen E-Mail-Anwendungsprogramm, auf den Postserver 2020 zugreift, werden die E-Mail-Nachricht und ein eventuell ausgewählter Anhang vom zentralen Postserver 220 über das LAN 201 an den PC 212 übertragen.

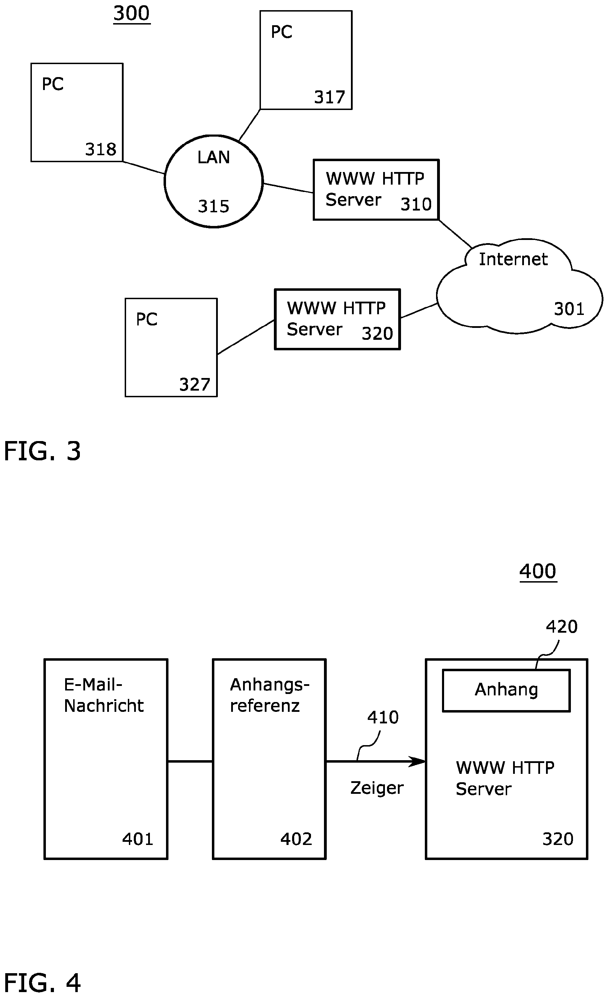

Wie oben erläutert, kann dies zu Bandbreitenproblemen führen. Zum Beispiel kann es sein, dass der Postserver 220 eine sehr große Anzahl von E-Mail-Nachrichten und Anhängen speichern muss, da verschiedene Nutzer des Netzes sich gegenseitig E-Mail-Nachrichten schicken. Dies kann erhebliche Mengen an Verarbeitungsbandbreite des Postservers 220 in Anspruch nehmen und erfordert auch Kommunikationsbandbreite des LAN 201, um solche Daten zum und vom Postserver 220 zu übertragen. Weiterhin könne mehrere LANs wie das System 200 oder andere Netzwerke oder Benutzer über andere Netzwerkverbindungen wie WAN-Verbindungen ebenfalls miteinander verbunden werden. Beispielsweise kann der Postserver 220 Nachrichten an und von seinen eigenen Benutzern wie den PCs 210, 211, 212 an andere bestimmte Benutzer senden und empfangen, die mit einem anderen Postserver eines anderen LAN (nicht dargestellt) verbunden sind. Eine solche Verknüpfung von LANs über WAN- oder andere Verbindungen ist in dem Beispielsystem von FIG. 3 dargestellt.

Figur 3 zeigt ein drittes vernetztes Computersystem gemäß einer bevorzugten Ausführungsform der vorliegenden Erfindung. Das System 300 zeigt ein WWW-System, das über ein Backbone-Kommunikationsnetz wie das Verbindungsnetz (Internet) 301 kommuniziert, das zur Verbindung einer Vielzahl von Benutzern verwendet werden kann, die miteinander kommunizieren können, z. B. mit E-Mail-Nachrichten. Das WWW ist eine Reihe von Protokollen, die auf dem Internet 301 aufsetzen und den Betrieb einer grafischen Benutzerschnittstelle für den Zugriff auf Informationen über das Internet ermöglichen. An das Internet 301 im WWW ist eine Vielzahl von Benutzern, wie z. B. PCs 317, 318, 327, angeschlossen. Typischerweise ist ein Benutzer über einen WWW-Hypertext-Transportprotokoll ("HTTP")-Server wie die Server 310, 320 mit anderen Knotenpunkten des WWW verbunden. Das WWW ist eine verteilte Anwendung, die durch das WWW-HTTP-Protokoll gekennzeichnet ist, das auf dem Internet-Übertragungs- und Steuerungsprotokoll / Internetprotokoll ("TCP/IP") aufbaut. Das WWW kann also durch eine Reihe von Protokollen (d. h. HTTP) charakterisiert werden, die auf dem Internet als "Rückgrat" laufen. Ein WebBrowser ist eine Anwendung eines Netzbenutzers, die es in WWW-kompatiblen Netzsystemen ermöglicht, besagte Informationen zu betrachten, und die es dem Benutzer erlaubt, grafische und textbasierte Dateien zu durchsuchen, die über "Hypertext"-Links miteinander verbunden sind, welche wiederrum in Dokumente oder Dateien eingebettet sind, die von Servern im Netz verfügbar sind, die HTTP verstehen. Wenn eine bestimmte Webseite von einem Benutzer von einer anderen Quelle im Internet abgerufen wird, kann das abgerufene Dokument verschiedene Hypertext-Links enthalten, und es wird eine lokale Kopie der Webseite für den Benutzer erstellt. Wenn also ein Benutzer auf einen Hypertext-Link klickt, reichen die lokal gespeicherten Informationen in Bezug auf den ausgewählten Hypertext-Link in der Regel aus, damit der Rechner des Benutzers eine Verbindung über das Internet zu dem durch den Hypertext-Link angegebenen Server herstellen kann.

Es kann mehr als ein Benutzer mit jedem HTTP-Server verbunden sein, zum Beispiel über ein LAN wie das LAN 315, wie in Bezug auf den WWW-HTTP-Server 310 dargestellt. Das System 300 kann auch andere Arten von Knoten oder Elementen umfassen. Bei E-Mail-Techniken nach dem Stand der Technik überträgt ein sendender Benutzer eines Netzwerks, der eine E-Mail-Nachricht mit einem oder mehreren Anhängen an einen Empfänger im Netzwerk senden möchte, die E-Mail-Nachricht plus Anhang über das Netzwerk (z. B. ein Netzwerk wie das Internet 301) über verschiedene Verbindungen und Knoten des Netzwerks, bis sie den empfangenden Benutzer erreicht.

Bei einem WWW-HTTP-Server handelt es sich eine Anwendung, die auf einem Rechner, z. B. einem PC oder in einem Rechenzentrum läuft. Somit kann jeder Benutzer auch als "Server" betrachtet werden, wie in Bezug auf den PC 327 dargestellt. Alternativ kann ein "Server" auch als ein Server wie der WWW-HTTP-Server 310 betrachtet werden, der den Zugang zum Netz für ein LAN oder eine Vielzahl von Knoten oder eine Vielzahl von LANs bereitstellt.

Ein Problem bei der automatischen originären Übertragung von Anhängen ist, dass viele Anhänge vom Empfänger der E-Mail nie gelesen, angesehen oder anderweitig genutzt werden. Daher werden die Ressourcen für den Speicherplatz, die Verarbeitungsbandbreite und die Kommunikationsbandbreite, die für die Übertragung des Anhangs an den Empfänger benötigt werden, oft ineffizient genutzt. In Netzwerken wie dem vernetzten Computersystem 200 kann dies zu einer ineffizienten Nutzung der Speicher- und Verarbeitungsbandbreite eines zentralisierten Postservers und der Kommunikationsbandbreite des Netzwerks führen. In Netzwerken wie dem Computersystem 300 kann wiederum das Verbindungsnetz 301 ineffizient genutzt werden, da Nachrichten übertragen werden, die vom Empfänger nie verwendet werden, was unnötig Verarbeitungs- und Kommunikationsressourcen verbraucht. Daher werden bei einer erfindungsgemäßen Vorrichtung zur Übertragung von elektronischer Post Dateien durch Referenzieren anstatt durch eine originäre Übertragung angehängt, wie im Folgenden näher beschrieben wird.

E-Mail-Anhänge mit Anhangsreferenz

Figur 4 zeigt ein E-Mail-Nachrichtenformat 400 gemäß einer bevorzugten Ausführungsform der vorliegenden Erfindung. In dem E-Mail-Nachrichtenformat 400 der vorliegenden Erfindung, wenn ein Benutzer, wie beispielsweise PC 210 von FIG. 2, ein Anhang mit einer E-Mail-Nachricht an einen Benutzer, wie beispielweise PC 212 senden möchte, ist die E-Mail-Nachricht 401 lediglich zusammen mit einer relativ kleinen Anhangsreferenz 402 übertragen, anstatt tatsächlich den gesamte originäre Anhang zusammen mit E-Mail-Nachricht 401, wie es E-Mail-Techniken nach dem Stand der Technik erforderlich wäre. Anstatt den originären Anhang vollständig zu übertragen, wird der Anhang in diesem Fall also lediglich als Referenzbezug übertragen. Wie zu erkennen sein wird, umfasst die Anhangsreferenz 402 einen Zeiger (kann im Allgemeinen auch als Pointer, Verweis, Link oder Referenz bezeichnet werden) 410, der auf den tatsächlichen Speicherort des Anhangs 420 verweist. In einer bevorzugten Ausführungsform ist der Speicherort des Anhangs 420 typischerweise ein Speichermedium, das sich relativ nah (d. h. relativ lokal) am sendenden Benutzer befindet, so dass weniger Netzwerkressourcen für die Übertragung und Speicherung des Anhangs verwendet werden, insbesondere dann, wenn ein Empfänger den Anhang nicht benötigt.

Auf diese Weise muss der in der Anhangsreferenz 402 referenzierte Anhang nur "lokal" beim sendenden Benutzer gespeichert werden, was bedeutet, dass der Anhang nicht über so viele Netzwerkverbindungen und -elemente übertragen werden muss, wie es nötig wäre, wenn der originäre Anhang unmittelbar an den empfangenden Benutzer zu übertragen wäre. Um den Anhang 420 lokal in einem System zu speichern, das mindestens einen zentralen Postserver verwendet, wie das System 200, kann der Anhang auf dem PC 210 selbst gespeichert werden (maximale Lokalität). Der PC 210 muss daher für das LAN 201 "sichtbar" sein, so dass ein Empfänger wie der PC 212 den Anhang 420 bei Bedarf über das LAN 201 unter Verwendung der Anhangsreferenz 402 von dem PC 210 abrufen kann.

Ein Anhang oder eine E-Mail kann auch an mehrere Benutzer verteilt werden. Zum Beispiel kann die E-Mail-Nachricht 401 von PC 210 über das LAN 201 an den PC 212 und den PC 211 übertragen werden. Wie zu erkennen ist, kann die E-Mail-Nachricht 401 dabei vorübergehend im zentralen Postserver 220 gespeichert werden, bevor sie über LAN 201 an die PCs 211 und 212 weitergeleitet wird. Wenn der Benutzer von PC 210 auch einen Anhang 420 anhängen möchte, werden dieser Anhang 420 und die E-Mail-Nachricht 401 erstellt, aber der Anhang 420 wird weder an die Poststelle 220 noch an die PCs 211 oder 212 über LAN 201 übertragen. Vielmehr wird zu diesem Zeitpunkt der Anhang 420 im PC 210 selbst oder in einer zugehörigen oder angeschlossenen Speichereinrichtung gespeichert, und die Anhangsreferenz 402 wird erstellt, um als Anhang mit der E-Mail-Nachricht 401 an die Empfänger-PCs 211, 212 übertragen zu werden. Je nach Konfiguration des E-Mail-Systems für das LAN 201 und seine Benutzerknoten werden die E-Mail-Nachricht 401 und die Anhangsreferenz 402 standardmäßig an die Empfänger-PCs 211 und 212 übertragen, z. B. entweder direkt, über das LAN 201 oder über einen Vermittlungsknoten des Postservers 220.

Wenn der Benutzer eines beliebigen Empfänger-PCs 211 oder 212 auf den Anhang zugreifen möchte, ermöglicht die Anhangsreferenz 402 dem lokalen Empfänger-PC, den Anhang 420 direkt über LAN 201 abzurufen, wo er im PC 210 gespeichert ist. In einer bevorzugten Ausführungsform muss dieser Abruf des Anhangs 420 nicht über das Postamt 220 erfolgen.

Zur lokalen Speicherung des Anhangs 420 in einem System, in dem die Benutzer über lokale Server mit einem Netzwerk verbunden sind, wie z. B. im System 300, kann der Anhang 420 wie in FIG. 4 dargestellt auch auf dem lokalen WWW-HTTP-Server gespeichert werden. Wenn der PC 327 beispielsweise die E-Mail-Nachricht 401 und den Anhang 420 an den PC 317 übermitteln möchte, kann der Anhang 420 in einem Dateiserver des WWW-HTTP-Servers 320 gespeichert werden, der für das WWW über das Internet 301 "sichtbar" ist, und es wird eine Anhangsreferenz 402 erzeugt, der einen sogenannten Uniform Resource Locator ("URL") als Zeiger 410 auf den Speicherort des Anhangs 420 innerhalb des WWW-HTTP-Servers 320 umfasst. Die E-Mail-Nachricht 401 mit der angehängten Anhangsreferenz 402 kann dann über das Internet 301 in der üblichen Weise an den Empfänger-PC 317 übertragen werden, und der PC 317 kann die Anhangsreferenz 402 verwenden, um bei Bedarf auf den Anhang 420 zuzugreifen.

Auf diese Weise werden Netzwerkbandbreite und -ressourcen effizienter genutzt, da der Anhang 420 nur dann tatsächlich über das Netzwerk übertragen werden muss, wenn ein Empfänger der entsprechenden E-Mail-Nachricht 401 daran interessiert ist, den Anhang 420 anzusehen oder anderweitig zu nutzen.

In einer bevorzugten Ausführungsform sind Anhangsreferenzen relativ klein und ungefähr konstant in ihrer Größe, beispielsweise in der Größenordnung von etwa 100 bis 200 Byte. Der eigentliche Anhang, z. B. der Anhang 420 des E-Mail-Formats 400, kann in einem Dateispeicher gespeichert werden, der mit dem LAN 201 verbunden und für jeden mit dem LAN 201 verbundenen Server oder Benutzer sichtbar ist, so dass der PC eines jeden Empfängers den Anhang 420 abrufen kann, falls gewünscht. Die Verbindung zu einem Knoten, der für das Netzwerk "sichtbar" ist, wird manchmal auch als Öffnen eines Sockets für den entsprechenden Knoten bezeichnet. Die Anhangsreferenz 402 kann somit eine entsprechende Dateireferenz, die zum Auffinden des Anhangs 420 geeignet ist, umfassen. Wenn beispielsweise das LAN 201 als Netzwerk unter einem WWW-kompatiblen Netzwerkstandard dient (z. B. unter Verwendung von TCP/IP und dem WWW HTTP), kann die Anhangsreferenz 402 eine WWW-artigen Dateireferenz umfassen, welche als Uniform Resource Locator ("URL") bezeichnet wird und auf die eigentliche Datei des Anhangs 420 verweist oder zeigt. Die Anhangsreferenz 402 kann somit entweder einen logischer Zeiger oder einen logischen Pfad, der angibt, wo sich der Anhang oder eine Kopie desselben befindet, darstellen. Insbesondere stellt eine URL einen logischen Pfad dar, der im WWW HTTP verwendet wird. Die Anhangsreferenz 402 kann auch Informationen enthalten, die angeben, welche Optionen verwendet wurden, um den gespeicherten Anhang 420 zu erstellen, z. B. ob und/oder wie der Anhangs 420 komprimiert oder verschlüsselt ist.

Wie deutlich wird, kann der Anhang 420 komprimiert (um den Speicherplatz und die verbrauchte Netzwerkbandbreite zu minimieren) und/oder verschlüsselt (zum Schutz der Privatsphäre) werden, bevor er beispielsweise auf dem WWW-HTTP-Server 221 gespeichert oder vom WWW-HTTP-Server 221 an den jeweiligen WWW-HTTP-Server des Empfänger-PCs übertragen wird. Wenn die E-Mail-Nachricht 401 und die Anhangsreferenz 402 von einem Benutzer des Netzes wie dem Benutzer des PC 212 empfangen werden, kann ein auf dem PC 212 laufendes Anwendungsprogramm den Anhang 420 unter Verwendung der Anhangsreferenz 402 abrufen. Selbstverständlich kann der Anhang 420 für den Benutzer des PC 212 angezeigt werden. Zum Beispiel kann der Benutzer von PC 212 darüber informiert werden, dass als Anhang 420 an eine kürzlich empfangene E-Mail-Nachricht 401 eine Datei "angehängt" ist. Wenn der Benutzer beschließt, den Anhang 420 anzusehen, zu starten, zu kopieren oder anderweitig zu nutzen, liest der PC 212 eine Kopie des Anhangs 420 vom WWW-HTTP-Server 221, dekomprimiert und entschlüsselt den Anhang 420 wie erforderlich, erstellt eine lokale Kopie des Anhangs 420, so als ob der Anhang 420 ursprünglich originär an die E-Mail-Nachricht 401 angehängt worden wäre, und startet die entsprechende Anwendung, die dem Dateityp des Anhangs 420 entspricht (z. B. kann ein grafisches Betrachtungsprogramm gestartet werden, um die Betrachtung des Anhangs 420 zu ermöglichen, wenn der Anhang 420 eine Grafikdatei ist). Im Allgemeinen muss ein Absender wie der PC 210 Zugang zu einem Netzwerkserver haben, damit er den Anhang 420 in einem Verzeichnis auf dem Netzwerkserver speichern kann, wobei das Verzeichnis, in dem der Anhang 420 gespeichert ist, für das Netzwerk über den Netzwerkserver sichtbar ist, so dass die Anhang 420 für die Empfänger im Netzwerk zugänglich ist.

Anstatt dass der Anhang 420 für den Benutzer des PC 212 angezeigt wird, kann dem Benutzer alternativ auch die Möglichkeit gegeben werden, zunächst Informationen über den gespeicherten Anhang 420 einzusehen, bevor er sich entscheidet, diesen Anhang tatsächlich abzurufen. Darüber hinaus kann ein Anhang 420 in alternativen bevorzugten Ausführungsformen automatisch gelöscht werden, nachdem der Empfänger oder alle Empfänger darauf zugegriffen haben, wenn mehrere Empfänger die E-Mail-Nachricht erhalten haben, oder nach einer bestimmten Zeitspanne, z. B. nach einer bestimmten Zeitspanne wie etwa 90 Tagen. Ein weiterer Vorteil der vorliegenden Erfindung ist, dass der lokal gespeicherte Anhang 420 in einigen Ausführungsformen bei Bedarf aktualisiert werden kann, und zwar in einigen Fällen, bevor ein Empfänger beschlossen hat, den Anhang zu herunterzuladen oder zu lesen. Obwohl also ein Anhang zu einem bestimmten Zeitpunkt verteilt wird, bevor spätere Änderungen vorgenommen werden, können zumindest einige beabsichtigte Empfänger eine aktuellere Kopie des Anhangs erhalten, wenn sie sich schließlich entscheiden, den E-Mail-Anhang zu lesen.

Da der Anhang 420 auf einem WWW-HTTP-Server oder anderweitig in einem für den sendenden Benutzer lokalen, aber für andere Benutzer des Netzes sichtbaren Datenspeicher gespeichert wird, kann es wünschenswert sein, sicherzustellen, dass unbefugte WWW-Benutzer, die den WWW-HTTP-Server durchsuchen, keine brauchbare Kopie des Anhangs 420 erhalten können. Um dies zu erreichen, wird den Anhang 420 in verschlüsselter Form gespeichert. Ein Verschlüsselungsschlüssel wird mit der ursprünglichen E-Mail-Nachricht 401 übertragen (z. B. in der E-Mail-Nachricht 401, in der die Anhangsreferenz 402 gespeichert ist oder als separater Entschlüsselungsschlüssel-Anhang an die E-Mail-Nachricht 401 oder an die Anhangsreferenz 402 angehängt). Auf diese Weise kann ein unbefugter Benutzer den eigentlichen Inhalt des Anhangs 420 nicht entschlüsseln, während ein Empfänger der E-Mail-Nachricht 401, für den der Zugriff auf den Anhang 420 vorgesehen ist, auf den Anhang 420 zugreifen kann, da die E-Mail-Nachricht 401 von dem entsprechenden Entschlüsselungsschlüssel begleitet wird. Natürlich können auch andere Verschlüsselungstechniken für diese und ähnliche Zwecke verwendet werden, wie z. B. Techniken mit öffentlichem/privatem Schlüssel, die es auch ermöglichen, Anhänge zu Authentifizierungszwecken und zur Überprüfung der Integrität des Anhangs digital zu signieren.

Insbesondere umfasst eine erfindungsgemäßes Vorrichtung (bzw. eine entsprechendes System) Mittel zum Verschlüsseln des Anhangs vor einem Speichern des Anhangs in der Speichereinrichtung und zum Bereitstellen eines Verschlüsselungsschlüssels zum Entschlüsseln des Anhangs; und kann weiterhin Mittel zum Übertragen der Anhangsreferenz und des Verschlüsselungscodes an den mindestens einen Empfänger umfassen, wobei das Mittel zum Verschlüsseln ein Quantenzufallsgenerator umfasst oder auf einen solchen zur Ausführung seiner kryptographischen Aufgaben zugreifen kann. Der Quantenzufallsgenerator (vgl. FIG. 15, BZ 1400) kann einen beschriebenen QRNG, bevorzugt einen beschriebenen iQRNG (vgl. FIG. 11-13, BZ 1200) umfassen.

Wie zu verstehen ist, können in alternativen, bevorzugten Ausführungsformen der vorliegenden Erfindung mehrere Anhänge an eine E-Mail-Nachricht gemäß der vorliegenden Erfindung angehängt werden. In diesem Fall kann eine entsprechende Vielzahl von Anhangsreferenzen an die E-Mail-Nachricht angehängt werden, um einem Empfänger einen unabhängigen Zugriff auf eine oder alle der Anhänge zu ermöglichen. In weiteren alternativen bevorzugten Ausführungsformen kann eine Anhangsreferenz an einen Empfänger übermittelt werden, ohne eine E-Mail-Nachricht zu begleiten, so dass eine E-Mail-Nachricht selbst die Anhangsreferenz enthält.

Es werden auch ein System und ein Verfahren bereitgestellt, mit denen ein E-Mail-System entscheiden kann, ob ein Anhang an eine E-Mail-Nachricht mittels Referenz oder als originärer Anhang angehängt werden soll. Es ist offensichtlich, dass die Verwendung eines automatischen Anhangs mittels Referenz an jede übertragene E-Mail-Nachricht dazu führen kann, dass die Belastung des Netzes steigt. Im vorliegenden E-Mail-System kann die Entscheidung, ob ein bestimmter Anhang per Verweis oder originär verteilt werden soll, beispielsweise durch die Festlegung eines Kostenfaktors getroffen werden, wie im Folgenden näher erläutert wird.

E-Mail System Filter für originäre Anhänge oder Anhangsreferenz

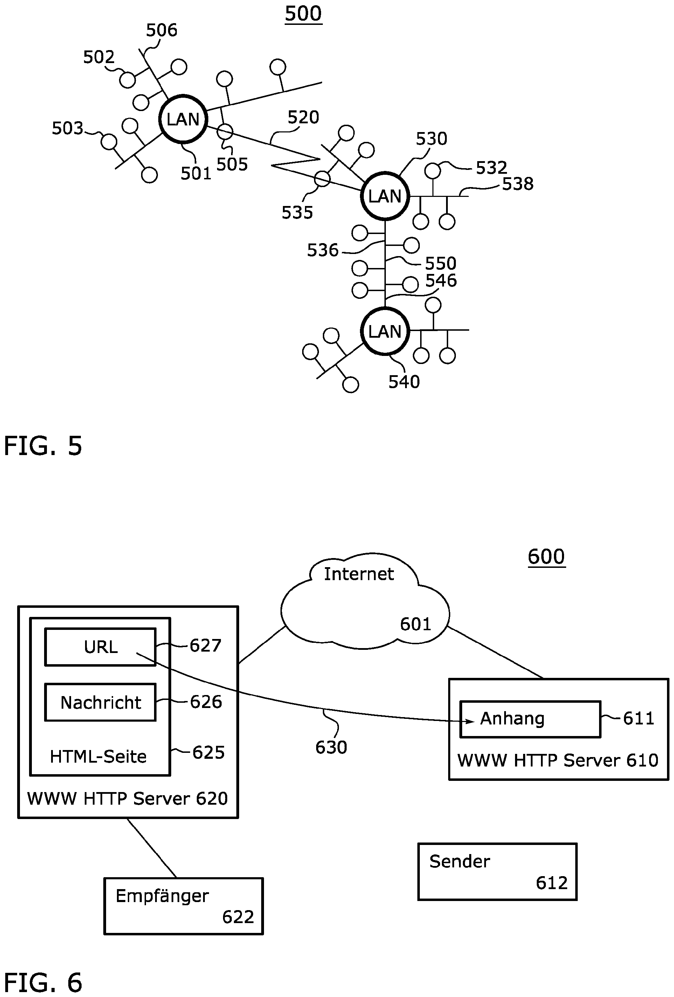

Figur 5 zeigt ein weiteres Computernetzwerk gemäß einer bevorzugten Ausführungsform der vorliegenden Erfindung. Wie dargestellt, umfasst das Netzwerk 500 eine Vielzahl von LANs wie die LANs 501, 530, 540. Das LAN 501 verbindet eine Vielzahl lokaler Benutzer wie den Absender 502 und den Empfänger 503 miteinander. Die von jedem LAN ausgehenden Leitungen stellen Subnetze wie das Subnetz 506 dar, welches eine Teilmenge der LAN-Benutzer mit dem LAN verbinden. Verschiedene LANs sind in der Regel über WAN-Verbindungen wie die WAN-Verbindung 520 miteinander verbunden. Einige LANs können auch über gekoppelte Subnetze miteinander verbunden sein, wie dies bei der Kopplung des Subnetzes 536 des LAN 530 mit dem Subnetz 546 des LAN 540 an der Verbindungsstelle 550 dargestellt ist. Zum Zweck der Übertragung von E-Mail-Nachrichten und Anhängen an und von Benutzern in verschiedenen LANs werden wie in FIG. 5 dargestellt Postserver wie die Postserver 505 und 535 verwendet, um eine Schnittstelle über die WAN-Verbindung 520 bereitzustellen. Wie man sieht, kann in einigen LANs mehr als ein Postserver verwendet werden, um eine Teilmenge der Benutzer des LANs zu bearbeiten. So kann ein Absender 502 eine E-Mail an einen Empfänger 503 im selben LAN übermitteln, indem er die Dienste des LAN 501 und des Postservers 505 in Anspruch nimmt, wie weiter oben bereits beschrieben wurde.

Häufig möchte jedoch ein Benutzer wie der Absender 502 eine E-Mail an einen Empfänger wie den Empfänger 532 senden, der sich in einem anderen LAN befindet. In diesem Fall wird typischerweise eine E-Mail-Nachricht vom Absender 502 über das Subnetz 506 an das LAN 501 und von dort aus an den Postserver 505 übertragen. Der Postserver 505 überträgt die E-Mail-Nachricht dann weiter über das WAN 520 an den Postserver 535, welcher die E-Mail dann über sein jeweiliges Subnetz 538 an den Empfänger 532 zustellt. Alternativ kann, wenn jeder Postserver 505, 535 zentralisiert arbeitet, so dass er den Inhalt von E-Mail-Nachrichten speichert, die von lokalen Benutzern des jeweiligen LAN gelesen werden, der Hauptverkehr zwischen den Postämtern und über WANs stattfinden, anstatt zu oder von den einzelnen Benutzern über ihre lokalen LANs. Das WAN 520 kann ein verteiltes Netz wie das Internet oder ein anderes Kommunikationsmedium umfassen. Daher müssen möglicherweise mehrere LANs und Postserver passiert werden, bevor eine E-Mail-Nachricht ihr endgültiges Ziel-LAN und den Empfänger erreicht.

Bei der vorliegenden Erfindung können die Postserver des Netzwerksystems einen originären Anhang in eine Anhangsreferenz umwandeln und umgekehrt. Eine Anhangsreferenz, kann den Bandbreitenverbrauch des Netzwerks reduzieren, wenn die verfügbare Bandbreite im Netzwerk begrenzt ist, zum Beispiel auf kostspieligen Verbindungen des Netzwerks wie T-1 WAN-Verbindungen, die üblicherweise als Teil von Unternehmensnetzwerk-Backbones zwischen unterschiedlichen Standorten verwendet werden. Beispielsweise kann die WAN-Verbindung 520 in FIG. 5 eine solche T-1 WAN-Verbindung umfassen. Einige LANs oder Postserver können jedoch auch über relativ kostengünstige Hochgeschwindigkeitsnetzwerke miteinander verbunden sein, z. B. durch die Kopplung von Subnetzen, wie oben in Bezug auf die LANs 530, 540 beschrieben. Wenn der Netzwerkverkehr die WAN-Verbindung oder eine andere Netzwerkverbindung mit begrenzter Bandbreite einschränken würde, ist es wichtig, die Anzahl der Kopien zu begrenzen, die diese Verbindung passieren. Wie oben beschrieben, kann die Verwendung von Anhangsreferenzen nützlich sein, um dieses Problem zu lösen.

Wenn sich in einem System, in dem eine originärer Anhangsübertragung verwendet wird, alle relevanten Benutzer in einem einzigen Netzwerk oder LAN mit hoher Bandbreite befinden, dann werden die Kosten, die mit der originärer Anhangsübertragung an E-Mail-Nachrichten verbunden sind, von den Speicherkosten dominiert, die durch die Aufbewahrung separater Kopien von Anhängen für jeden Empfänger des Anhangs entstehen. Ist die Bandbreite des Netzes begrenzt, so werden diese Kosten von den Kosten der Netzbelastung dominiert. Die Methode des Übermittelns eines Anhangs als Anhangsreferenz kann jedoch mit dem gleichen Problem einhergehen das Übermittelns eines originären Anhangs, wenn zu viele Empfänger einer E-Mail-Nachricht nur über eine kostenintensive Verbindung im Netz erreichbar sind. Für den Fall, dass jeder Empfänger beschließt, eine per Anhangsreferenz angehängte Anhangsdatei anzusehen oder anderweitig darauf zuzugreifen, sie abzurufen oder zu verwenden, kann die Methode des Übermittelns eines Anhangs als Anhangsreferenz im schlimmsten Fall letztlich den gleich Aufwand verursachen wie das direkte Übermitteln eines originären Anhangs, da für jeden Empfänger eine separate Kopie des Anhangs die kostenintensive Verbindung im Netz übertragen werden muss. Allerdings kann die Häufigkeit solcher Worst-Case-Szenarios minimiert werden, wenn zwischenspeichernde Proxy-Server verwendet werden, bei denen z. B. ein Server des Netzwerks, der hinsichtlich der Kosten näher an einem Empfänger liegt, für eine gewisse Zeit eine Kopie des Anhangs zurückbehalten, wenn er den Anhang an einen Empfänger der E-Mail-Nachricht weiterleitet, so dass die Kopie in einigen Fällen auch an einen nachfolgenden Empfänger gesendet werden kann, der den Anhang ebenfalls anfordert, ohne dass der Anhang von seinem ursprünglichen Speicherort abgerufen werden muss, der hinsichtlich der Kosten weiter entfernt ist als der vorübergehende Ort der Zwischenspeicherung. Wenn beispielsweise zehn an das LAN 530 angeschlossene Benutzer als Empfänger einer vom Absender 502 gesendeten E-Mail-Nachricht aufgeführt sind und jeder dieser Empfänger auf den Anhang zugreift, der per Anhangsreferenz angehängt ist, dann müssten eigentlich zehn Abrufe des Anhangs über die WAN-Verbindung 520 vorgenommen werden. In diesem Fall wäre es möglicherweise effektiver und kommunikationstechnisch günstiger gewesen, die gesamte E-Mail mit originärem Anhang an den Postserver 535 zu übermitteln, woraufhin der Postserver 535 die E-Mail und den Anhang effizienter an alle zehn lokalen Empfänger verteilen hätte können, da nur eine Nutzung der WAN-Verbindung 520 erforderlich gewesen wäre, um einen relativ großen E-Mail-Anhang zu übertragen.

Dieses Problem kann bei Verwendung eines E-Mail-Systems mit Anhangsreferenz dadurch gelöst werden, dass der Anhang an einen Ort im Netz kopiert wird, an dem die Kosten für das Abrufen des Anhangs wahrscheinlich geringer sind. Im Allgemeinen wird dieser Ort in der vorliegenden Anwendung als Replikationspunkt (oder Dateireplikationspunkt) bezeichnet, wie z. B. ein Postserver. Wenn beispielsweise eine Anhangsreferenz, die einer E-Mail-Nachricht beigefügt ist, über eine WAN-Verbindung wie die WAN-Verbindung 520 übermittelt wird, erstellt der Postserver auf der Empfängerseite der WAN-Verbindung (z. B. Postserver 535) automatisch eine Kopie des Anhangs in der empfangenden Poststelle, indem sie den Anhang von dem Ort abruft, auf den die Anhangsreferenz verweist. Der empfangende Postserver ändert auch alle Anhangsreferenzen, um auf die neu erstellte Kopie zu verweisen, die vom empfangenden Postserver verwaltet wird. Wie oben beschrieben, kann der originäre Anhang bei Bedarf an lokale Empfänger verteilt werden, ohne dass hohe Kosten für eine kostenintensive WAN-Verbindung anfallen. Wenn weitere WAN-Verbindungen oder Postserver von der E-Mail-Nachricht durchlaufen werden müssen, bevor sie einen Empfänger erreicht, kann jeder nachfolgende Postserver weitere Kopien eines Anhangs erstellen und die Anhangsreferenz nach Bedarf ändern, so dass sie auf den letzten Speicherort der Kopie des originären Anhangs verweist, oder die ursprüngliche Anhangsreferenz unverändert lassen. Ebenfalls möglich ist, dass die einzelnen Postserver der E-Mail-Nachricht automatisch weitere Anhangsreferenzen mit Zeigern auf die jeweils erstellten Repliken des originären Anhangs hinzufügen (Spiegelserver).

An einem bestimmten Replikationspunkt des Netzes, der einen Anhangsverweis empfangen hat, der sich auf dem Weg durch das Netz von einem Absender zu einem oder mehreren Empfängern befindet, kann der Replikationspunkt gemäß der vorliegenden Erfindung die ursprünglichen Anhangsreferenz beibehalten, so dass diese weiterhin auf den nächstgelegenen früheren Speicherort des Anhangs verweist, oder eine Kopie des Anhangs lokal replizieren und die Anhangsreferenz entsprechend aktualisieren oder erweitern, d. h., die Anhangsreferenz (auch) auf die lokale Kopie des Anhangs verweisen lassen. Im Allgemeinen versucht das Verfahren der vorliegenden Erfindung, die Gesamtkosten einer Netzübertragung zu minimieren, wenn ein bestimmter Replikationspunkt diese Entscheidung trifft. Dies kann dadurch geschehen, dass die Kosten geschätzt werden, die dem Netz entstehen, wenn der Verweis unverändert bleibt, und dass die Kosten geschätzt werden, wenn der Anhang lokal kopiert und der Verweis aktualisiert wird, und das der Replikationspunkt den Verweis auf den Anhang entsprechend aktualisiert, d. h. ihn unverändert lässt, wenn dadurch die Kosten minimiert werden, oder ihn aktualisiert, wenn dadurch eine Senkung der Gesamtkosten zu erwarten ist.

Bei der Schätzung dieser Kosten können verschiedene Techniken eingesetzt und Faktoren berücksichtigt werden. Idealerweise werden die Kommunikationskosten der verschiedenen WAN- und LAN-Segmente, die beim Abrufen der Anhänge durchquert werden, die lokalen Speicherkosten und weitere damit verbundene Kosten berücksichtigt. Auch die Größe des Dateianhangs kann mit berücksichtigt werden, da einige der genannten Kosten in Abhängigkeit davon variieren. Zusätzlich kann eine Schätzung der Gruppe von Empfängern, von denen erwartet wird, dass sie den Anhang tatsächlich abrufen, die Kostenschätzung weiter verbessern, Hierfür muss die Wahrscheinlichkeit des tatsächlichen Abrufs des Anhangs durch die Empfänger oder durch bestimmte Klassen oder Untergruppen von Empfängern oder durch einzelne Empfänger im Voraus bekannt sein. Wenn beispielsweise bekannt ist oder erwartet wird, dass ein bestimmter Anhang mit großer Wahrscheinlichkeit von den meisten oder allen Empfängern gelesen wird, sind die Kosten für die Aktualisierung der Anhangsreferenz an Replikationspunkten, die näher an den Endempfängern liegen, tendenziell niedriger als die Kosten, die entstehen, wenn die ursprüngliche Anhangsreferenz (und der Speicherort des Anhangs) unverändert bleibt, da sehr viele Abrufe des originären Anhangs über einen größeren Teil des Netzes erforderlich wären, wenn der Anhang von einer großen Zahl von Empfängern gelesen wird. Umgekehrt ist es weniger kostenintensiv, die ursprüngliche Anhangsreferenz unverändert zu lassen, wenn der Anhang voraussichtlich von keinem oder nur von wenigen Empfängern gelesen wird.

In einer bevorzugten Ausführungsform der vorliegenden Erfindung werden die Kosten für den Transport und die Speicherung von Anhängen jedoch geschätzt. Im Allgemeinen können die zu erwartenden Kosten für den Abruf eines Anhangs durch den Empfänger geschätzt werden, indem die Kosten für den Transport des Anhangs über jedes LAN- Segment und jede WAN-Verbindung oder jedes WAN-Segment auf dem Weg zum Empfänger sowie die Kosten für die Speicherung entlang des Weges miteinander addiert werden. Zu den Speicherkosten gehören selbstverständlich die Kosten für die Aufbewahrung des eigentlichen Speichermediums, z. B. einer Festplatte, und die Verarbeitungskosten für die Berechnungen, die erforderlich sind, um den Anhang in das Speichermedium zu schreiben und wieder auszulesen. Auch die Speicherkosten außerhalb des Netzes, z. B. auf dem Rechner eines Benutzers, unterscheiden sich von den Speicherkosten innerhalb eines E-Mail-Systems. Wenn beispielsweise der Festplattenspeicherplatz im E-Mail-System knapp ist, sollten diese Kosten steigen, um einen Anreiz zu schaffen, relativ viel von den eigenen Ressourcen des Benutzers für Speicherzwecke zu verwenden. In ähnlicher Weise kann das erfindungsgemäße E-Mail-System die Kosten für das WAN-Segment erhöhen, wenn der Datenverkehr über eine bestimmte WAN-Verbindung stark zunimmt, was dazu führt, dass mehr auf die Replikation von Anhängen und die Ersetzung von Anhangsreferenzen zurückgegriffen wird, so dass der Datenverkehr über die WAN-Verbindung reduziert werden kann.

Im Rahmen der vorliegenden Erfindung können im Allgemeinen Kostenschätzungen durchgeführt werden, die in Bezug auf Genauigkeit, Ausgereiftheit und Anzahl der berücksichtigten Faktoren variieren. In einer bevorzugten Ausführungsform kann zum Beispiel eine relativ einfache Art der Kostenschätzung verwendet werden. Wie bereits erwähnt, ist normalerweise die Größe des Anhangs ein Faktor, der berücksichtigt werden sollte. Da aber Dateianhänge in der Regel recht groß sind, wird in einer bevorzugten Ausführungsform davon ausgegangen, dass die Größe des Anhangs groß ist, und die tatsächliche Größe wird daher ignoriert. In einer bevorzugten Ausführungsform werden in einem bevorzugten Kostenschätzungsverfahren der vorliegenden Erfindung nur die Transportkosten und nicht die Speicherkosten berücksichtigt. Für die folgende Formel werden die folgenden Definitionen verwendet:

Zielgruppe: Anzahl der vorgesehenen Empfänger einer angehängten Datei

Leser: Anzahl der beabsichtigten Empfänger, die den Anhang tatsächlich gelesen haben (notwendigerweise kleiner oder gleich Zielgruppe)

Segment: ein LAN-Subnetz

Wegstrecke: Anzahl der Segmente, die durchquert werden müssen, um eine Nachricht in ein anderes Segment zu verschieben

Segmentkosten: Kosten, die mit der Durchquerung eines bestimmten Segments verbunden sind

Die Funktion ∩ ist definiert als die Funktion, die die Anzahl der gemeinsamen Nutzer zwischen zwei Elementen angibt. Beispielsweise gibt Zielgruppe ∩ Segment die Anzahl der Empfänger in einem Netzwerksegment an, die den Anhang gelesen haben (wobei "Lesen" jede Form der Nutzung eines Anhangs umfasst, einschließlich des Betrachtens, Lesens, Ansehens, Speicherns und dergleichen, was einen Abruf des Anhangs erfordern würde, damit der Empfänger den Anhang lesen kann). Somit ergibt sich

$$\text{Kosten} = \Sigma \; [\{(\text{Zielgruppe} \; / \; (\text{Leser}+1)) \; \cap \; \text{Segment}\} * (\text{Wegstrecke} \cap \text{Segment}) * \text{Segmentkosten}]$$

Der Term (Zielgruppe / (Leser+1)) ist ein Effizienzfaktor, der die tatsächliche Leserschaft des Anhangs berücksichtigt. Zum Zeitpunkt der Übermittlung der entsprechenden E-Mail-Nachricht muss dieser Faktor jedoch vom E-Mail-System geschätzt werden, da nicht von vornherein bekannt ist, wie viele Nutzer der Zielgruppe die Anhangsdatei tatsächlich lesen werden. Die Schätzung kann z. B. auf der Grundlage des bisherigen Interesses der Empfänger an den von einem bestimmten Benutzer gesendeten Nachrichten erfolgen.

Die E-Mail-Methode der vorliegenden Erfindung kann auf einen einzelnen Benutzer eines Netzes angewendet werden, der E-Mails an andere einzelne Benutzer oder an Gruppen von Empfängern sendet. So werden beispielsweise Nachrichten zwischen dem Geschäftsführer eines Unternehmens und den unmittelbaren Mitarbeitern des Unternehmens mit großer Wahrscheinlichkeit vollständig gelesen, einschließlich der Anhänge. In diesem Fall würde das E-Mail-System die Kosten für die Nachricht minimieren, indem es die Anhänge entweder per Anhangsreferenz oder originär an bestimmten Knoten innerhalb des Netzes bereitstellt. In einem anderen Beispiel könnte ein Ingenieur einen wöchentlichen Statusbericht an Dutzende von Empfängern versenden, von denen die meisten in der Nähe sind (in Bezug auf die Netzwerkkosten) und von denen die meisten den Anhang nicht lesen werden, so dass die Kosten durch die verstärkte Verwendung von Anhangsreferenzen gesenkt werden können. Da die Netznutzung dynamisch ist, können sich außerdem die Kosten im Laufe der Zeit aufgrund der vergangenen Nutzungsmuster ändern. Daher kann die zeitliche Erfassung der Kosten auch dazu verwendet werden, die Leistung des E-Mail-Systems zu verbessern

Zur Veranschaulichung des Filterverfahrens der vorliegenden Erfindung wird folgendes Beispiel angeführt. Angenommen werden die folgenden Kosten, LAN: 1; WAN: 10; und die folgende Verteilung der Empfänger:

| Anzahl der Empfänger | LAN-Segmente | WAN-Segmente |
|---|---|---|
| 3 | 1 | 0 |
| 4 | 3 | 1 |
| 3 | 6 | 2 |

Im aktuellen Beispiel müssen also für 3 Empfänger der E-Mail-Nachricht 1 LAN-Segment und 0 WAN-Segmente durchquert werden usw. Wenn mit diesen Parametern jeder Empfänger eine eigene Kopie der Nachricht erhält (oder umgekehrt die Empfänger eine per Anhangsreferenz angehängte Kopie der Anlage mittels URL abrufen), wären die Gesamtkosten (3*1)+((4*3)+(4*1*10))+((3*6)+(3*2*10))=3+52+78=133.

Diese Kosten können noch weiter gesenkt werden, indem nur eine einzige originäre Kopie des Anhangs über eine WAN-Verbindung gesendet wird und ein Postserver oder ein anderer Dateivervielfältigungspunkt am anderen Ende der WAN-Verbindung die erforderliche Anzahl von Kopien weiterverteilen kann. Wenn also jeder Empfänger den Anhang liest, betragen die Kosten (3*1)+((4*3) +10)+((3*6)+(2*10))=3+22+38=63, wenn ein Postamt oder ein anderer Replikationspunkt auf diese Weise genutzt wird. Die gezeigte Beispielrechnung basiert auf pessimistischen Annahmen, die davon ausgehen, dass die maximale Anzahl von WAN- und LAN-Segmenten überquert wird, obwohl Replikationspunkte genutzt werden. So wird in der vorangegangenen Berechnung von einmal Kosten von 10 für die zweite (d. h. "(4*3)") Empfängergruppe und von zweimal Kosten von 10 (d. h. "(2*10)") für die beiden WAN-Segmente der dritten Empfängergruppe ausgegangen, obwohl Redundanz oder gemeinsam genutzte Pfade zwischen der zweiten und der dritten Empfängergruppe diese Kostenschätzung unter anderen Umständen verringern könnten.

Die hier berechneten Kosten sollten jedoch auch mit der Situation verglichen werden, in der nur ein bestimmter Prozentsatz der Zielgruppe den Anhang liest. Im folgenden Beispiel sind die Parameter identisch mit denen des obigen Beispiels, außer dass zusätzliche Informationen über die Anzahl der Leser wie folgt angegeben (oder geschätzt) werden:

| Anzahl der Empfänger | Anzahl von Lesern | LAN-Segmente | WAN-Segmente |
|---|---|---|---|
| 3 | 2 | 1 | 0 |
| 4 | 2 | 3 | 1 |
| 3 | 2 | 6 | 2 |

Wenn mit diesen Informationen jeder Empfänger eine Anhangsreferenz erhält und eine Untergruppe der Empfänger (die Leser) den Anhang liest betragen die Kosten (2*1)+((2*3) +(2*1*10))+((2*6)+(2*2*10))=2+26+52=80. Wird jedoch, wie oben beschrieben, ein Replikationspunkt am WAN-Knoten verwendet, betragen die resultierenden Kosten nur noch (2*1)+((2*3)+(1*10))+((2*6)+(2*10))=2+16+32=50, wiederum unter pessimistischen Annahmen wie oben erläutert.

Wie oben erläutert, ist ein Benutzer typischerweise mit anderen Knoten oder Benutzern des WWW über einen WWW-Hypertext-Transportprotokoll ("HTTP")-Server wie die Server 310, 320 aus FIG. 3 verbunden. Das WWW ist eine verteilte Anwendung, die durch das WWW-HTTP-Protokoll gekennzeichnet ist, das auf dem Internet-Übertragungs- und Steuerungsprotokoll / Internetprotokoll ("TCP/IP") aufbaut. Das WWW kann also durch eine Reihe von Protokollen (d. h. HTTP) charakterisiert werden, die auf dem Internet als "Rückgrat" laufen. Ein Webbrowser ist eine Anwendung eines Benutzers, die in WWW-kompatiblen Netzsystemen dem Benutzer den Zugang zu Servern im Netz ermöglicht, die HTTP verstehen. So kann beispielsweise ein Benutzer seinen Webbrowser benutzen, um auf die "Homepage" oder Website eines anderen Benutzers im WWW zuzugreifen. In der Regel sind verschiedene Hypertext-Links verfügbar, die den Zugriff auf weitere Dateien oder Webseiten ermöglichen.

Ausschließlich auf HTTP basierendes E-Mail-System

Die derzeitigen E-Mail-Systeme basieren auf einem zweistufigen System. (1) einer Client/Server-Beziehung zwischen dem Rechner des Benutzers und dem elektronischen Postserver des Benutzers und (2) einem Peer-System für die Übertragung von E-Mails zwischen den Postservern, z. B. über ein WAN, wie oben unter Bezugnahme auf die FIG. 2, 3 und 5 beschrieben ist. In aktuellen E-Mail-Systemen, die mit WWW-Systemen kompatibel sind, werden E-Mail- und Webbrowser-Funktionen als unabhängige Applets (d. h. relativ kleine Anwendungen) in sogenannten Verbundsystemen kombiniert. Solche Verbundsysteme sind jedoch neben anderen Nachteilen oft schwieriger zu warten und für die Benutzer schwerer zu verstehen. Daher wird hier ein reines HTTP-E-Mail-System vorgestellt, das E-Mail-Dienste nur über HTTP bereitstellt, ohne dass zusätzlich zum HTTP-Webbrowser eine separate E-Mail-Anwendung aufgerufen werden muss.

Figur 6 zeigt ein reines HTTP-E-Mail-System gemäß einer bevorzugten Ausführungsform der vorliegenden Erfindung. In einer bevorzugten Ausführungsform richtet ein potenzieller Empfänger 622 eines Netzes wie dem WWW, das auf dem Internet 601 als "Rückgrat" läuft, zunächst eine reservierte Hypertext-Markup-Language- ("HTML") Seite auf seinem persönlichen Server 620 ein. Es werden dadurch HTML-Befehle von Host-Rechnern (wie dem Rechner 622 des Empfängers in diesem Beispiel) an die Webbrowser der Benutzer gesendet, um dem Webbrowser mitzuteilen, wie er Informationen wie Text, Grafiken und verfügbare Hypertext-Links anzeigen soll. Eine Funktion dieser HTML-Seite kann darin bestehen, Besuchern (d. h. anderen Benutzern, die die Homepage des Empfängers durchsuchen, wie z. B. dem Absender 612) die Möglichkeit zu geben, den Inhalt der Seite zu ändern, indem sie eine URL (um auf den Ort einer E-Mail-Nachricht, einer Anlage 611 oder einen anderen Ort zu verweisen) und eine Betreff- oder Beschreibungszeile oder eine andere Nachricht schreiben. Der Absender 612 kann einen typischen Webbrowser verwenden, um die "E-Mail schreiben"-Seite des Empfängers 622 einzusehen. Durch Zugriff auf einen geeigneten Hypertext-Link auf der "E-Mail schreiben"-Seite des Empfängers (z. B. einen Hypertext-Link, der es einem Browser ermöglicht, eine E-Mail-Nachricht zu hinterlassen) wird ein Prozess auf dem Rechner des Empfängers 622 ausgeführt, bei dem es sich typischerweise um ein CGI-Skript handelt. Ein CGI-Skript ermöglicht es einem Absender 612, dem Server 620 des Empfängers 622 mitzuteilen, dass er etwas anderes als gewöhnlich tun soll, z. B. ein HTML-Formular 625 zurückgeben. Dieses CGI-Skript gibt das HTML-Formular 625 an den Absender zurück, der nach der URL 627 und dem Betreff oder der Nachricht 626 (falls vorhanden) der E-Mail fragt. Der URL-Zeiger 627, die in die E-Mail-Nachricht 626 eingefügt oder an diese angehängt werden soll, kann automatisch vom Rechner des Absenders 612 in einem für den Absender 612 nicht sichtbaren Hintergrundprozess eingegeben werden, oder sie kann vom Absender 612 selbst eingegeben werden. Wird der URL-Zeiger 627 und ein entsprechender Hypertext-Link (der es dem Empfänger ermöglicht, den Anhang zu lesen, auf den die URL mit dem Zeiger verweist) akzeptiert, werden sie in die Mail-Seite des Empfängers integriert, die auf dem Server 620 gespeichert ist. Daher kann der Empfänger 622 zu einem späteren Zeitpunkt die Posteingangsseite einsehen und Nachrichten abrufen, einschließlich der Nachricht 626 und , falls gewünscht, des Anhangs 611, da der Anhang 611 (relativ) lokal beim Absender 612 auf beispielsweise dessen Server 610 gespeichert, aber für Benutzer des Internets 601 wie den Empfänger 622 sichtbar ist.

Der URL-Zeiger 627, der als Anhangsreferenz gesendet wird, kann entweder einfach oder komplex sein. Er kann zum Beispiel so einfach sein wie eine bestimmtes Dateiformat, das abgerufen werden kann, wie eine Textdatei oder eine Tabellenkalkulation. Alternativ dazu kann der URL-Zeiger 627 auch eine Referenz auf ein HTML-Dokument an einem anderen Ort sein, der für WWW-Nutzer ebenfalls zugänglich oder sichtbar ist. Ein Vorteil der Verwendung solcher komplexer URL-Zeiger besteht darin, dass ein "Anhang" kontextbezogen in den Text einer E-Mail-Nachricht eingefügt werden kann und nicht nur als verfügbare Datei zur Ansicht mit weniger Kontext angehängt wird. So kann z. B. der Betreff oder eine längere E-Mail-Nachricht mit einem auf dem URL-Zeiger basierenden Hypertext-Link zu einer Tabellenkalkulation versehen werden. Beispielsweise könnten die Worte "unsere Finanzanalyse" als Hypertext-Link in die Betreffzeile oder in eine längere E-Mail-Nachricht auf der Mail-Seite des Empfängers eingefügt werden. Anstatt den Text zu lesen und dann die angehängte Tabelle zu öffnen (mit einem gewissen Verlust an Kontext), wie es bei den derzeitigen E-Mail-Systemen der Fall ist, könnte der Benutzer auf den Verweis selbst klicken, während er die Nachricht liest, wodurch der Textbezug des Anhangs verbessert wird.

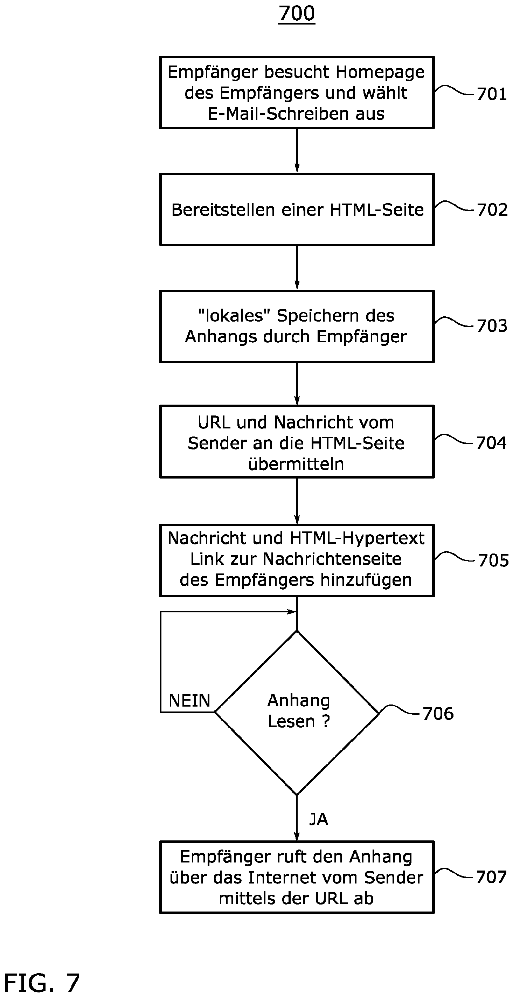

Figur 7 zeigt ein Ablaufdiagramm, das die Funktionsweise des E-Mail-Systems von FIG. 6 veranschaulicht. Wie in Schritt 701 dargestellt, browst der Absender 612 über einen Webbrowser auf einer Homepage oder einer anderen Website des Empfängers 622, die vom Internet 601 aus sichtbar ist. Nachdem der Absender 612 eine auf der Homepage des Empfängers 622 verfügbare Option "E-Mail senden" ausgewählt hat (Schritt 701), stellt der WWW-HTTP-Server 620 das HTML-Formular 625 bereit (Schritt 702). Der Absender 612 hat zu diesem Zeitpunkt bereits einen Anhang 611 lokal gespeichert (Schritt 703) oder muss den Anhang 611 lokal speichern, bevor er die Übertragung der reinen HTTP-E-Mail abschließen kann. Selbstverständlich muss der (relativ) lokal gespeicherte Anhang 611 für die Nutzer des Verbindungsnetzes sichtbar sein, damit der Empfänger 622 über seinen WWW-HTTP-Server 620 den Anhang 611 abrufen kann, wenn er ihn lesen oder anderweitig darauf zugreifen möchte. Der Absender 612 übermittelt dann eine beliebige Nachricht 626 und einen entsprechenden URL-Zeiger 627 an das HTML-Formular 625 (Schritt 704). Die zu übermittelnde Nachricht und der URL-Zeiger werden anschließend der Mail-Seite des Empfängers 622 hinzugefügt (Schritt 705). Wenn der Empfänger 622 beschließt, den Anhang 611 zu lesen (Schritt 706), zum Beispiel durch Anklicken eines in die Nachricht 626 eingebetteten Hypertext-Links, der den URL-Zeiger 627 enthält, wird der Anhang 611 vom Empfänger 622 über seinen Server 620, die URL 627 und das Internet 601 abgerufen (Schritt 707).

Das E-Mail-System 600 setzt vorzugsweise Verschlüsselungs- und/oder Komprimierungstechniken ein, wie sie oben in Bezug auf das E-Mail-Nachrichtenformat 400 von FIG. 4 erörtert wurden, so dass weniger Netzwerkressourcen für die Übertragung des (komprimierten) Anhangs 611 erforderlich sind, falls und wenn er vom Empfänger abgerufen wird, und dass der Anhang 611 für Benutzer des Internets 601 sichtbar ist, so dass der Anhang verschlüsselt wird, um zu verhindern, dass unbefugte Benutzer des WWW auf den Anhang zugreifen.

Die vorliegende Erfindung kann in Form von computerimplementierten Verfahren und Vorrichtungen zur Durchführung dieser Verfahren verkörpert werden. Die vorliegende Erfindung kann auch in Form von Computerprogrammcode verkörpert werden, der in materiellen Medien wie Disketten, CD-ROMs, Festplatten oder anderen computerlesbaren Speichermedien verkörpert ist, wobei, wenn der Computerprogrammcode in einen Computer oder in ein verteiltes Computernetz geladen und von diesem ausgeführt wird, der Computer oder das Netz zu einer Vorrichtung zur Durchführung der vorliegenden Erfindung wird. Die vorliegende Erfindung kann auch in Form von Computerprogrammcode verkörpert werden, z. B. ob in einem Speichermedium gespeichert, in einen Computer geladen und/oder von diesem ausgeführt oder über ein Übertragungsmedium, wie z. B. über eine elektrische Verdrahtung oder Verkabelung, durch Lichtwellenleiter oder über elektromagnetische Strahlung, übertragen, wobei der Computer, wenn der Computerprogrammcode in einen Computer geladen und von diesem ausgeführt wird, zu einer Vorrichtung zur Durchführung der vorliegenden Erfindung wird. Bei der Implementierung in einen programmierbarer Mehrzweckprozessor konfigurieren die Computerprogrammcode-Elemente den Mikroprozessor derart, dass er spezifische logische Schaltungen erzeugt.

Figur 8 zeigt eine schematische Darstellung einer ersten Ausführungsform eines iQRNG gemäß Stand der Technik in der Aufsicht. Die Darstellung ist an eine entsprechende Figur der EP 3 529 694 B1 angelehnt und zeigt die Oberfläche O eines zugehörigen Substrates 1110, in welches der QRNG integriert ist. Eine kreisförmige Photonenquelle 1120 mit einem zur Bereitstellung von Photonen eingerichteten p-n-Übergang wird über eine entsprechende Kontaktierung mit Strom versorgt und dabei zur Emission einzelner Photonen 1128 angeregt. Zur Detektion der emittierten Photonen 1128 ist neben der Photonenquelle 1120 ein zugehöriger Einzelphotonendetektor 1130 in Form einer SPAD angeordnet. Es handelt sich bei der Photonenquelle 1120 und dem Einzelphotonendetektor 1130 wie bei herkömmlichen hybriden Ansätzen für photonischer QNRGs allerdings auch weiterhin um strukturell und funktional getrennte Elemente, die zur Integration in einem gemeinsamen Substrat lediglich nebeneinander angeordnet werden.

Ein vom Einzelphotonendetektor 1130 bei der Absorption eines Photons 1128 erzeugter Strompuls kann dann zunächst in einem zugehörigen Mittel zur elektronischen Erfassung 1152 ("electronic sampling means") registriert und ausgewertet werden, insbesondere um eine Bitfolge auf der Grundlage der Anzahl der im Einzelphotonendetektor 1130 erfassten Photonen zu erzeugen. Weiterhin ist ein Mittel zur elektronischen Nachbearbeitung 1154 ("electronic post-processing means") vorgesehen, welches so konfiguriert sein soll, dass es die binären Sequenzen des Mittels zur elektronischen Erfassung 1152 so verarbeiten, dass eine sogenannte "Whitening"-Operation durchgeführt wird. Diese soll eine Vielzahl von Kompressionsoperationen umfassen, die dazu dienen, die statistischen Eigenschaften der erzeugten binären Sequenzen zu verbessern. Der Nachbearbeitungsschritt soll das Entropieniveau des QRNG erhöhen. Dabei muss jedoch sichergestellt sein, dass die verwendeten Kompressionsoperationen nicht wiederrum zu einer prinzipiellen Vorhersagbarkeit der erzeugten Zufallszahlen durch Einführung deterministischer Abhängigkeiten bei der Anwendung führen.

Um die Effizienz der Zufallszahlenerzeugung, d. h. die effektive Entropierate, zu erhöhen, wird der photonische Teil des QRNG an der Oberfläche O des Substrats 1110 von einer lichtblockierenden Schicht 1150 ("light inhibitor filter"), welcher zur Abschattung gegenüber einem äußeren Lichteinfall dient, geschützt. Dabei kann die lichtblockierende Schicht 1150 insbesondere durch eine Metallisierungsschicht, die direkt während des Produktionsprozesses, zum Beispiel durch die CMOS-Technik, als letzte Metallisierungsebene aufgebracht werden kann, bereitgestellt werden. Dadurch soll der Photonendetektor 1130 von externem Licht abgeschirmt werden und ihn nur für solche Photonen empfindlich zu machen, die aufgrund des Übersprechens von der Photonenquelle 1120 durch das Substrat 1110 gelangen. Darüber hinaus soll durch die Metallisierungsschicht auch die optische Kopplung der von Photonenquelle 1120 emittierten Photonen 1128 verbessern, indem diese nach innen reflektiert und so an einem Austritt aus der Oberfläche O des Substrats 1110 behindert werden.

Nachteilig bei einer solchen Anordnung der optischen Komponenten nebeneinander ist der Abstand zwischen den Komponenten, welcher die Kopplungsstärke aufgrund von dem geringen Beleuchtungswinkel und der potentiellen Photonenabsorption in den verschiedenen Materialien reduziert. Zudem besteht trotz der partiell aufgebrachten lichtblockierenden Schicht 1150 potentiell auch weiterhin die Möglichkeit des optischen Zugriffs und damit eines Angriffs von der Oberfläche O des Substrats 1110 oder sogar von der Substratrückseite aus. Über dieses können nämlich beispielsweise zusätzliche Photonen gezielt injiziert oder extrahiert werden, so dass letztlich die Zählstatistik und damit die Entropie der erzeugten Zufallszahlen beeinflusst und kompromittiert werden kann. Weiterhin ist in der Darstellung auch zu erkennen, dass die einzelnen Photonen 1128 isotrop in alle Raumrichtungen verteilt emittiert werden, so dass nur ein Bruchteil der Photonen 1128 vom Photonendetektor 1130 erfasst und somit statistisch ausgewertet werden kann. Dies verringert zum einen erheblich die Effizienz der Zufallszahlenerzeugung und führt anderseits dazu, das eine Vielzahl von Photonen 1128 ungenutzt ins Substrat 1110 emittiert werden, wo diese an anderer Stelle eventuell ebenfalls durch Beobachter bzw. Angreifer extrahiert werden oder zu Störungen führen können.

Figur 9 zeigt eine schematische Darstellung einer zweiten Ausführungsform eines iQRNG gemäß Stand der Technik in einer Seitenansicht. Die Darstellung ist an eine entsprechende Figur aus Khanmohammadi et al. (A. Khanmohammadi, R. Enne, M. Hofbauer and H. Zimmermann, "A Monolithic Silicon Quantum Random Number Generator Based on Measurement of Photon Detection Time," in IEEE Photonics Journal, vol. 7, no. 5, pp. 1-13, Oct. 2015, Art no. 7500113) angelehnt. Auch in diesem Beispiel ist der prinzipielle Aufbau einer Nebeneinanderanordnung einer Photonenquelle 1120 (Si-LED), welche zur Aussendung von einzelnen Photonen 1128 eingerichtet ist, und einem Einzelphotonendetektor 1130 (SPAD) klar zu erkennen. Im Unterschied zur in FIG. 8 gezeigten Anordnung wird die Photonenquelle 1120 hierbei jedoch als kreisförmiges zentrales Element bereitgestellt, welches im Wesentlichen vollständig von einem entsprechend angepassten kreisringförmig ausgebildeten Einzelphotonendetektor 1130 umgeben wird. Die gemeinsame radiale Symmetrieachse R liegt entsprechend im Zentrum des derart ausgebildeten iQRNG. Die Photonenquelle 1120 wird dabei durch eine in einer tiefliegenden n-Wanne ("deep n well") ausgebildeten n-Wanne ("n well") realisiert, die über ein in die Oberfläche O des Substrats 1110 ("p-substrate") zentral um die radiale Symmetrieachse R eingebrachtes $n^{++}$-Gebiet als Kathode 1122 und ein daneben angeordnetes $p^{++}$-Gebiet als Anode 1124 mit Strom versorgt wird. Außerhalb der tiefliegenden n-Wanne wird der Einzelphotonendetektor 1130 ebenfalls an die Oberfläche O über ein eingebrachtes $n^{++}$-Gebiet als Kathode 1132 und ein weiter von der radialen Symmetrieachse R entfernt angeordnetes $p^{++}$-Gebiet als Anode 1134 kontaktiert. An die Kathode 1132 schließt sich unterhalb eine p-Wanne ("p well") an. Unterhalb der Anode 1134 ist hingegen in einer tiefliegenden p-Wanne ("deep p well") ein p-Wanne ("p well") ausgebildet. Die Photonenquelle 1120 wird hierbei als Element innerhalb der Struktur des Photonendetektors 1130 bereitgestellt, so dass im Gegensatz zur FIG. 8 diese eine strukturelle und funktionale Einheit bilden.

Auch bei diesem Beispiel für einen iQRNG gemäß Stand der Technik werden die Photonen 1128 im Wesentlichen allseitig in das Substrat 1110 emittiert, so dass die auch bereits zur Ausführungsform nach FIG. 8 beschrieben Nachteile hinsichtlich der Sicherheit gegenüber Beobachtern bzw. Angreifern und zur verringerten Effizienz ebenfalls zutreffen. Durch den spezifischen Aufbau als kreisringförmige Anordnung und die strukturelle Verknüpfung des Einzelphotonendetektors 1130 mit der Photonenquelle 1120 kann gegenüber FIG. 8 jedoch die Integrationsdichte weiter erhöht werden. Dies beinhaltet neben einem geringeren Flächenverbrauch zur Ausbildung des iQRNG auch eine Erhöhung der Sicherheit gegenüber Angriffen sowie eine gesteigerte Effizienz bei der Zufallszahlenerzeugung bzw. der Entropierate als Vorteile. Dies hängt insbesondere auch damit zusammen, dass durch die Verringerung aller Abstände die Verluste an Photonen 1128 durch auftretende Materialabsorption und ungünstige Emissionsrichtungen geringer werden. Zudem wird dadurch die Fläche für mögliche Angriffe verkleinert. Davon abgesehen besteht auch hierbei prinzipiell jedoch ebenfalls auch weiterhin die Möglichkeit insbesondere an der Oberfläche O sowie auch an anderen Stellen des Substrats 1110 zur Beeinflussung der Zählstatistik durch Angreifer einzelne Photonen 1128 auszukoppeln oder zu injizieren. Eine solche Nebeneinanderanordnung der beiden optischen Komponenten eines QRNG weist daher einige Nachteile auf, die einer besonders sicheren, kompakten und zuverlässigen Zufallszahlenerzeugung für SoC-Anwendungen bisher entgegenstehen.

Figur 10 zeigt eine schematische Darstellung eines mit einem Verfahren zur Bereitstellung tiefliegender p-n-Übergänge 1050 und 1052 in einem BCD-Prozess bereitgestellten BCD-Substrats 1110 und eine TCAD-Darstellung der resultierenden Dotierstoffverteilung. Ein Ausführungsbeispiel eines Verfahrens zur Erzeugung tiefliegender p-n-Übergänge 1050 und 1052 in einem BCD-Prozess umfasst ein Bereitstellen eines Trägersubstrats 1010; ein Einbringen eines ersten Dotierstoffs zur Ausbildung eines ersten Gebiets 1022 (z. B. NBL) vom ersten Leitungstyp (negativ für NBL) in eine Oberfläche S des Trägersubstrats 1010; ein Einbringen eines zweiten Dotierstoffs zur Ausbildung eines zweiten Gebiets 1032 (z. B. PBL) vom zweiten Leitungstyp (positiv für PBL) in die Oberfläche S des Trägersubstrats 1010, wobei sich das erste Gebiet 1022 (NBL) und das zweite Gebiet 1032 (PBL) zumindest teilweise überlagern; ein Aufwachsen einer epitaktischen Schicht 1040 auf die Oberfläche S des Trägersubstrats 1010, wobei sich das erste Gebiet 1022 (NBL) und das zweite Gebiet 1032 (PBL) durch Diffusion des ersten Dotierstoffs und des zweiten Dotierstoffs in der epitaktischen Schicht 1040 ausbreiten und dadurch einen in der epitaktischen Schicht liegenden p-n-Übergang 1050 ausbilden.

In der Darstellung handelt es sich bei dem ersten Gebiet 1022 um eine tiefliegende NBL-Schicht und bei dem zweiten Gebiet 1032 um eine tiefliegende PBL-Schicht. Die Reihenfolge ist jedoch vertauschbar, so dass es sich bei dem ersten Gebiet 1022 auch um eine tiefliegende PBL-Schicht und bei dem zweiten Gebiet 1032 um eine tiefliegende NBL-Schicht handeln kann. Über eine entsprechende Anpassung der Diffusionslängen der einzelnen Dotierstoffe kann auch die Schichtfolge der p-n-Übergänge 1050 und 1052 umgekehrt werden, z. B. könnten in FIG. 10 auch die NBL- und PBL-Schichten am p-n-Übergang 1050 und 1052 vertauscht werden.

Das beschriebene Verfahren unterscheidet sich von den herkömmlichen Verfahren zur Bereitstellung von BCD-Substraten 1110 gemäß Stand der Technik insbesondere dadurch, dass sich das erste Gebiet 1022 (NBL) und das zweite Gebiet 1032 (PBL) zumindest teilweise überlagern. Insbesondere kann unmittelbar nach dem Einbringen des zweiten Dotierstoffs in einer Aufsicht auf die Oberfläche S des Trägersubstrats 1010 das erste Gebiet 1022 oder das zweite Gebiet 1032 vollständig das jeweils anderen Gebiet (1032, 1022) überlagern. Daher liegt bei der gezeigten Ausführungsform unmittelbar nach dem Einbringen des zweiten Dotierstoffs zur Ausbildung des zweiten Gebiets 1032 (PBL) dieses in einer Aufsicht auf die Oberfläche S des Trägersubstrats 1010 vollständig im ersten Gebiet 1022 (NBL). Um dabei einen in der epitaktischen Schicht liegenden p-n-Übergang 1050 auszubilden, weisen der erste und der zweite Dotierstoff vorzugsweise unterschiedliche Diffusionseigenschaften im Trägersubstrat 1010 und/oder in der epitaktischen Schicht 1040 auf. Insbesondere kann der zweite Dotierstoff im zweiten Gebiet 1032 (PBL) wie gezeigt eine höhere Diffusions-Beweglichkeit (und damit Diffusionslänge) im Trägersubstrat 1010 und in der epitaktischen Schicht 1040 als der erste Dotierstoff im ersten Gebiet 1022 (NBL) aufweisen.

Zur Verstärkung der Diffusion kann nach dem Einbringen des ersten Dotierstoffs und/oder des zweiten Dotierstoffs eine Erwärmung des Trägersubstrats 1010 erfolgen. Weiterhin kann nach dem Aufwachsen der epitaktischen Schicht 1040 eine Erwärmung des Trägersubstrats 1010 zur Verstärkung der Dotierstoffdiffusion erfolgen. Ein Einbringen des ersten Dotierstoffs und/oder des zweiten Dotierstoffs kann beim vorgestellten Verfahren sowohl maskenlos oder über ein Maskenverfahren erfolgen. Bei dem gezeigten BCD-Wafer kann eine vollständige Überlagerung des ersten Gebiets 1022 (NBL) mit einem einzelnen zweiten Gebiet 1032 (PBL) angenommen werden. Herkömmlicherweise werden die ersten und zweiten Gebiete 1022 und 1032 jedoch räumlich getrennt voneinander ausgebildet. Insbesondere ist deren Abstand dabei im Allgemeinen mindestens so groß gewählt, dass auch nach dem Ausdiffundieren der einzelnen Dotierstoffe keine sich überlagernden Gebiete erzeugt werden.

Die unterhalb der schematischen Darstellung angegebene TCAD-Darstellung (engl. "Technology Computer-Aided Design, TCAD") zeigt die Dotierstoffverteilung innerhalb des kontaktierten BCD-Substrats 1110 zur Simulation einer entsprechenden integrierten Diodenstruktur. Aufgrund der in dieser Ausführungsform gezeigten Doppelstruktur mit einem oberen p-n-Übergang 1050 in der epitaktischen Schicht 1040 und einem unteren p-n-Übergang 1052 in dem Trägersubstrat 1010 ergibt sich in der gezeigten Seitenansicht eine effektive Einschnürung des im Bereich der p-n-Übergänge 1050 und 1052 eingeschlossenen n-Gebiets NBL durch die beiden dieses n-Gebiet NBL umgebenden p-Gebiete PBL. Beide p-n-Übergänge 1050 und 1052 können zur Bereitstellung voneinander unabhängiger SPADs mit einer zur Erzeugung eines Lawineneffekts geeigneten Dotierungsdichte und Feldstärkeverteilung ausgebildet werden.

Mittels entsprechender BCD-Substrate 1110 zur weiteren Verwendung in BCD-Technologien lassen sich somit besonders tiefliegende SPADs ("deepSPADs") erzeugen. Insbesondere bleibt oberhalb der bereitgestellten SPADs dabei noch genügend Bauraum zur Integration weiterer optoelektronischer Komponenten. Es kann daher insbesondere eine oberhalb der tiefliegenden SPAD ausgebildete Zener-avLED dazu genutzt, einen besonders kompakten, vertikal aufgebauten iQRNG zu realisieren, bei dem einzelne Photonen 1128 durch die Zener-avLED vorzugsweise in Richtung des oberen p-n-Übergangs 1050 emittiert werden und somit für eine Detektion durch eine unmittelbar unterhalb der Zener-avLED am oberen p-n-Übergang 1050 ausgebildeten SPAD als Einzelphotonendetektor bereitgestellt werden (siehe FIG. 11 mit zugehöriger Figurenbeschreibung).

Figur 11 zeigt eine schematische Darstellung einer beispielhaften ersten Ausführungsform eines beschriebenen iQRNG 1200. Insbesondere kann der oben angegebene Quantenzufallsgenerator einen solchen iQRNG 1200 umfassen.

Der gezeigte integrierte QRNG 1200 umfasst eine Photonenquelle 1120 und einen Einzelphotonendetektor 1130, wobei die Photonenquelle 1120 und der Einzelphotonendetektor 1130 in vertikaler Richtung übereinander in einem gemeinsamen Substrat aus einem Halbleitermaterial angeordnet sind. Vorzugsweise handelt es sich bei der Photonenquelle 1120 um eine Einzelphotonenquelle (SPS), dazu eingerichtet, zeitgleich nur einzelne oder einige wenige Photonen 1128 bereitzustellen. Vorzugsweise handelt es sich bei der Photonenquelle 1120 um eine an einem Arbeitspunkt unterhalb oder nahe der Durchbruchspannung betriebene lichtemittierende Avalanche Zener-Diode (Zener-avLED). Vorzugsweise handelt es sich bei dem Einzelphotonendetektor 1130 um eine Einzelphotonen-Lawinendiode (SPAD).

Der iQRNG 1200 ist vorzugsweise in einem BCD-Substrat 1110 in BCD-Technologie ausgebildet. Vorzugsweise umfasst das BCD-Substrat 1110 ein Trägersubstrat 1010; und eine auf dem Trägersubstrat 1010 aufgewachsene epitaktische Schicht 1040, wobei zwischen dem Trägersubstrat 1010 und der epitaktischen Schicht 1040 durch eine Diffusion von in eine Oberfläche S des Trägersubstrats 1010 unterhalb der epitaktischen Schicht 1040 eingebrachten Dotierstoffen ein in der epitaktischen Schicht liegender tiefliegender p-n-Übergang 1050 erzeugt wurde (siehe FIG. 10). Vorzugsweise bildet der Einzelphotonendetektor 1130 in einem Bereich um den tiefliegenden p-n-Übergang 1050 ein Lawinengebiet aus und umfasst ein Absorptionsgebiet PW/HPW mit einer Hochvolt-p-Wanne HPW (engl. "high-voltage p-type well") und eine p-Wanne PW (engl. "p-type well") zur Umwandlung von Photonen in Elektronen-Lochpaare, wobei sich das Absorptionsgebiet PW/HPW unmittelbar an die den tiefliegenden p-n-Übergang 1050 ausbildenden Gebiete NBL und PBL anschließt. Die vollständig ausgeprägte Hochvolt-p-Wanne HPW ermöglicht dabei einen optimalen Anschluss des tiefliegenden p-n-Übergang 1050 von der Anode her.

Bevorzugt ist, dass der tiefliegende p-n-Übergang 1050 zumindest teilweise zwischen einer tiefliegenden n-Schicht NBL als Kathode 1132 und einer sich unmittelbar an die tiefliegende n-Schicht NBL anschließenden tiefliegenden p-Schicht PBL ausgebildet ist, das Absorptionsgebiet PW/HPW sich unmittelbar an die tiefliegende p-Schicht PBL anschließt und im Wesentlichen als p-Gebiet (optional ein intrinsisches Gebiet umfassend) ausgebildet ist, und eine als p+-Gebiet ausgebildete Anode 1134 sich unmittelbar an das Absorptionsgebiet PW/HPW anschließt.

Im gezeigten Ausführungsbeispiel sind die jeweiligen Anoden 1124 und 1134 der Photonenquelle 1120 und des Einzelphotonendetektors 1130 zusammengelegt. Diese können dann beispielsweise über eine gemeinsame zweite Metallisierung MET2 an der Oberfläche S des BCD-Substrats 1110 elektrisch kontaktiert werden. Durch eine gemeinsame und durchgehende zweite Metallisierung MET2 kann auch eine Abschattung zur Abschirmung des gesamten Bauraums darunter erreicht werden. Die gemeinsamen Anoden 1124, 1134 der Photonenquelle 1120 und des Einzelphotonendetektors 1130 sind einerseits über die die p-Wanne PW mit der Hochvolt-p-Wanne HPW und der tiefliegenden p-Schicht PBL zur Kontaktierung des ersten p-n-Übergangs 1050, und andererseits mit dem p-dotierter Bereich (engl. "p-type body") PBODY zur Kontaktierung des p-n-Übergangs 1121 der Photonenquelle 1120 verbunden. Die zugehörigen Kathoden 1122 und 1132 sind beispielhaft jeweils einzeln ausgeführt und können über eine erste zugehörige erste Metallisierung MET1 elektrisch kontaktiert werden und liegen bevorzugt auf dem Bezugspotenzial GND. Der beschriebene iQRNG kann als kreisförmige Struktur ausgebildet sein (entspricht einer räumlichen Rotation der gezeigten Darstellungsebene um eine gedachte zentrale Achse in vertikaler Richtung). Es sind jedoch auch andere Ausbildungen der gezeigten Struktur möglich.

Zur Spannungsversorgung kann die Kathode 1132 des Einzelphotonendetektors 1130 beispielsweise über einen Arbeitswiderstand $R_2$ mit einer vorzugsweise überwachten zweiten positiven Versorgungsspannung auf einer zweiten Versorgungspannungsleitung $V_{ENT2}$ verbunden sein. Bei einer Detektion eines Photons, fließt ein elektrischer Strom durch den in Sperrrichtung gepolten p-n-Übergang 1050 des Einzelphotonendetektors 1130. Dadurch kommt es beispielsweise zu einem Spannungsabfall über den Arbeitswiderstand $R_2$ in Form eines typischerweise schnell ansteigenden und dann exponentiell abfallenden Spannungssignal 1405 am Ausgang der Entropiequelle (zur weiteren möglichen Verarbeitung wird auf die beispielhafte elektronische Schaltung eines Quantenzufallsgenerators 1400 nach FIG. 15 verwiesen). Beispielsweise kann ein Analog-zu-Digital-Wandler (engl. "Analog-to-Digital Converter, ADC") (1403 in FIG. 15) anschließend dieses Entropieausgangssignal auswerten. Der ADC (1403) kann auch Verstärker und/oder Filter zur Aufbereitung des Spannungssignals (1405) umfassen. Der Arbeitswiderstand $R_2$ begrenzt darüber hinaus den Strom durch den Einzelphotonendetektor 1130.

Die Kathode 1122 des Einzelphotonendetektors 1130 kann beispielsweise über einen ersten Arbeitswiderstand $R_1$ mit einer vorzugsweise überwachten ersten positiven Versorgungsspannung auf einer ersten Versorgungspannungsleitung $V_{ENT1}$ verbunden sein. Der erste Arbeitswiderstand $R_1$ begrenzt den Strom durch die Photonenquelle 1120. Bei Emission eines Photons zeigt der Sperrstrom des in Sperrrichtung gepolten p-n-Übergangs 1121 der Photonenquelle 1120 typischerweise einen Spike-förmigen Anstieg. Dieser Sperrstromanstieg führt zu einem Spannungspuls über den ersten Arbeitswiderstand $R_1$. Dieser Spannungspuls kann ausgewertet werden. Beispielsweise kann der ADC (1403) mittels einer ADC-internen Korrelationsvorrichtung dazu eingerichtet sein, nur solche Pulse auf dem Spannungssignal 1405 am Ausgang der Entropiequelle auszuwerten, die mit einem Spannungspuls am ersten Arbeitswiderstand $R_1$, beispielsweise auf einem optionalen Korrelationssignal 1430 korrelieren. Nur solche Pulse auf dem Spannungssignal 1405 werden dann als Pulse des Einzelphotonendetektors 1130 gewertet, die mit einer Emission eines Photons durch die Photonenquelle 1120 korrelieren. Dies steigert die Qualität der Entropie der bereitgestellten Quantenzufallszahlen.

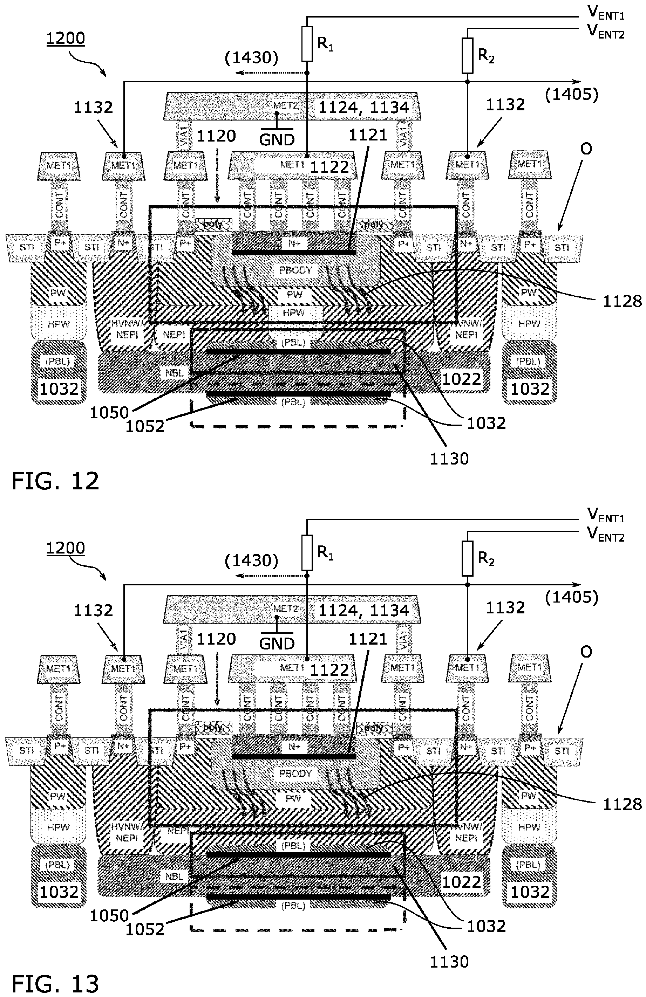

Figur 12 zeigt eine schematische Darstellung einer beispielhaften zweiten Ausführungsform eines beschriebenen iQRNG. Die gezeigte Ausführungsform entspricht weitgehend der in der FIG. 11 gezeigten ersten Ausführungsform. Die Bezugszeichen und deren jeweilige Zuordnung zu einzelnen Merkmalen gelten daher entsprechend. Im Vergleich zur FIG. 11 wurde die Hochvolt-p-Wanne HPW jedoch strukturell durch eine verjüngte Hochvolt-p-Wanne HPW und ein schwach n-dotiertes bzw. intrinsisches epitaktisches Gebiet NEPI ersetzt. Dabei bildet die Hochvolt-p-Wanne HPW des Absorptionsgebiets PW/HPW lediglich einen engen Kanal zwischen der auch in FIG. 9 gezeigten obenliegenden p-Wanne PW und der tiefliegenden p-Schicht PBL des tiefliegende p-n-Übergang 1050 aus. Die Umgebung des Kanals wird durch das schwach n-dotierte bzw. intrinsische epitaktische Gebiet NEPI definiert. Durch den Kanal kann wird der tiefliegenden p-n-Übergang 1050 ohne einem zusätzlichen Durchgriff/Punch durch das schwach n-dotierte bzw. intrinsisches epitaktisches Gebiet NEPI von der Anode her angeschlossen.

Figur 13 zeigt eine schematische Darstellung einer beispielhaften dritten Ausführungsform eines beschriebenen iQRNG. Die gezeigte Ausführungsform entspricht weitgehend der in der FIG. 12 gezeigten ersten Ausführungsform. Die Bezugszeichen und deren jeweilige Zuordnung zu einzelnen Merkmalen gelten daher entsprechend. Im Vergleich zur FIG. 11 wurde auf die kanalförmig ausgebildete Hochvolt-p-Wanne HPW im Absorptionsgebiet PW/HPW verzichtet und das schwach n-dotierte bzw. intrinsische epitaktische Gebiet NEPI erstreckt sich über den gesamten unteren Bereich. Insofern wurde im Vergleich zur FIG. 11 die Hochvolt-p-Wanne HPW strukturell durch ein schwach n-dotierte bzw. intrinsisches epitaktisches Gebiet NEPI ersetzt. Der tiefliegende p-n-Übergang 1050 wird somit erst nach einem zusätzlichen Durchgriff/Punch durch das schwach n-dotierte bzw. intrinsisches epitaktisches Gebiet NEPI von der Anode her angeschlossen, was eine Entkopplung von möglicherweise mehreren nebeneinander parallel angeordneten Zellen bewirkt.

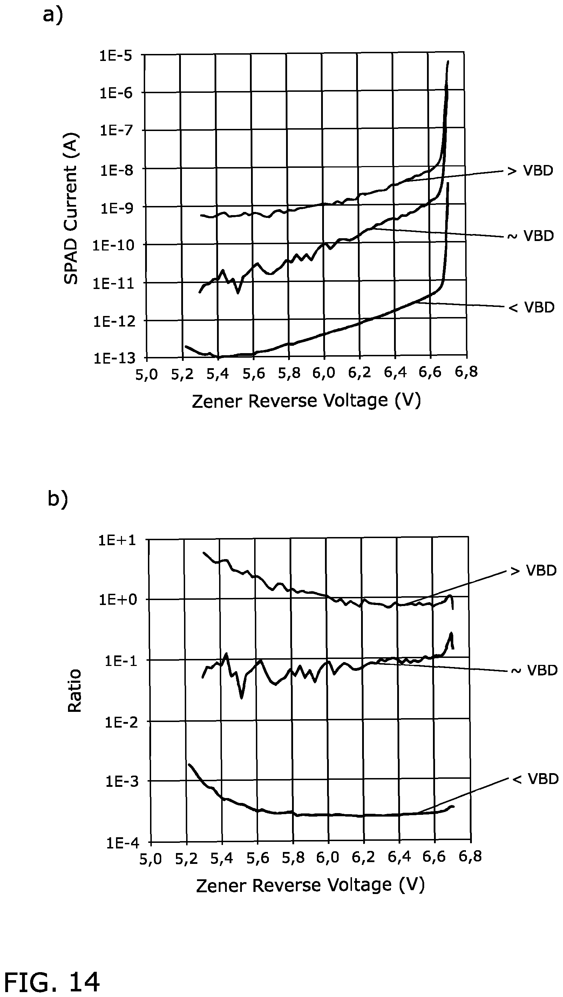

Figur 14 zeigt eine graphische Darstellung der Abhängigkeit des a) SPAD-Stroms und b) des Verhältnisses zwischen SPAD-Strom und Zener-Strom in Abhängigkeit von der Zener-Sperrspannung bei verschiedenen SPAD-Sperrspannungen (kleiner, gleich, größer der Durchbruchspannung) innerhalb eines beschriebenen iQRNGs. Die unter a) gezeigte Abhängigkeit zeigt dabei deutlich, dass der SPAD-Strom mit der Zener-Sperrspannung im Bereich von 5,6 V bis 6,6 V exponentiell ansteigt. Dies gilt für alle Betriebsmodi der SPAD, d. h. unterhalb dessen eigener Durchbruchspannung (< VBD, linearer Bereich), nahe der Durchbruchspannung (~ VBD, Avalanche-Bereich) sowie auch oberhalb der Durchbruchspannung (> VBD) und somit auch im Geiger-Betrieb.

Der unter b) gezeigte untere Kurvenverlauf (< VBD) zeigt, dass das gemessene Stromverhältnis zwischen dem SPAD-Strom und dem Zener-Strom für verschiedene Zener-Sperrspannungen im Bereich 5,8 bis 6,6 V etwa 1:4000 beträgt. Im Bereich der Durchbruchspannung (~ VBD) der SPAD steigt das Verhältnis auf Werte um 1:10. Dies ist im sog. Multiplikationsfaktor der SPAD begründet, welcher im Bereich der Durchbruchspannung den linearen Bereich verlässt. Der obere Kurvenverlauf gibt schließlich das entsprechende Verhältnis bei der oberhalb der zugehörigen Durchbruchspannung (> VBD) betriebenen SPAD an (etwa 1:1). Dies bedeutet, dass bei einer oberhalb der zugehörigen Durchbruchspannung (> VBD) betriebenen SPAD der erzeugte Photostrom und der Zener-Strom der Zener-avLED in etwa gleich groß sind und ein deutliches Messsignal mittels der Kopplung von Photonen auf der SPAD gemessen werden kann.

Figur 15 zeigt eine schematische Darstellung einer beispielhaften elektronischen Schaltung eines Quantenzufallsgenerators 1400 zur Generierung und Ausgabe einer digitalen Zufallszahlenfolge. Bei der gezeigten Entropiequelle 1401 kann es sich insbesondere um eine Photonenquelle 1120 und einen Einzelphotonendetektor 1130 eines beschriebenen iQRNG 1200 (bzw. dessen Entropiequelle) handeln, wobei der iQRNG 1200 über eine erste Versorgungsspannungsleitung $V_{ENT1}$ und eine zweite Versorgungsspannungsleitung $V_{ENT2}$, welche an einen Spannungswandler 1408 angeschlossen ist, gegenüber einem Bezugspotential auf einer Bezugspotentialleitung GND beispielsweise mit unterschiedlichen Versorgungsspannungen versorgt wird. Es ist zu beachten, dass ein allgemeiner (und insbesondere der hier beispielhaft gezeigte) Quantenzufallsgenerator 1400 in einigen Ausführungsformen einem erfindungsgemäßen iQRNG 1200, wie er als Halbleiterstruktur beispielsweise in den FIG. 11 bis 13 gezeigt ist, unter Hinzunahme weiter Schaltungskomponenten unmittelbar entsprechen kann. Insbesondere können eine Photonenquelle 1120 und einen Einzelphotonendetektor 1130 eines erfindungsgemäßen iQRNG 1200 zusammen als Entropiequelle 1401 des gezeigten Quantenzufallsgenerators 1400 angesehen werden, d. h. auch bei einem erfindungsgemäßen iQRNG 1200 kann die Kombination aus einer Photonenquelle 1120 und einem Einzelphotonendetektor 1130 als Entropiequelle bezeichnet werden. Ein von der Entropiequelle 1401 erzeugtes Spannungssignal 1405 wird in einem Analog-zu-Digital-Wandler (engl. "Analog-to-Digital Converter, ADC") 1403, welcher über eine Referenzspannungsleitung $V_{REF}$ versorgt wird, zunächst digitalisiert und als digitales Ausgangssignal 1407 an eine Pulsverlängerungsschaltung 1406 übergeben. Die Versorgungsspannungsleitung $V_{ENT}$ und die Referenzspannungsleitung $V_{REF}$ werden über einen Spannungsmonitor 1413 überwacht, wobei sowohl der Spannungswandler 1408 als auch der Spannungsmonitor 1413 über eine positive Versorgungsspannungsleitung VDD gegenüber dem Bezugspotential auf der Bezugspotentialleitung GND mit Spannung versorgt werden. Der Spannungswandler 1408 ist mit dem Spannungsmonitor 1413 über eine Spannungswandlerleitung 1421 verbunden.

Bei der Pulsverlängerungsschaltung 1406 kann es sich insbesondere um eine monostabile Kippstufe (Monoflop, MF) handeln. Das Monoflop kann dazu genutzt werden, einen Puls auf der Leitung des digitalen Ausgangssignals 1407 des ADC 1403 in Abhängigkeit von einem bestimmten vorgegebenen Systemtakt, beispielsweise auf eine zeitliche Länge von mindestens einer Taktperiode des Systemtakts, zu verlängern.

Von der Pulsverlängerungsschaltung 1406 wird dann ein einsynchronisiertes Spannungssignal 1415, d. h. beispielsweise ein Puls mit einer bestimmten Mindestlänge, ausgegeben und an einen Zeit-zu-Pseudozufallszahl-Wandler (engl. "Time-to-Pseudo-Random-Number-Converter, TPRC") 1404.3 übergeben. Dieser kann ein- oder mehrstufig zusammengesetzt sein. Beispielsweise kann der TPRC 1404.3 ein analoges Instrument, einen Zeit-zu-Analog-Wandler (engl. "Time-to-Analog Converter, TAC"), und/oder einen Analog-zu-Pseudozufallszahl-Wandler (engl. "Analog-to-Pseudo-Random-Number Converter, APRC") umfassen, die zusammen ebenfalls einen TPRC 1404.3 bereitstellen können. Der Pseudozufallszahlengenerator des TPRC 1404.3 kann ein rückgekoppeltes Schieberegister umfassen, dass je nach Konstruktion mit jedem Takt des Systemtakts seine Werte um eine Stelle nach links oder rechts verschiebt und in das freiwerdende Bit den Rückkoppelwert eines vorgegebenen Rückkoppelpolynoms zurückspeist. Bei dem Rückkoppelpolynom kann es sich bevorzugt um ein einfach-primitives Rückkoppelpolynom handeln. Der TPRC 1404.3 kann unmittelbar mit einem internen Datenbus 1419 verbunden sein. Das Ausgangssignal 1410 des TPRC 1404.3 kann weiterhin einer Entropieextraktion 1404.4 zugeführt werden.

Beginnend mit einem Startwert des Pseudozufallszahlengenerators (einem sogenannten Seed-Wert) kann hierzu jedem Takt des Systemtakts ab einer fallenden Flanke des einsynchronisierten Spannungssignals 1415 genau eine Pseudozufallszahl des Pseudozufallszahlengenerators bijektiv zugeordnet werden, d. h. aus dem Wert der Pseudozufallszahl kann dann auf die zeitliche Position des betreffenden Takts des Systemtaktes nach der fallenden Flanke des einsynchronisierten Spannungssignals 1415 geschlossen werden.

Anstatt eines üblichen Digitalzählers wie im Stand der Technik kann somit ein Pseudozufallszahlengenerator verwendet werden. Der Vorteil ist, dass selbst bei einer durch einen Angreifer erfolgreich durchgeführten Einprägung einer Störung in das einsynchronisierte Spannungssignal 1415 die Zufälligkeit des Quantenzufallsbits am Ausgang 1411 der Entropieextraktion 1404.4 nur marginal gestört wird, da der Angreifer das zugehörige Rückkoppelpolynom kennen müsste. Vorzugsweise kann dieses zufällig aus einer Vielzahl an Möglichkeiten ausgewählt werden. Gleiches gilt für den Seed-Wert des Pseudozufallszahlengenerators, welchen ein Angreifer dann ebenfalls ermitteln müsste. Ein weiterer Vorteil eines Pseudozufallszahlengenerators an Stelle eines einfachen Digitalzählers ist der geringere Flächenbedarf der Rückkoppellogik mittels eines einfach-primitiven Rückkoppelpolynoms gegenüber einem Binärzähler. Ist das linear rückgekoppelte Schieberegister des Pseudozufallszahlengenerators lang genug, so ist jedem Takt zwischen zwei Pulsen des von der Entropiequelle 1401 erzeugten Spannungssignals 1405 typischerweise eine eindeutige Pseudozufallszahl zugeordnet.

Die Entropieextraktion 1404.4 kann dazu genutzt werden, einen Fehler (d. h. einen nicht gewünschten Zustand) im Ausgangssignal 1410 des TPRC 1404.3 zu ermitteln. Hierzu kann die Entropieextraktion 1404.4 insbesondere zwei über einen Komparator miteinander vergleichbare linear rückgekoppelte Schieberegister aufweisen. Auch an dieser Stelle kann somit auf herkömmliche Binärzähler verzichtet werden. Eine Rückkopplung kann abhängig vom der Registertiefe ebenfalls über einfach-primitive Polynome als Rückkoppelpolynome erfolgen. Die Länge der linear rückgekoppelten Schieberegister kann dabei frei einstellbar sein. Lange Schieberegister weisen im Allgemeinen eine schlechtere Datenrate und eine verbesserte Zufallsstatistik auf. Kürzere Schiebregister erlauben demgegenüber zwar eine höhere Datenrate, zeigen jedoch eine schlechtere Zufallsverteilung. Die Verwendung von Schieberegistern an dieser Stelle hat den Vorteil, dass weniger Gatter als im Stand der Technik benötigt werden, die logische Tiefe der Schaltungen kleiner ist und somit die Taktrate höher sein kann. Dadurch wird die Wahrscheinlichkeit für das Vorkommen von zwei gleichen Zahlen geringer und die Zufallsbitrate wird höher.

Ein entsprechendes Verfahren zur Entropieextraktion kann vorsehen, dass zunächst zwei Werte des Ausgangssignals 1410 des TPRC 404.3 ermittelt und in Schieberegister der Entropieextraktion 1404.4 gespeichert werden. Sind zwei Werte im Schieberegister der Entropieextraktion 1404.4 gespeichert, kann die Entropieextraktion 1404.4 diese beiden Werte vergleichen. Die Werte in den Schieberegistern der Entropieextraktion 1404.4 umfassen somit einen ersten Wert und einen zweiten Wert, die beide der TPRC 1404.3 ermittelt hat. Anschließend kann die Entropieextraktion 1404.4 die beiden Werte bewerten. Ist der erste Wert kleiner als der zweite Wert und die Differenz zwischen dem ersten Wert und dem zweiten Wert größer als eine Mindestdifferenz ε, so kann die Entropieextraktion 1404.4 den Wert ihres Ausgang 1411, auf einen ersten logischen Wert setzen. Ist der erste Wert größer als der zweite Wert und die Differenz zwischen dem ersten Wert und dem zweiten Wert größer als die Mindestdifferent ε, so kann die Entropieextraktion 1404.4 ihren Ausgang 1411, auf einen zweiten logischen Wert, der vom ersten logischen Wert verschieden ist, setzen. Ist die Differenz zwischen dem ersten Wert und dem zweiten Wert kleiner als die Mindestdifferenz ε, so kann die Entropieextraktion 1404.4 den ersten Wert und den zweiten Wert verwerfen.

Bevorzugt veranlasst die Entropieextraktion 1404.4 einen sogenannten Watchdog 1404.5 in einem solchen Fall einen Fehlerzähler um eine erste Fehlerzählerschrittweite zu erhöhen. Die erste Fehlerzählerschrittweite kann negativ sein. Umgekehrt kann die Entropieextraktion 1404.4 den Fehlerzähler des Watchdogs 1404.5 um eine zweite Fehlerzählerschrittweite erniedrigen, wenn die Differenz zwischen dem ersten Wert und dem zweiten Wert größer als die Mindestdifferenz ε ist. Die zweite Fehlerzählerschrittweite kann gleich der ersten Fehlerzählerschrittweite sein.

Der Watchdog 1404.5 ist weiterhin mit dem interne Datenbus 1419 verbunden. Zusätzlich kann der Watchdog 1404.5 über ein oder mehrere, vorzugsweise digitale Ein-Ausgabe-Signalleitungen 1414 mit dem Spannungsmonitor 1413 verbunden sein. Bevorzugt überwacht der Watchdog 1404.5 die Spannungswerte, die der Spannungsmonitor 1413 ermittelt. Es hat sich bewährt, wenn der Spannungsmonitor 1413 nicht nur die Spannungen im Quantenzufallszahlengenerator 1400 ermittelt und überwacht, sondern auch andere Spannungen innerhalb der jeweiligen Anwendungsschaltung. Bei dem Spannungsmonitor 1413 kann es sich beispielsweise um einen ADC handeln.

Die eigentliche Aufgabe des Watchdog 1404.5 ist jedoch eine Überwachung der Quantenzufallszahl RN am Ausgang 1411 der Entropieextraktion 1404.4. Der Watchdog 1404.5 kann dabei vorzugsweise zumindest drei definierte Fehlerfälle erfassen. Der Watchdog 1404.5 kann valide Quantenzufallsbits 1411 unter Erzeugung eines Seed-Werts S 1412 an eines optionales weiteres linear rückgekoppeltes Schieberegister als Backup-Pseudo-Zufallszahlengeneratoren (engl. "Pseudo Random Number Generator, PRNG") 1404.6 weitergeben. Vorzugsweise verhindert der Watchdog 1404.5 die Verwendung der validen Quantenzufallsbits durch eine Finite-State-Machine 1404.8. Sofern ein Fehler auftritt, kann der Watchdog 1404.5 bestimmte Fehlerbits zur weiteren Auswertung setzen.

Hat der Watchdog 1404.5 beispielswiese einen Fehler des Quantenzufallsgenerators 1400 detektiert, so kann er vorzugsweise den Quantenzufallszahlengenerator 1400 in einen Notlaufzustand versetzen. Hierzu setzt der Watchdog 1404.5 vorzugsweise ein Selektionssignal 1416 eines der Zufallszahlenerzeugung nachgeordneten Signalmultiplexers 1404.7, sodass der Signalmultiplexer 1404.7 anstatt der Zufallszahlen RN am Ausgang 1411 der Entropieextraktion 1404.4 die Pseudozufallszahl PRN des optionalen PRNG 1404.6 in Form eines Stroms von Pseudozufallsbits über eine Pseudozufallssignalleitung 1417 als Ersatz für die zumindest potenziell fehlerhafte Zufallszahl RN des Ausgangs 1411 der Entropieextraktion 1404.4 an den Eingang der Finite-State-Machine 1404.8 legt.

Das optionale weitere linear rückgekoppelte Schieberegister des PRNG 1404.6 kann dazu ausgebildet sein, Pseudozufallszahlen PRN zu generieren. Der Seed-Wert S 1412 weist bevorzugt die letzten gerade noch gültigen Quantenzufallsbits des Ausgangs 1411 der Entropieextraktion 1404.4 auf. Der Watchdog 1404.5 legt dann bevorzugt diese letzten gültigen Quantenzufallsbits 1411 an den Eingang des optionalen PRNG 1404.6 an. Der Seed-Wert S kann somit als zufälliger sicherer Startwert für ein Generatorpolynom der Rückkopplung des optionalen weiteren linear rückgekoppelten Schieberegisters des PRNG 1404.6 für die Generierung der Pseudozufallszahl PRN und deren Signalisierung über die Pseudozufallssignalleitung 1417 genutzt werden. Das Generatorpolynom sowie der Grad des Generatorpolynoms sind dabei bevorzugt frei wählbar. Durch den optionalen Backup-Pseudo-Zufallszahlengenerator kann im Fehlerfall zumindest übergangsweise die Bereitstellung von sicheren Zufallszahlen ermöglicht werden.

Die Finite-State-Machine 1404.8 hat die Aufgabe, die Zufallszahl RN bzw. die Pseudozufallszahl PRN am Ausgang des Signalmultiplexers 1404.7 entgegenzunehmen und entsprechende Quantenzufallsdatenwörter 1418 über eine Pseudozufallssignalleitung 1417 in einen flüchtigen Speicher (RAM) bzw. einen FIFO-Speicher (First In - First Out) 1404.9 zu schreiben. Ist der Schreibvorgang erfolgreich, kann die Finite-State-Machine 1404.8 ein Finish-Flag 1404.10 über den internen Datenbus 1419 setzen. Daraufhin kann ein Prozessor beispielsweise auf den flüchtigen Speicher (RAM) bzw. einen FIFO-Speicher (First In - First Out) 1404.9 zugreifen und die Zufallszahl auslesen und beispielsweise zur Verschlüsselung benutzen.

Der Quantenzufallsgenerator 1400 kann weiterhin einen Temperatursensor oder andere Sensoren umfassen kann, mit denen der Watchdog 1404.5 oder ein anderer Vorrichtungsteil des Quantenzufallsgenerators 1400, ggf. mittels des ADC 1403 oder eines anderen Analog-zu-Digital-Wandlers und/oder anderer Vorrichtungsteile wie Sensorverstärker und/oder Filter, physikalische Parameter der Umgebung des Quantenzufallsgenerators 1400 wie beispielsweise die Temperatur überwacht und Gegenmaßnahmen einleitet, wenn ein Wert eines solchen physikalischen Parameters außerhalb eines vorbestimmten Wertebereichs liegt. Solche Gegenmaßnahmen können Signalisierungen an andere Vorrichtungen, beispielsweise über den internen Datenbus 1419 oder ein Notlaufbetrieb, z. B. unter Nutzung des PRGNG 1404.6 und des Multiplexers 1404.7 und/oder das Ändern interner Betriebsparameter, wie die Spannungspegel der interner Versorgungsspannungen, z. B. mittels des Spannungswandlers 1408 und/oder das Abschalten der Zufallszahlengenerierung etc. sein. Hierdurch werden Side-Channels zur Beeinflussung des Quantenzufallsgenerators 1400 geschlossen.

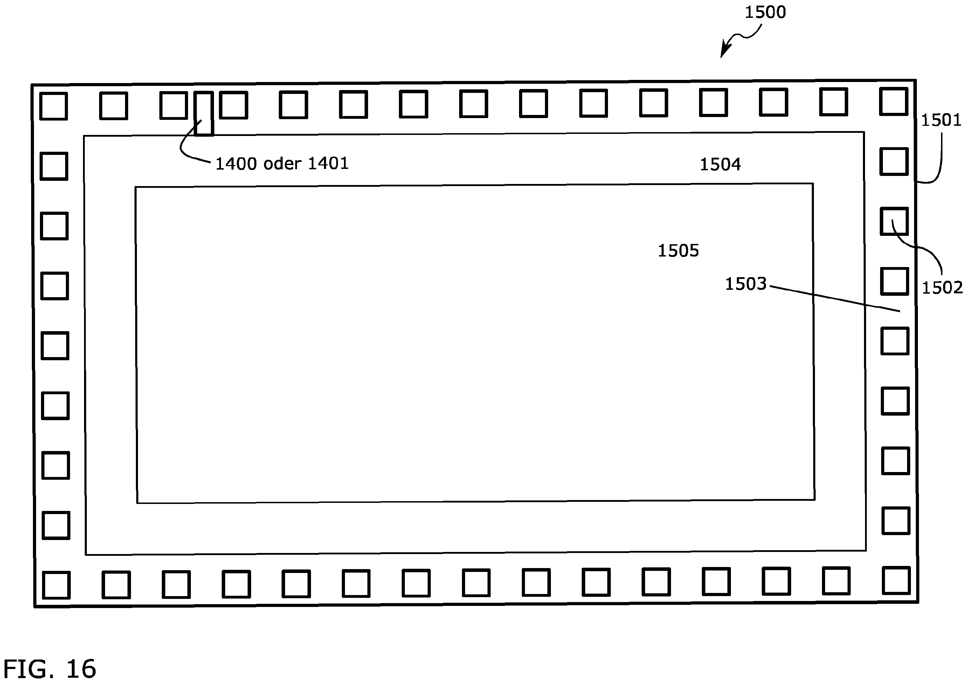

Figur 16 zeigt eine schematische Darstellung eines beispielhaften Layouts einer integrierten elektronischen Schaltung 1500 mit einem beschriebenen iQRNG 1200 im Pad-Rahmen 1503 in der Aufsicht. Die integrierte elektronische Schaltung 1500, beispielsweise ein Mikrocontroller, weist einen inneren Bereich 1505 auf, in dem sich die wesentlichen Unterschaltkreise der integrierten elektronischen Schaltung 1500 befinden. Typischerweise ist der innere Bereich 1505 von einem Verdrahtungsbereich 1504 umgeben, in dem vor allem Versorgungsspannungsleitungen, Datenbusleitungen und andere Leitungen geführt werden können.

Der Verdrahtungsbereich 1504 und der innere Bereich 1505 der integrierten elektronischen Schaltung 1500 sind typischerweise von dem Pad-Rahmen 1503 (auch als Pad-Rand bezeichnet) umgeben, der die Anschluss-Pads 1502 (Anschlussflächen) für die elektrischen Bondverbindungen oder anderen elektrischen Anschlussverbindungen umfasst.

Vorzugsweise kann ein beschriebener iQRNG 1200 bzw. ein entsprechender Quantenzufallsgenerator 1400, wie er beispielsweise in der Figur 15 gezeigt ist, ganz oder zumindest in wesentlichen Teilen im Pad-Rahmen 1503 platziert werden, da die Lücken zwischen den einzelnen Anschluss-Pads 1502 oft nicht mit elektronischen Schaltungsteilen gefüllt sind. Diese Lücken müssen bei der Herstellung der integrierten elektronischen Schaltung 1500 jedoch dennoch mitprozessiert werden und verursachen daher unnötige Herstellungskosten. Eine Platzierung von beschriebenen iQRNG 1200 bzw. entsprechenden Quantenzufallsgeneratoren 1400 ganz oder zumindest in wesentlichen Teilen im Pad-Rahmen 1503 reduziert daher die Zusatzkosten für deren Bereitstellung signifikant.

Insbesondere können bevorzugt zumindest die Photonenquelle 1120 und der Einzelphotonendetektor 1130 (Entropiequelle 1401) im Pad-Rahmen 1503 zwischen zwei Anschluss-Pads 1502 platziert werden. Weiterhin können ein ADC 1403, ein Spannungswandler 1408 zur Energieversorgung der Entropiequelle 1403, ein Pulsverlängerungsschaltung 1406 und/oder Analogteile eines beschriebenen Quantenzufallsgenerators 1400 (z. B. ein Verstärker) ebenfalls im Pad-Rahmen 1503 zwischen zwei Anschluss-Pads 1502 platziert werden.

Bezugszeichenliste (auszugsweise)

| 1010 | Trägersubstrat |
| 1022 | erstes Gebiet (z. B. NBL) |
| 1032 | zweites Gebiet (z. B. PBL) |
| 1040 | epitaktische Schicht |
| 1050 | erster p-n-Übergang (z. B. oberer p-n-Übergang einer Doppelstruktur) |
| 1052 | zweiter p-n-Übergang (z. B. unterer p-n-Übergang einer Doppelstruktur) |
| 1110 | Substrat |
| 1120 | Photonenquelle (z. B. Einzelphotonenquelle, SPS) |
| 1122 | Kathode (n$^+$, Photonenquelle) |
| 1124 | Anode (p$^+$, Photonenquelle) |
| 1128 | Photonen |
| 1130 | Einzelphotonendetektor (z. B. Einzelphotonen-Lawinendiode, SPAD) |
| 1132 | Kathode (n$^+$, Einzelphotonendetektor) |
| 1134 | Anode (p$^+$, Einzelphotonendetektor) |
| 1150 | lichtblockierende Schicht (engl. "light blocking layer") |
| 1152 | Mittel zur elektronischen Erfassung |
| 1154 | Mittel zur elektronischen Nachbearbeitung |
| 1200 | iQRNG |
| 1400 | Quantenzufallsgenerator (z. B auf einem iQRNG basierend) |
| 1401 | Entropiequelle (z. B. iQRNG) |
| 1403 | Analog-zu-Digital-Wandler (engl. "Analog-to-Digital Converter, ADC") |
| 1404.3 | Zeit-zu-Pseudozufallszahl-Wandler (engl. "Time-to-Pseudo-Random-Number Converter, TPRC") |
| 1404.4 | Entropieextraktion |
| 1404.5 | Watchdog |
| 1404.6 | Pseudo-Zufallszahlengenerator (engl. "Pseudo-Random-Number-Generator, PRNG", z. B. linear rückgekoppeltes Schieberegister) |
| 1404.7 | Signal-Multiplexer |
| 1404.8 | Finite-State-Machine (FSM) |
| 1404.9 | flüchtiger Speicher (RAM) / FIFO-Speicher (First In - First Out) |
| 1404.10 | Finish-Flag |
| 1405 | Spannungssignal (Entropiequelle) |
| 1406 | Pulsverlängerungsschaltung (z. B. Monoflop, MF) |
| 1407 | Ausgangssignal (ADC) |
| 1408 | Spannungswandler |
| 1410 | Ausgangssignal (TPRC) |
| 1411 | Ausgang (Entropieextraktion) |
| 1412 | Seed-Wert S |
| 1413 | Spannungsmonitor |
| 1414 | digitale Ein-Ausgabe-Signalleitung(en) |
| 1415 | einsynchronisiertes Spannungssignal (z. B. Puls mit einer Mindestlänge) |
| 1416 | Selektionssignal |
| 1417 | Pseudozufallssignalleitung |
| 1418 | Quantenzufallsdatenwörter |

| | |
|---|---|
| 1419 | interner Datenbus |
| 1420 | Interrupt-Signal |
| 1421 | Spannungswandlerleitung |
| 1430 | Korrelationssignal (optional) |

| | |
|---|---|
| 1500 | elektronische Schaltung (engl. "Integrated Circuit, IC") |
| 1501 | Halbleiter-Die |
| 1502 | Anschluss-Pads (Anschlussflächen) |
| 1503 | Pad-Rahmen |
| 1504 | Verdrahtungsbereich |
| 1505 | innerer Bereich |

| | |
|---|---|
| NBL | tiefliegende n-Schicht (engl. "n-type buried layer") |
| PBL | tiefliegende p-Schicht (engl. "p-type buried layer") |
| H(V)PW | Hochvolt-p-Wanne (engl. "high-voltage p-type well") |
| H(V)NW | Hochvolt-n-Wanne (engl. "high-voltage n-type well") |
| PW | p-Wanne (engl. "p-type well") |
| PBODY | p-dotierter Bereich (engl. "p-type body") |
| NEPI | schwach n-dotiertes bzw. (annähernd) intrinsisches epitaktisches Gebiet |
| MET1, MET2 | Metallisierung |
| CONT | Kontakt |
| STI | Isolationsgebiet (engl. "shallow trench isolation") |
| poly | Polysilizium-Schicht |
| $P^+$ | $p^+$-Gebiet |
| $N^+$ | $n^+$-Gebiet |

| | |
|---|---|
| VDD | positive Versorgungsspannungsleitung |
| GND | Bezugspotentialleitung |
| $V_{ENT1}$ | erste Versorgungsspannungsleitung (Entropiequelle) |
| $V_{ENT2}$ | zweite Versorgungsspannungsleitung (Entropiequelle) |
| $V_{REF}$ | Referenzspannungsleitung (ADC) |
| RN | Zufallszahl (z. B. 1-bit Zufallszahl) |
| PRN | Pseudozufallszahl |

| | |
|---|---|
| S | Oberfläche (Trägersubstrat, z. B. eines BCD-Substrats) |
| O | Oberfläche (Substrat, z. B. ein BCD-Substrat) |
| R | radiale Symmetrieachse |

**Patentansprüche**

1. Vorrichtung zum Übertragen von E-Mail-Anhängen über ein Netzwerk an mindestens einen Empfänger des Netzwerks, wobei ein Sender der Vorrichtung umfasst:

ein Mittel zum Speichern eines Anhangs in einer für das Netzwerk sichtbaren und für den Absender nahegelegenen Speichereinrichtung, wobei der Anhang eine eindeutige Netzwerkadresse hat;
ein Mittel zum Verschlüsseln des Anhangs vor dem Speichern des Anhangs in der Speichereinrichtung und zum Bereitstellen eines Verschlüsselungscodes zum Entschlüsseln des Anhangs;
ein Mittel zum Erzeugen einer Anhangsreferenz, die die Netzwerkadresse des Anhangs enthält, und zum Anhängen der Anhangsreferenz an eine E-Mail-Nachricht; und
ein Mittel zum Übertragen der E-Mail-Nachricht, der Anhangsreferenz und des Verschlüsselungscodes an den mindestens einen Empfänger, wobei der mindestens eine Empfänger darüber informiert wird, dass der Anhang an die E-Mail-Nachricht angehängt ist, wobei ein Empfänger des mindestens einen Empfängers über die Anhangsreferenz den Anhang aus der Speichereinrichtung abrufen kann, wenn der Empfänger sich für den Zugriff auf den Anhang entscheidet;
**dadurch gekennzeichnet, dass**
das Mittel zum Verschlüsseln ein Quantenzufallsgenerator umfasst, wobei der Quantenzufallsgenerator eine Entropiequelle umfasst,
die Entropiequelle monolithisch in einem Halbleitersubstrat mit einer Oberfläche ausgeführt ist,

die Entropiequelle eine Photonenquelle umfasst, die dazu eingerichtet ist, bei Bestromung Photonen auszusenden,

die Entropiequelle einen Einzelphotonendetektor umfasst, der dazu eingerichtet ist, die Photonen der Photonenquelle zu detektieren und ein Entropiequellenausgangssignal zu erzeugen,

die Photonenquelle zwischen der Oberfläche des Halbleitersubstrats und dem Einzelphotonendetektor angeordnet ist oder der Einzelphotonendetektor zwischen der Oberfläche des Halbleitersubstrats und der Photonenquelle angeordnet ist,

die Photonenquelle und der Einzelphotonendetektor der monolithischen Entropiequelle vertikal übereinander angeordnet sind, und

der Quantenzufallsgenerator Mittel zur Erzeugung einer oder mehrerer Quantenzufallszahlen in Abhängigkeit von dem Entropiequellenausgangssignal aufweist.

2. Vorrichtung nach Anspruch 1, wobei das Netzwerk das Internet, ein Local-Area-Network, LAN, ein Weitverkehrsnetz, WAN, oder eine Vielzahl von miteinander verbundenen WANs und LANs umfasst.

3. Vorrichtung nach Anspruch 1 oder 2, wobei die Anlagenreferenz einen einheitlichen Ressourcenlokalisator, URL, umfasst.

4. Vorrichtung nach einem der vorhergehenden Ansprüche, wobei die Speichereinrichtung einen Netzwerkserver umfasst.

5. Vorrichtung nach einem der vorhergehenden Ansprüche, wobei der mindestens eine Empfänger umfasst:
ein Mittel zum Abrufen des Anhangs über die Anhangsreferenz, wobei der Empfänger den Anhang aus der Speichereinrichtung abrufen kann, wenn der Empfänger sich für den Zugriff auf den Anhang entscheidet.

6. Vorrichtung nach Anspruch 5, wobei der Empfänger weiterhin umfasst:
ein Mittel zum Entschlüsseln des Anhangs beim Empfänger unter Verwendung des Verschlüsselungscodes.

7. Vorrichtung nach einem der vorhergehenden Ansprüche, wobei die Vorrichtung weiterhin umfasst:
ein Mittel zum Komprimieren des Anhangs.

8. Vorrichtung nach Anspruch 7, wobei der mindestens eine Empfänger umfasst:
ein Mittel zum Dekomprimieren des Anhangs beim Empfänger.

9. Vorrichtung nach einem der vorhergehenden Ansprüche, wobei:

der mindestens eine Empfänger eine Vielzahl von Empfängern umfasst; und
eine Bitgröße der Anhangsreferenz ist klein im Vergleich zum Anhang.

10. Speichermedium, auf dem eine Vielzahl von Anweisungen zum Übertragen von E-Mail-Anhängen von einem Absender eines Netzwerks an mindestens einen Empfänger des Netzwerks mittels einer Vorrichtung nach eine der vorhergehenden Ansprüche gespeichert ist, wobei die Vielzahl von Anweisungen, wenn sie von einem Prozessor ausgeführt werden, den Prozessor veranlassen, die folgenden Schritte auszuführen:

Speichern eines Anhangs in einem für das Netzwerk sichtbaren und für den Absender nahegelegenen Speichereinrichtung, wobei der Anhang eine eindeutige Netzwerkadresse hat;
Verschlüsseln des Anhangs vor dem Speichern des Anhangs in der Speichereinrichtung und Bereitstellen eines Verschlüsselungscodes zum Entschlüsseln des Anhangs;
Erzeugen einer Anhangsreferenz, die die Netzwerkadresse des Anhangs enthält, und Anhängen der Anhangsreferenz an eine E-Mail-Nachricht; und
Übertragen der E-Mail-Nachricht, der Anhangsreferenz und des Verschlüsselungscodes an den mindestens einen Empfänger, wobei der mindestens eine Empfänger darüber informiert wird, dass der Anhang an die E-Mail-Nachricht angehängt ist, wobei ein Empfänger des mindestens einen Empfängers den über die Anhangsreferenz den Anhang aus der Speichereinrichtung abrufen kann, wenn der Empfänger sich für den Zugriff auf den Anhang entscheidet.

11. Speichermedium nach Anspruch 10, wobei die Anlagenreferenz einen einheitlichen Ressourcenlokalisator, URL, umfasst.

**12.** Speichermedium nach Anspruch 10 oder 11, wobei die Vielzahl von Befehlen den Prozessor veranlasst, den weiteren Schritt auszuführen:
Entschlüsseln des Anhangs beim Empfänger unter Verwendung des Verschlüsselungscodes

**13.** Speichermedium nach einem der Ansprüche 10 bis 12, wobei das Speichern des Anhangs ferner eine Kompression des Anhangs umfasst.

**14.** Speichermedium nach einem der Ansprüche 10 bis 13, wobei die Vielzahl von Anweisungen den Prozessor veranlasst, den weiteren Schritt auszuführen:
Dekomprimieren des Anhangs beim Empfänger.

**15.** Speichermedium nach einem der Ansprüche 10 bis 14, wobei:

der mindestens eine Empfänger eine Vielzahl von Empfängern umfasst; und
eine Bitgröße der Anhangsreferenz ist klein im Vergleich zum Anhang.

FIG. 1

FIG. 2

300

PC

317

PC

318

LAN

315

WWW HTTP
Server    310

Internet

301

PC

327

WWW HTTP
Server    320

## FIG. 3

400

420

E-Mail-
Nachricht

Anhangsreferenz

410

Anhang

WWW HTTP
Server

Zeiger

401

402

320

## FIG. 4

38

**500**

FIG. 5

**600**

FIG. 6

## 700

Empfänger besucht Homepage des Empfängers und wählt E-Mail-Schreiben aus — 701

Bereitstellen einer HTML-Seite — 702

"lokales" Speichern des Anhangs durch Empfänger — 703

URL und Nachricht vom Sender an die HTML-Seite übermitteln — 704

Nachricht und HTML-Hypertext Link zur Nachrichtenseite des Empfängers hinzufügen — 705

NEIN — Anhang Lesen ? — 706

JA

Empfänger ruft den Anhang über das Internet vom Sender mittels der URL ab — 707

## FIG. 7

Stand der Technik

## FIG. 8

Stand der Technik

## FIG. 9

FIG. 10

FIG. 11

FIG. 12

FIG. 13

a)

b)

FIG. 14

FIG. 15

FIG. 16

Europäisches
Patentamt

European
Patent Office

Office européen
des brevets

**EUROPÄISCHER RECHERCHENBERICHT**

**Nummer der Anmeldung**

EP 24 20 1386

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 614 292 A1 (KONINKLIJKE KPN NV [NL]) 26. Februar 2020 (2020-02-26) * Absätze [0007] - [0075]; Abbildungen 1a-4 * <br> - - - - - | 1-15 | INV. <br> G06F21/10 <br> G06F21/12 <br> H04L9/32 <br> G06F7/58 |
| A | US 2019/212985 A1 (AMRI EMNA [CH] ET AL) 11. Juli 2019 (2019-07-11) * Absätze [0019] - [0024]; Abbildung 1 * <br> - - - - - | 1-15 | H04L9/06 <br> H04L9/08 <br> H10F39/00 |
| A | DE 10 2018 208015 A1 (BOSCH GMBH ROBERT [DE]) 28. November 2019 (2019-11-28) * Abbildungen 1-4 * <br> - - - - - | 1-15 | |

**RECHERCHIERTE SACHGEBIETE (IPC)**

G06F
G06G
H04L

Der vorliegende Recherchenbericht wurde für alle Patentansprüche erstellt

| Recherchenort | Abschlußdatum der Recherche | Prüfer |
|---|---|---|
| München | 27. Januar 2025 | Widera, Sabine |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 20 1386

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-01-2025

| Im Recherchenbericht angeführtes Patentdokument | Datum der Veröffentlichung | Mitglied(er) der Patentfamilie | Datum der Veröffentlichung |
|---|---|---|---|
| EP 3614292 A1 | 26-02-2020 | KEINE | |
| US 2019212985 A1 | 11-07-2019 | CN 110325960 A | 11-10-2019 |
| | | EP 3452896 A1 | 13-03-2019 |
| | | US 2019212985 A1 | 11-07-2019 |
| | | US 2022244918 A1 | 04-08-2022 |
| | | US 2023185535 A1 | 15-06-2023 |
| | | WO 2017193106 A1 | 09-11-2017 |
| DE 102018208015 A1 | 28-11-2019 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102022125568 A1
- DE 102022125569 A1
- DE 102022125570
- DE 102022125571 A1
- DE 102022125572 A1
- DE 102022125573 A1
- DE 102022125574
- EP 3529694 B1
- EP 352694 B1


**In der Beschreibung aufgeführte Nicht-Patentliteratur**

- **KHANMOHAMMADI, ABBAS et al.** A monolithic silicon quantum random number generator based on measurement of photon detection time. *IEEE Photonics Journal*, 2015, vol. 7 (5), 1-13
- **A. KHANMOHAMMADI** ; **R. ENNE** ; **M. HOFBAUER** ; **H. ZIMMERMANN**. A Monolithic Silicon Quantum Random Number Generator Based on Measurement of Photon Detection Time. *IEEE Photonics Journal*, October 2015, vol. 7 (5), 1-13